# EUROPÄISCHE PATENTANMELDUNG

(11) **EP 0 939 327 A2**
(43) Veröffentlichungstag der Anmeldung: **01.09.1999**
(21) Anmeldenummer: 99100457.3
(22) Anmeldetag: 11.01.1999
(51) Int. Cl.: G02B 6/38

(54) **Steckeranschluss für Lichtwellenleiter und Verfahren zu dessen Herstellung**

(30) Priorität: 27.02.1998 DE 19808522; 19.03.1998 DE 19812200; 20.03.1998 DE 19812313
(71) Anmelder: SIEMENS AKTIENGESELLSCHAFT, 80333 München (DE)
(72) Erfinder: Dzyck, Wolfgang, 96484 Meeder (DE); Krupp, Helmar, 58285 Gevelsberg (DE); Zimmer, Rainer, 58579 Schalksmühle (DE); Kossat, Rainer, 83229 Aschau (DE); Glaser, Heinz, 82110 Germering (DE)

(57) **Zusammenfassung**

Zur Bildung eines Steckeranschlusses hängt ein Anschlußlichtwellenleiter (ALW) aus einem Stecker (ST1) soweit heraus, daß er außerhalb des Steckers (ST1) stirnseitig mit dem Lichtwellenleiter (CLW) eines Lichtwellenleiterkabels (CA) unter Bildung einer Spleißstelle (SS) verspleißbar ist. Mindestens ein Zugentlastungselement (KEV) des Lichtwellenleiterkabels (CA) ist über die Spleißstelle (SS) hinweg zum Stecker (ST1) derart führbar und an diesen ankoppelbar, daß für die Spleißstelle (SS) eine Zugabfangung bereitgestellt ist.

## Beschreibung

Die Erfindung betrifft einen Stecker mit einem Anschlußlichtwellenleiter.

Aus der DE 195 17 750 A1 ist ein Lichtwellenleiterstecker bekannt, der mit einem Lichtwellenleiter in seiner Zentralbohrung vorkonfektioniert ist. In die Zentralbohrung des Steckers hinein wird ein anzuspleißender Lichtwellenleiter eingeführt. Der Stecker weist eine Querbohrung zur Aufnahme von Schweißelektroden auf, mit deren Hilfe der anzuschließende Lichtwellenleiter mit dem in der Zentralbohrung endenden, vorfixierten Lichtwellenleiter verschweißt werden kann. Eine solche spezielle Elektrodenanordnung steht bei üblichen Lichtwellenleiterschweißgeräten in der Regel nicht zur Verfügung. Weiterhin kann es insbesondere im praktischen Feldeinsatz erschwert sein, den anzuschließenden Lichtwellenleiter in die Zentralbohrung des Steckers einzufädeln und mit dem dort endenden, vorfixierten Lichtwellenleiter stirnseitig zu kontaktieren.

Aus der WO 95/07479 ist ein vormontierter Steckverbinder für ein optisches Kabel bekannt. Die Lichtleitfaser des Kabels kann in die Längsbohrung des bereits fertig montierten Steckverbinders lediglich eingefädelt werden. Dadurch ist die Fixierung des Steckverbinders am Kabel erschwert. Weiterhin kann es beim Einfädeln der empfindlichen Lichtleitfaser zu deren Beschädigung kommen. Auch ist es schwierig, die Lichtleitfaser präzise in einem derartigen, bereits zusammengebauten Steckverbinder zu positionieren.

Der Erfindung liegt die Aufgabe zugrunde, einen Weg aufzuzeigen, wie in einfacher und zuverlässiger Weise ein Lichtwellenleiter- Stecker an einem Lichtwellenleiterkabel angebracht werden kann. Gemäß der Erfindung wird diese Aufgabe bei einem Stecker der eingangs genannten Art dadurch gelöst, daß der Anschlußlichtwellenleiter aus dem Stecker soweit heraushängt, daß er außerhalb des Steckers stirnseitig mit einem Lichtwellenleiter eines Lichtwellenleiterkabels unter Bildung einer Spleißstelle verspleißbar ist, und daß mindestens ein Zugentlastungselement des Kabels über die Spleißstelle hinweg zum Stecker derart führbar und an diesen ankoppelbar ist, daß für die Spleißstelle eine Zugabfangung bereitgestellt ist.

Dadurch kann ein Stecker an ein Lichtwellenleiterkabel unter einer Vielzahl praktischer Gegebenheiten in einfacher sowie zuverlässiger Weise montiert werden. Da die Spleißstelle (zwischen dem anzuschließenden Lichtwellenleiter des Lichtwellenleiterkabels und dem Anschlußlichtwellenleiter des Steckers) außerhalb des Steckers liegt, wird die Montage und der Schweißvorgang vereinfacht.

Insbesondere können z.B. Standardstecker mit jeweils vorkonfektioniertem Lichtwellenleiter verwendet werden. Darüberhinaus kann der Steckeranschluß in vorteilhafter Weise mit einem üblichen Standard-Lichtwellenleiterschweißgerät hergestellt werden, da sowohl der Anschlußlichtwellenleiter, als auch der herausgelöste Lichtwellenleiter des Lichtwellenleiterkabels in die bereits vorhanden Komponenten eines solchen Lichtwellenleiterschweißgerätes einlegbar sind. Da die Zugentlastungselemente des Lichtwellenleiterkabels über die fertige Spleißstelle bis zum Stecker geführt und dort fixiert werden, ist bereits allein durch diese sowieso vorhandenen Zugentlastungselemente in vorteilhafter Weise eine ausreichende Zugabfangung für den Stecker sowie die Spleißstelle bereitgestellt, ohne daß erst noch zusätzliche Zugabfangungselemente erforderlich wären.

Die Erfindung betrifft weiterhin einen Steckeranschluß für einen Lichtwellenleiter eines Lichtwellenleiterkabels unter Verwendung eines Steckers, der einen Anschlußlichtwellenleiter aufweist, welcher dadurch gekennzeichnet ist, daß der Anschlußlichtwellenleiter aus dem Stecker soweit heraushängt, daß er außerhalb des Steckers stirnseitig mit dem Lichtwellenleiter des Lichtwellenleiterkabels unter Bildung einer Spleißstelle verspleißbar ist, und daß mindestens ein Zugentlastungselement des Lichtwellenleiterkabels über die Spleißstelle hinweg zum Stecker derart führbar und an diesen ankoppelbar ist, daß für die Spleißstelle eine Zugabfangung bereitgestellt ist.

Die Erfindung betrifft einen weiteren Steckeranschluß für einen Lichtwellenleiter eines Lichtwellenleiterkabels unter Verwendung eines Steckers, der einen Anschlußlichtwellenleiter aufweist, wobei der Anschlußlichtwellenleiter aus dem Stecker so weit heraushängt, daß er außerhalb des Steckers stirnseitig mit dem Lichtwellenleiter des Lichtwellenleiterkabels unter Bildung einer Spleißstelle verspleißbar ist, und wobei mindestens ein Zugentlasgungselement des Lichtwellenleiterkabels über die Spleißstelle hinweg zum Stecker derart führbar und an diesen ankoppelbar ist, daß für die Spleißstelle eine Zugabfangung bereitgestellt ist, wobei der Anschlußlichtwellenleiter aus dem Stecker mit einer solchen Länge heraushängt, daß er mit seinem Stecker in mindestens eine Aufnahmevorrichtung eines Lichtwellenleiterspleißgerätes einlegbar ist.

Die Erfindung betrifft auch einen weiteren Steckeranschluß für mindestens einen Lichtwellenleiter eines Lichtwellenleiterkabels unter Verwendung eines Steckers, wobei eine Steckerhülse vorgesehen ist, die sich soweit auf das Lichtwellenleiterkabel aufschieben läßt, daß ein vorgebbarer Endabschnitt des Lichtwellenleiterkabels stirnseitig aus der Steckerhülse heraussteht, daß ein separater Steckerstift vorgesehen ist, in dem mindestens eine Anschlußlichtleitfaser vorbereitet gehalten ist und aus diesem mit einem vorgebbaren Längsabschnitt heraushängt, und wobei der Steckerstift in die Steckerhülse unter Bildung eines optischen Steckers derart einsteckbar ist, daß die Steckerhülse die Anschlußlichtleitfaser und mindestens eine aus dem Lichtwellenleiterkabel herausgelöste Lichtleitfaser nach deren Verspleißung von außen umgibt.

Die Erfindung betrifft weiterhin ein Verfahren zur Herstellung eines Steckeranschlusses für einen Lichtwellenleiter eines Lichtwellenleiterkabels unter Verwendung eines Steckers, der einen Anschlußlichtwellenleiter aufweist, welches dadurch gekennzeichnet ist, daß der Lichtwellenleiter endseitig aus dem Lichtwellenleiterkabel mit einem vorgebbaren Längsabschnitt herausgelöst wird, daß dieser Lichtwellenleiter sowie der kabelanschlußseitig aus dem Stecker heraushängende Anschlußlichtwellenleiter jeweils entlang einem vorgebbaren Endabschnitt entcoatet werden, so daß dort ihre Lichtleitfasern frei liegen, daß diese beiden Lichtleitfasern außerhalb des Steckers unter Bildung einer Spleißstelle stirnseitig miteinander verspleißt werden, und daß mindestens ein Zugentlastungselement des Lichtwellenleiterkabels über die Spleißstelle hinweg zum Stecker derart geführt und an diesen angekoppelt wird, daß für den Stecker in Längsrichtung eine Zugabfangung unter Unterbrückung der Spleißstelle bereitgestellt wird.

Die Erfindung betrifft weiterhin ein Verfahren zur Herstellung eines Steckeranschlusses für einen Lichtwellenleiter eines Lichtwellenleiterkabels unter Verwendung eines Steckers, der einen Anschlußlichtwellenleiter aufweist, wobei der Lichtwellenleiter endseitig aus dem Lichtwellenleiterkabel mit einem vorgebbaren Längsabschnitt herausgelöst wird, wobei dieser Lichtwellenleiter sowie der kabelanschlußseitig aus dem Stecker heraushängende Anschlußlichtwellenleiter jeweils entlang einem vorgebbaren Endabschnitt entcoatet werden, so daß dort ihre Lichtleitfasern frei liegen, wobei diese beiden Lichtleitfasern außerhalb des Steckers unter Bildung einer Spleißstelle stirnseitig miteinander verspleißt werden, und mindestens ein Zugentlastungselement des Lichtwellenleiterkabels über die Spleißstelle hinweg zum Stecker derart geführt und an diesen angekoppelt wird, wobei für den Stecker in Längsrichtung eine Zugabfangung unter Unterbrückung der Spleißstelle bereitgestellt wird.

Die Erfindung betrifft weiterhin ein Verfahren zum Anbringen eines Steckers an ein Lichtwellenleiterkabel, das dadurch gekennzeichnet ist, daß auf das Lichtwellenleiterkabel eine Steckerhülse soweit aufgeschoben wird, daß ein vorgebbarer Endabschnitt des Lichtwellenleiterkabels stirnseitig aus der Steckerhülse heaussteht, daß aus diesem hervorstehenden Endabschnitt des Lichtwellenleiterkabels mindestens eine Lichtleitfaser auf einer vorgebbaren Länge freigelegt wird, daß mindestens eine Anschlußlichtleitfaser in einem separaten Steckerstift vorbereitet gehalten wird und aus diesem mit einem vorgebbaren Längsabschnitt heraushängt, daß die aus der Steckerhülse herausstehende Lichtleitfaser des Lichtwellenleiterkabels und die aus dem Steckerstift heraushängende, zugeordnete Anschlußlichtleitfaser stirnseitig aufeinander ausgerichtet und an einer frei zugänglichen Spleißstelle außerhalb der Steckerhülse und des Steckerstiftes miteinander verspleißt werden, daß nach Herstellung der Spleißstelle die Steckerhülse über die miteinander verspleißten Lichtleitfasern geschoben wird, und daß dann erst der Steckerstift in die Steckerhülse unter Bildung eines Steckers eingesteckt wird.

Weiterbildungen der Erfindung betreffen ferner:
einen Steckeranschluß, bei dem sich vorzugsweise die nachträgliche Beschichtung in Kabellängsrichtung betrachtet im wesentlichen vom Schaft des Steckers bis zum Außenmantel des Lichtwellenleiterkabels erstreckt;
einen Steckeranschluß, bei dem als Wiederbeschichtungsmaterial insbesondere ein aushärtbares Harz gewählt ist;
einen Steckeranschluß, bei dem vorzugsweise die Längserstreckung der Crimphülse derart gewählt wird, daß mit ihr sowohl der Schaft des Steckers als auch der Außenmantel des Lichtwellenleiterkabels faßbar wird;
einen Steckeranschluß, bei dem insbesondere die Zugentlastungselemente mit Hilfe einer Crimphülse auf dem Schaftende des Steckers fixiert sind;
einen Steckeranschluß, bei dem der Anschlußlichtwellenleiter vorzugsweise im Stecker fixiert ist;
einen Steckeranschluß, bei dem insbesondere ein Schrumpfschlauch als Spleißschutzhülle vorgesehen ist;
ein Verfahren, bei dem vorzugsweise nach Fertigstellung der Spleißstelle außen rings um die entcoateten Lichtleitfasern ein Widerbeschichtungsmaterial aufgebracht wird, das weitgehend dem ursprünglichen Coatingmaterial der Lichtwellenleiter entspricht;
ein Verfahren, bei dem das Wiederbeschichtungsmaterial in Kabellängsrichtung betrachtet, vorzugsweise im wesentlichen vom Schaftende des Steckers bis zum Außenmantel des Lichtwellenleiterkabels aufgebracht wird;
ein Verfahren, bei dem mit dem Wiederbeschichtungsmaterial insbesondere die Lücke zwischen dem Schaftende des Steckers und dem Außenmantel des Lichtwellenleiterkabels derart ausgefüllt wird, daß sich für die miteinander verspleißten Lichtleitfasern eine Ersatzhülle ergibt, deren Außendurchmesser annäherungsweise dem Außendurchmesser des anzuschließenden Lichtwellenleiterkabels entspricht;
ein Verfahren, bei dem nach der Wiederbeschichtung der Lichtleitfasern das Wiederbeschichtungsmaterial vorzugsweise ausgehärtet wird;
ein Verfahren, bei dem nach dem Wiederbeschichten der Lichtleitfasern die Zugentlastungselemente des Lichtwellenleiterkabels in vorteilhafter Weise über die Spleißstelle hinweg zum Stecker geführt und auf dessen Schaftende aufgelegt werden;
ein Verfahren, bei dem die Zugentlastungselemente insbesondere mit Hilfe einer Crimphülse auf dem Schaftende des Steckers fixiert werden;
ein Verfahren, bei dem die Crimphülse vorzugsweise vor dem Anschließen des Lichtwellenleiterkabels auf dessen Außenmantel vorab aufgeschoben wird;
ein Verfahren, bei dem vor dem Anschließen des Lichtwellenleiterkabels auf dessen Außenmantel insbesondere eine Knickschutzhülle vorab aufgeschoben wird;
ein Verfahren, bei dem die Knickschutzhülse nach dem Aufbringen der Crimphülse vorzugsweise über die Crimphülse bis zum Stecker übergeschoben wird;
ein Verfahren, bei dem die Zugentlastungselemente aus dem Lichtwellenleiterkabel vorzugsweise mit einer Länge herausgelöst werden, die zumindest dem Längsabstand zwischen dem Außenmantel des Lichtwellenleiterkabels und dem Schaft des Steckers nach Verspleißen deren beider Lichtwellenleiter entspricht;
ein Verfahren, bei dem der Stecker vorzugsweise bereits werksseitig mit dem Anschlußlichtwellenleiter vorkonfektioniert wird;
ein Verfahren, bei dem der Anschlußlichtwellenleiter des Steckers vorzugsweise derart vorpräpariert wird, daß er aus dem Stecker mit einer so großen Endlänge heraushängt, daß er zusammen mit dem Stecker in mindestens eine Aufnahmevorrichtung eines Lichtwellenleiterspleißgerätes eingelegt werden kann;
ein Verfahren, bei dem der Lichtwellenleiter insbesondere aus dem Lichtwellenleiterkabel auf einer solch großen Länge herausgelöst wird, daß dieser freigelegte Lichtwellenleiterabschnitt in mindestens eine Aufnahmevorrichtung eines Lichtwellenleiterspleißgerätes eingelegt werden kann;
ein Verfahren, bei dem über die freigelegten Lichtleitfasern insbesondere nach ihrer stirnseitigen Verschweißung als erste innere Bedeckungshülle eine Spleißschutzhülle übergeschoben wird;
ein Verfahren, bei dem vorzugsweise ein Schrumpfschlauch verwendet wird, der über die Spleißstelle und die freiliegenden Längsabschnitte der miteinander verschweißten Lichtleitfasern aufgeschrumpft wird;
ein Verfahren, bei dem die Spleißschutzhülle insbesondere auf den aus dem Stecker heraushängenden Endabschnitt des Anschlußlichtwellenleiters vor dessen endseitiger Präparation vorab aufgeschoben und dort vorrätig gehalten wird;
ein Verfahren, bei dem eine Crimphülse insbesondere über den aus dem Stecker heraushängenden Anschlußlichtwellenleiter vor dessen endseitiger Präparation vorab übergeschoben und dort vorrätig gehalten wird;
ein Verfahren, bei dem mit der Crimphülse insbesondere ein Zugentlastungselement des Lichtwellenleiterkabels auf dem Schaftende des Steckers festgehalten wird;
ein Verfahren, bei dem das Lichtwellenleiterkabel sowie der daran endseitig angebrachte Stecker zum Umhüllen der miteinander verschweißten Lichtleitfasern in vorteilhafter Weise in eine Montagehilfsvorrichtung eingelegt werden, in der der Stecker sowie das Lichtwellenleiterkabel derart festgehalten werden, daß sich der herausgelöste Lichtwellenleiter des Lichtwellenleiterkabels sowie der angespleißte Anschlußlichtwellenleiter des Steckers im wesentlichen geradlinig erstrecken;
ein Verfahren, bei dem für die miteinander verschweißten Lichtleitfasern vorzugsweise eine größere Gesamtlänge im Bereich zwischen dem Stecker und der Abbruchkante des Außenmantels des Lichtwellenleiterkabels als für die dort hinüberverlegten Zugentlastungselemente gewählt wird;
ein Verfahren, bei dem als Steckerstift vorzugsweise eine Ferrule verwendet wird;
ein Verfahren, bei dem die Steckerhülse insbesondere nach ihrem Überschieben über die fertige Spleißstelle an mindestens einer Bedeckungshülle des anzuschließenden Lichtwellenleiterkabels fixiert wird;
ein Verfahren, bei dem die Steckerhülse insbesondere soweit in Richtung des Steckerstiftes über die Spleißstelle geschoben wird, daß von der Steckerhülse kabelanschlußseitig ein Teilabschnitt des Außenmantels des Lichtwellenleiterkabels umhüllt wird;
ein Verfahren, bei dem die Steckerhülse vorzugsweise soweit über die Spleißstelle in Richtung des Steckerstiftes geschoben wird, daß die Steckerhülse kabelanschlußseitig in demjenigen Bereich endet, wo Zugentlastungselemente aus dem Mantelaufbau des entlang einem Endabschnitt abgesetzten Lichtwellenleiterkabels austreten;
ein Verfahren, bei dem außen über und/oder auf der Steckerhülse vorzugsweise Zugentlastungselemente des Lichtwellenleiterkabels angeordnet werden;
ein Verfahren, bei dem außen über der mit den Zugentlastungselementen versehenen Steckerhülse insbesondere eine Crimphülse aufgeschoben, und diese Crimphülse auf die Steckerhülse gepreßt wird, wodurch die Zugentlastungselemente auf ihr fixiert werden;
ein Verfahren, bei dem die Crimphülse vorzugsweise vor dem Anschließen des Lichtwellenleiterkabels an den Stecker auf den Außenmantel des Lichtwellenleiterkabels vorab aufgeschoben wird;
ein Verfahren, bei dem die Knickschutzhülle vorzugsweise bis zum Steckerkopf des Steckers übergeschoben wird;
ein Verfahren, bei dem die Lichtleitfaser des Lichtwellenleiterkabels vorzugsweise mit der Anschlußlichtleitfaser des Steckerstiftes fusionsverschweißt wird;
ein Verfahren, bei dem der Steckerstift insbesondere auf derjenigen Stirnseite der Steckerhülse eingesteckt wird, die dem anzuschließenden Lichtwellenleiterkabel gegenüberliegt.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Darstellung ein vorpräpariertes Lichtwellenleiterkabel, an dessen freigelegten Lichtwellenleiter nach dem erfindungsgemäßen Verfahren ein Lichtwellenleiter- Stecker angeschlossen wird,
- Figur 2: in schematischer Darstellung eine Einrichtung zum Wiederbeschichten der miteinander verschweißten, entcoateten Lichtleitfaserenden des Steckers und des Lichtwellenleiterkabels nach Figur 1,
- Figur 3: in schematischer Querschnittsdarstellung die Wiederbeschichtungseinrichtung nach Figur 2,
- Figur 4: in schematischer Längsschnittdarstellung den fertigen Steckeranschluß für das Lichtwellenleiterkabel nach Figur 1 nach Durchführung des erfindungsgemäßen Verfahrens,
- Figuren 5, 6: jeweils in schematischer Längsschnittdarstellung eine gegenüber Figur 2 modifizierte Wiederbeschichtungseinrichtung, mit deren Hilfe die beiden freigelegten Lichtleitfasern des Steckers und des Lichtwellenleiterkabels nach ihrer Verspleißung mit einem Beschichtungsmaterial wiederbeschichtbar sind.
- Figuren 7 mit 9: jeweils in schematischer Darstellung verschiedene Montageschritte zum Vorbereiten eines Lichtwellenleiterkabels zum Anschluß an einen Lichtwellenleiterstecker,
- Figur 10: in schematischer Darstellung einen weiteren Lichtwellenleiterstecker mit einem aus ihm heraushängenden Anschlußlichtwellenleiter, der zum Anschluß an das vorpräparierte Lichtwellenleiterkabel nach Figur 9 vorbereitet wird,
- Figur 11: schematisch sowie teilweise in perspektivischer Darstellung den Grundaufbau eines Lichtwellenleiterspleißgeräts, in dessen Aufnahmevorrichtungen der Lichtwellenleiterstecker nach Figur 10 sowie das Lichtwellenleiterkabel nach Figur 9 zum Aneinanderspleißen eingelegt sind,
- Figuren 12, 13: jeweils in schematischer Längsdarstellung eine Montagehilfsvorrichtung, mit deren Hilfe eine Zugabfangung vom Lichtwellenleiterkabel zum nach Figur 11 angespleißten Lichtwellenleiterstecker verlegt werden kann,
- Figur 14: in schematischer Längsdarstellung das Lichtwellenleiterkabel nach Figur 9 mit dem endseitig angeschlossenen Stecker nach Aufbringung der Zugabfangung entsprechend dem Montagevorgang gemäß den Figuren 11 mit 14,
- Figur 15: in schematischer Längsdarstellung den fertigen Steckeranschluß für das Lichtwellenleiterkabel nach Figur 7,
- Figur 16: schematisch in perspektivischer Darstellung ein Lichtwellenleiterschweißgerät mit gegenüber Figur 11 modifizierter Aufnahmevorrichtung für den Stecker und das Lichtwellenleiterkabel,
- Figur 17: schematisch sowie vergrößert im Längsschnitt ein weiteres Ausführungsbeispiel eines erfindungsgemäßen Steckeranschlusses nach Zusammenbau dessen Komponenten,
- Figuren 18, 19: jeweils in schematischer Darstellung Montageschritte zur Herstellung des Steckeranschlusses nach Figur 17, und
- Figur 20: schematisch sowie vergrößert im Längsschnitt einen gegenüber Figur 17 modifizierten Steckeranschluß nach Zusammenbau dessen Komponenten.

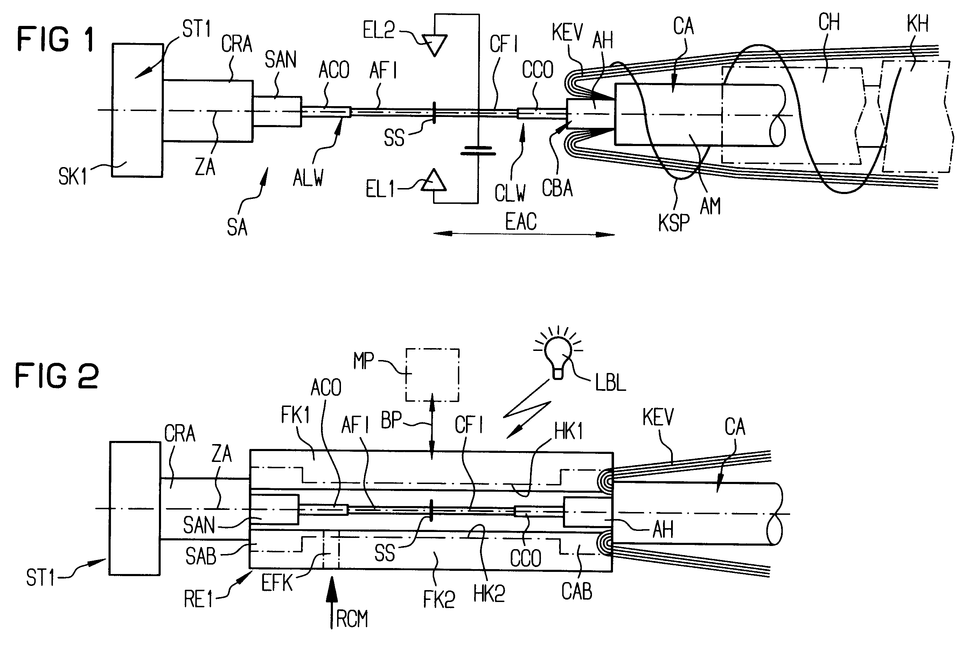

Elemente mit gleicher Funktion und Wirkungsweise sind in den Figuren 1 mit 20 jeweils mit den gleichen Bezugszeichen versehen.

Figur 1 veranschaulicht schematisch wie z.B. ein Lichtwellenleiterkabel CA nach dem erfindungsgemäßen Prinzip mit z.B. einem Lichtwellenleiterstecker ST1 konfektioniert, d.h. endseitig bestückt bzw. abgeschlossen werden kann. Das Lichtwellenleiterkabel CA weist in seinem Zentrum eine einzelne Lichtleitfaser CFI mit mindestens einer sie rundum umgebenden Kunststoffschicht CCO (= insbesondere primäres und sekundäres Coating) auf. Darüber ist eine Kunststoffhülle AH aufextrudiert, so daß eine optische Ader CBA gebildet ist. Auf der Außenoberfläche dieser optischen Ader CBA sind Zugentlastungselemente KEV in Form von mindestens einer Hülle aufgebracht. Sie verlaufen vorzugsweise in Kabellängsrichtung. Auf der mit mindestens einer Lage von Zugentlastungselementen bedeckten optischen Ader CBA sitzt schließlich mindestens ein Kunststoff-Außenmantel AM auf.

Zur Konfektionierung dieses Lichtwellenleiterkabels CA mit dem Stecker ST1 wird zunächst in einem ersten Verfahrensschritt vorab mindestens eine Abdeckhülle bzw. -hülse oder mindestens ein sonstiges Ummantelungselement über das freie Ende des noch unpräparierten Lichtwellenleiterkabels CA auf dessen Außenmantel AM übergeschoben. In der Figur 1 ist beispielhaft sowohl eine Crimphülse CH als auch eine Knickschutzhülle bzw. -hülse KH auf den Außenmantel AM des Lichtwellenleiterkabels CA aufgebracht. Die Crimphülose CH sowie die Knickschutzhülle KH sind jeweils rohrförmig,insbesondere etwa kreiszylinderförmig ausgebildet. In der Figur 1 sind die Crimphülse CH sowie die Knickschutzhülle KH der zeichnerischen Einfachheit halber jeweils lediglich strichpunktiert sowie nur entlang einer Teillänge ihrer Gesamtlängserstreckung angedeutet. Die Knickschutzhülle KH wird zweckmäßigerweise weiter als die Crimphülse CH vom freien Ende des Lichtwellenleiterkabels CA weg auf dessen Außenmantel AM übergeschoben. In der Figur 1 sitzt deshalb die Knickschutzhülle KH weiter nach rechts gegenüber der Crimphülse CH versetzt auf dem Außenmantel AM des Kabels CA auf. Die Knickschutzhülle KH weist zweckmäßigerweise einen größeren Innendurchmesser als die Crimphülse CH auf, so daß sie sich über die Crimphülse CH bewegen läßt. Diese beiden Ummantelungselemente dienen dazu, nachträglich, d.h. nach dem Anspleißen des Lichtwellenleiterkabels CA an den optischen Stecker ST1 deren Spleißbereich bzw. Ankoppelbereich von außen abzudecken und mechanisch zu verstärken. Die Crimphülse CH sowie die Knickschutzhülle KH werden zweckmäßigerweise jeweils soweit auf das Lichtwellenleiterkabel CA aufgeschoben, daß eine vorgebbare Endlänge EAC des Kabel CA aus der Crimphülse CH und/oder Knickschutzhülle KH heraushängt und damit für einen Monteur oder eine Bedienperson zur Präparation frei zugänglich ist.

Nach dem Aufziehen der Crimphülse CH sowie der Knickschutzhülle KH über das Lichtwellenleiterkabel CA wird dessen herausstehender Endabschnitt EAC in einem nachfolgenden Verfahrensschritt schichtenweise von außen nach innen entmantelt. Im einzelnen wird dabei der Außenmantel AM, insbesondere die Kunststoffummantelung des Kabels CA endseitig entlang einem vorgebbaren Längsabschnitt abgesetzt. Vorzugsweise wird der Kabelaußenmantel AM entlang einer Teillänge zwischen 30 und 40 mm vom Kabelende her entfernt. Durch das Absetzen des Kabelaußenmantels AM wird unmittelbar darunter eine Vielzahl von Zugentlastungselementen KEV freigelegt, die die Kunststoffaußenhülle der einzelnen optischen Ader CBA bedecken. Die Zugentlastungselemente KEV können ein- oder mehrschichtig in Form einer Hülle auf der etwa kreiszylinderförmigen optischen Ader CBA aufgebracht sein. Sie verlaufen vorzugsweise entlang der Längserstreckung der optischen Ader CA, insbesondere parallel zu deren strichpunktiert eingezeichneten Zentralachse ZA. Als Zugentlastungselemente KEV sind beim optischen Kabel CA vorzugsweise Verstärkungsfasern, insbesondere Kevlarfäden oder Aramidgarne vorgesehen. Die entlang der vorgegebenen Abmantellänge freigelegten Zugentlastungselemente KEV werden zweckmäßigerweise vom Kabelende weg in entgegengesetzte Längsrichtung des Kabels CA auf dessen Außenmantel AM zurückgelegt. Sie werden insbesondere unmittelbar bei ihrem Austritt aus dem Kunststoffaußenmantel AM bei dessen Abbruchkante zur freigelegten optischen Ader CBA um etwa 180° aus ihrem Parallelverlauf (bezogen auf die strichpunktiert angedeutete Kabelzentralachse ZA) zurückgebogen. Die zurückgebogenen Zugentlastungselemente KEV werden zweckmäßigerweise zeitlich begrenzt während der endseitigen Präparation des Lichtwellenleiterkabels CA und während dessen Anspleißung an den Lichtwellenleiterstecker am Kabel- Außenmantel AM fixiert. Die zurückgelegten Zugentlastungselemente KEV werden in der Figur 1 beispielsweise mit Hilfe einer zusätzlich über den Kabelaußenmantel übergezogenen, langgestreckten Kunststoffspirale KSP am Außenmantel AM des Lichtwellenleiterkabels CA festgeklemmt und damit von dessem zu präparierenden Endabschnitt ferngehalten, was dort die Montagearbeiten erleichtert. Die Kunststoffspirale KSP ist vorzugsweise federelastisch ausgebildet. Sie wird zweckmäßigerweise zuvor, d.h. vor dem schichtenweise Entmanteln des Kabelendabschnitts EAC weit genug auf den Außenmantel AM aufgeschoben. Ihr Innendurchmesser ist vorzugsweise etwa gleich dem Außendurchmesser des Lichtwellenleiterkabels CA gewählt, um unter ihr die Zugentlastungselemente KEV auf dem Außenmantel AM festklemmen zu können.

Anschließend wird vom stirnseitigen Ende der optischen Ader CBA her deren Kunststoffaußenhülle AH entlang einer vorgebbaren Endlänge abgesetzt. Dabei bleibt eine Restlänge der aus dem Kabelaußenmantel AM herausgelösten optischen Ader CBA von der Kunststoffaußenhülle AH weiterhin ummantelt. Auf diese Weise bildet die aus dem Außenmantel AM des Kabels CA herausstehende Restlänge der Aderaußenhülle AH eine Art Ansatzstück, daß die spätere, mechanische Längsankopplung und Befestigung des Lichtwellenleitersteckers ST1 am Lichtwellenleiterkabel CA vereinfacht.

Vorzugsweise wird die Kunststoffaußenhülle AH der optischen Ader CBA entlang einer Endlänge zwischen 4 und 5 mm, insbesondere zwischen 2 und 3 mm, entfernt. Die Kunststoffaußenhülle AH der optischen Ader CBA steht aus dem Außenmantel AM des optischen Kabels CA vorzugsweise auf einer Restlänge zwischen 2 und 3 mm, insbesondere zwischen 0 und 2 mm, hervor.

Durch das Absetzen der Aderaußenhülle AH wird ein einzelner Lichtwellenleiter CLW freigelegt, der etwa im Zentrum des Lichtwellenleiterkabels CA entlang dessen Zentralachse ZA angeordnet ist. Auf der äußeren Kunststoffbeschichtung CCO dieses Lichtwellenleiters CLW sitzt die Aderaußenhülle AH rings um fest auf. Nach ihrem Absetzen ist der Lichtwellenleiter CLW vorzugsweise auf einer Länge zwischen 35 und 40 mm, insbesondere zwischen 5 und 10 mm, freigelegt. Vorzugsweise wird der Lichtwellenleiter CLW aus den Kabelumhüllungen AH, AM auf einer solch großen Länge herausgelöst, daß dieser freigelegte Lichtwellenleiterabschnitt in die Aufnahmen (Manipulatoren) eines Lichtwellenleiterschweißgeräts bekannter Bauart eingelegt werden kann.

Dieser frei zugänglich gemachte Lichtwellenleiter CLW wird schließlich durch end- bzw. stirnseitiges Abtrennen auf eine vorgebbare Endlänge gebracht, mit der er aus der Aderhülle AH frei nach außen absteht. Anschließend wird er von seiner Stirnseite her entlang einem vorgebbaren Endabschnitt von seiner äußeren Kunststoffbeschichtung CCO, insbesondere seinem primären und sekundären Coating befreit, so daß dort seine Lichtleitfaser CFI blank freiliegt. Dieser Verfahrensschritt schließt vorzugsweise eine stirnseitige Präparation der Lichtleitfaser CFI zu einer annäherungsweise 90° Abbruchfläche (in Bezug auf die Faserlängsachse) mit ein.

Das Absetzen des Fasercoatings erfolgt zweckmäßigerweise derart, daß der Lichtwellenleiter CLW im Bereich der Abbruchkante der Aderaußenhülle AH entlang einer Restlänge mit dem Fasercoating beschichtet bleibt. Vorzugsweise weist die aus der Aderhülle AH herausstehende Lichtleitfaser CFI von der Abbruchkante der Aderhülle AH zur Faserstirnseite gesehen einen restlichen, gecoateten Längsabschnitt zwischen 2 und 5 mm, insbesondere zwischen 1 und 5 mm, auf.

In der linken Bildhälfte von Figur 1 ist ein optischer Stecker bzw. Lichtwellenleiterstecker ST1 schematisch dargestellt, der dem Lichtwellenleiterkabel CA zum endseitigen Anschluß zugeordnet ist. Der Lichtwellenleiterstecker ST1 weist stirnseitig, d.h. in der Figur 1 in der linken Bildhälfte einen Steckerkopf SK1 bekannter Bauart auf, der z.B. das Einstecken in eine entsprechende Lichtwellenleiterbuchse (bekannter Bauart ) als Gegenstück zum Stecker SK1 erlaubt. Kabelanschlußseitig weist der optische Stecker ST1 einen etwa kreiszylinderförmigen Crimpansatz CRA auf. An diesem ist kabelanschlußseitig ein etwa kreiszylinderförmiger Steckeransatz bzw. Steckerschaft SAN angebracht, der gegenüber dem Crimpansatz CRA einen verringerten Außendurchmesser aufweist. Aus diesem Steckerschaft SAN hängt ein Teilstück eines Anschlußlichtwellenleiters ALW heraus. Dieser Anschlußlichtwellenleiter ALW endet ausgangsseitig vorzugsweise an der buchsenanschlußseitigen Stirnseite des steckerkopfes SK1. Er ist vorzugsweise fest in den Stecker ST1 eingelagert, wobei er sich entlang dessen Zentralachse ZA weitgehend geradlinig erstreckt. Besonders zweckmäßig kann es sein, den Stecker ST1 bereits werksseitig mit dem Anschlußlichtwellenleiter ALW vorzukonfektionieren. Das Bestücken des Steckers ST1 mit dem Anschlußlichtwellenleiter ALW kann somit unter Fabrikbedingungen erfolgen, was eine hohe Fertigungsgualität sicherstellt. Insbesondere ist weitgehend sichergestellt, daß die Lichtleitfaser des Anschlußlichtwellenleiters ALW im Steckerkopf SK1 im wesentlichen zentrisch sowie ohne Beschädigungen untergebracht werden kann. Durch die werksseitige Vorkonfektionierung des Steckers mit einem Anschlußlichtwellenleiter ist es somit nicht erforderlich, die freigelegte Lichtleitfaser CFI des zu bestückenden Lichtwellenleiterkabels CA in den Stecker ST1, insbesondere in dessen Steckergehäuse vom Schaftende SAN her einzufädeln. Dies erleichtert im Feldeinsatz ganz erheblich die Montage. Insbesondere sind dadurch Beschädigungen der empfindlichen Lichtleitfaser weitgehend vermieden. Vorzugsweise lassen sich Standardstecker aus der Normenreihe der IEC-874-XXX - Familie verwenden, die jeweils mit einem Lichtwellenleiter vorkonfektionierbar sind.

Vorzugsweise steht der Lichtwellenleiter ALW aus dem Steckerschaft auf einer solch großen Länge heraus, daß er in die Aufnahmen (Manipulatoren) eines Lichtwellenleiterschweißgeräts bekannter Bauart eingelegt werden kann. Vorzugsweise hängt der Anschlußlichtwellenleiter aus dem Schaftende SAN eines derartig vorkonfektionierten Steckers auf einer Teillänge zwischen 5 und 60 mm, insbesondere zwischen 10 und 15 mm, heraus.

Der aus dem Stecker ST1 heraushängende AnschlußlichtwellenLeiter ALW wird zweckmäßigerweise entsprechend dem Lichtwellenleiter CLW des anzuschließenden Lichtwellenleiterkabels CA vorpräpariert. Im einzelnen heißt das, daß der Anschlußlichtwellenleiter ALW von seinem stirnseitigen Ende her entlang einem Teilstück von seinem äußeren Kunststoffcoating ACO, insbesondere von seinem primären und sekundären Coating befreit wird. Dabei wird ein Coatingrest auf dem Anschlußlichtwellenleiter ALW entlang einer Restlänge belassen. Entlang einer vorgebbaren Endlänge liegt somit die Lichtleitfaser AFI des Anschlußlichtwellenleiters ACO blank. Diese Lichtleitfaser AFI wird zweckmäßigerweise durch Abtrennen eines entsprechenden Endstückes auf eine vorgebbare Endlänge gebracht. Zweckmäßigerweise wird für sie entsprechend der Lichtleitfaser CFI des Kabels CA eine etwa 90° Stirnfläche präpariert.

Besonders zweckmäßig kann es sein, die Lichtleitfaser AFI bereits werksseitig aus dem Coatingmaterial des Anschlußlichtwellenleiters ALW herauszulösen oder den Stecker bereits von vornherein mit einer blanken Lichtleitfaser vorzukonfektionieren. Damit steht dem Monteur im Feldeinsatz ein optischer Stecker mit einer anschlußfertig, insbesondere spleißfertig gemachten Lichtleitfaser zur Verfügung. Ein solcher bereits spleißfertig vorpräparierter Stecker wird vorzugsweise dem jeweiligen Monteur in einer Verpackung zur Verfügung gestellt, die seine freigelegte Anschluß-Lichtleitfaser AFI vor mechanischen Beanspruchungen entsprechend schützt.

Vorzugsweise liegt die Lichtleitfaser AFI des Anschlußlichtwellenleiters ALW entlang einer Teillänge zwischen 10 und 20 mm, insbesondere zwischen 5 und 10 mm, frei.

Der Stecker ST1 mit der hinten, d.h. eingangsseitig heraushängenden Lichtleitfaser AFI sowie das Kabelende CA mit der endseitig herausgelösten Lichtleitfaser CFI werden anschließend in ein Lichtwellenleiterspleißgerät bekannter Bauart eingelegt und dort miteinander verspleißt. Zur Aufnahme und/oder Festklemmen des Steckers ST1 sowie des Kabelendes CA können in einem solchen Lichtwellenleiterspleißgerät entsprechende Aufnahmen oder Manipulatoren vorgesehen sein. Der zeichnerischen Einfachheit halber sind solche Haltevorrichtungen für den Stecker ST1 sowie für das Kabelende CA in der Figur 1 weggelassen worden. Die Anschluß-Lichtleitfaser ALW des Steckers ST1 sowie die Lichtleitfaser CFI des Kabels CA werden in einem solchen Lichtwellenleiterspleißgerät stirnseitig in Kontakt miteinander gebracht und mit Hilfe von Elektroden EL1, EL2 stirnseitig miteinander fusionsverschweißt. Die fertige Spleißstelle zwischen der AnschlußLichtleitfaser AFI und der Lichtleitfaser CFI ist in Figur 1 mit SS bezeichnet sowie durch einen Querstrich symbolisch angedeutet.

Allgemein ausgedrückt hängt also aus dem optischen Stecker ein Anschlußlichtwellenleiter soweit heraus, daß er außerhalb des Steckers stirnseitig mit dem Lichtwellenleiter des anzuschließenden Lichtwellenleiterkabels unter Bildung einer Spleißstelle SS verspleißbar ist. Dies erleichtert ganz erheblich die Durchführung des Spleiß-, insbesondere Fusionsschweißvorgangs, da ja sowohl die Anschluß-Lichtleitfaser des Steckers als auch die anzuspleißende Lichtleitfaser des endseitig zu konfektionierenden Kabels CA frei zugänglich für den Monteur daliegen, ohne daß irgendwelche Gehäuseteile des Steckers im Wege wären.

Vor dem Verschweißen der beiden Lichtleitfasern AFI, CFI werden diese zweckmäßigerweise weitgehend geradlinig sowie entlang der strichpunktiert gezeichneten, gedachten Verbindungslinie ZA weitgehend fluchtend aufeinander ausgerichtet. Nach Durchführung des Schweißvorganges und Fertigstellung ihrer Spleißstelle SS werden die beiden blank freiliegenden Lichtleitfasern AFI, CFI zweckmäßigerweise wieder ringsum mit einem Kunststoffbelag beschichtet. Figur 2 zeigt in schematischer Darstellung eine Wiederbeschichtungseinrichtung RE1 in geöffnetem Zustand, die diesem Zweck dient. Sie ist vorzugsweise Bestandteil eines Lichtwellenleiterschweißgerätes. Sie weist zwei Formteile FK1, FK2 auf, in die jeweils in Längsrichtung parallel zur Fluchtlinie ZA ein Füllkanal HK1, HK2 eingelassen ist. Der jeweilige Füllkanal HK1 bzw. HK2 weist im Querschnitt betrachtet im wesentlichen eine halbkreisförmige Innenkontur auf, d.h. er erstreckt sich räumlich betrachtet als ein halbkreiszylinderförmiger Längskanal parallel zur Längserstreckung der beiden miteinander verschweißten Lichtleitfasern AFI, CFI. Die beiden Formteile FK1, FK2 sind mit ihren Längskanälen HK1, HK2 jeweils einer Hälfte des Außenumfangs der Lichtleitfasern AFI, CFI zugeordnet. Sie lassen sich quer, insbesondere senkrecht zur Längserstreckung der beiden Lichtleitfasern AFI, CFI relativ zueinander verschieben, d.h. auf die feststehend angeordneten Lichtleitfasern zu oder von diesen wegbewegen und zwar vorzugsweise in radialer Richtung bezogen auf deren Zentralachse ZA. Das Schließen und öffnen der beiden Formteile FK1, FK2 kann vorzugsweise mit Hilfe mindestens eines Manipulators bekannter Bauart durchgeführt werden, wie er bei Lichtwellenleiterspleißgeräten üblich ist. In der Figur 2 ist ein solcher Manipulator strichpunktiert schematisch eingezeichnet und mit MP bezeichnet. Er wirkt auf die beiden Formteile FK1, FK2 quer, insbesondere orthogonal zur Zentralachse ZA ein, was durch einen Doppelpfeil BP angedeutet ist.

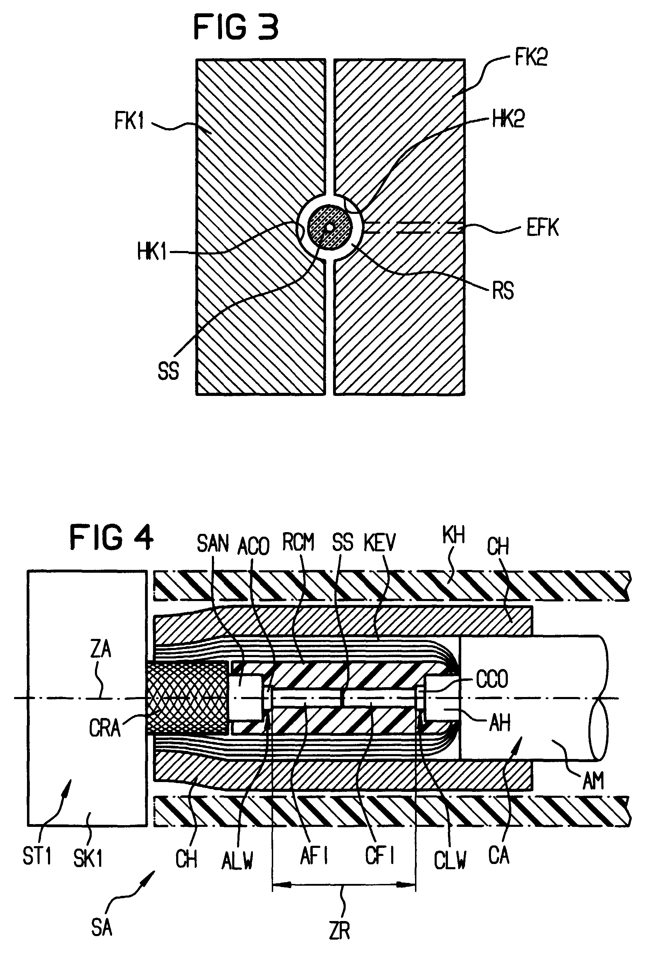

Werden die beiden Formteile FK1, FK2 bündig aufeinander gedrückt, d.h. geschlossen, so schließen sie zwischen sich einen kreiszylinderförmigen Füllkanal ein, in dem die beiden miteinander verschweißten Lichtleitfasern AFI, CFI im wesentlichen zentrisch angeordnet sind. Dies veranschaulicht Figur 3 schematisch im Querschnitt im Bereich der Spleißstelle SS. Der Innendurchmesser dieses kreiszylinderförmigen Füllkanals HK1, HK2 ist größer als der Außendurchmesser der Lichtleitfasern AFI, CFI gewählt, so daß die Lichtleitfasern ringsum von einem kreisförmigen Ringspalt RS zwischen ihrer Außenoberfläche und der Innenwand der Füllkanäle HK1, HK2 umgeben sind. Dieser Ringspalt wird mit einem flüssigen Beschichtungsmaterial oder einer weichen Beschichtungsmasse RCM gefüllt, so daß die beiden Lichtleitfasern AFI, CFI ringsum ihren Außenumfang wieder mit einer Kunststoffbeschichtung ummantelt werden können. In der Figur 2 wird das flüssige Beschichtungsmaterial RCM über einen strichpunktiert eingezeichneten Querkanal EFK im zweiten Formteil FK2 von außen nach innen dem kreiszylinderförmigen Füllkanal (gebildet durch die beiden halbkreiszylinderförmigen Füllkanäle HK1, HK2) zwischen den beiden halbschalenförmig zusammengesetzten Formteilen FK1, FK2 zugeführt. Der Zuführkanal EFK erstreckt sich dabei im wesentlichen in radialer Richtung bezogen auf die Längserstreckung der beiden Lichtleitfasern AFI, CFI. Das Wiederbeschichtungsmaterial RCM wird vorzugsweise in flüssiger Form über den Zuführkanal EFK in den kreiszylinderförmigen Formkanal der Wiederbeschichtungseinrichtung RE1 eingespritzt. Als Wiederbeschichtungsmaterial wird vorzugsweise ein Kunststoff, insbesondere Harz verwendet, das annährungsweise dieselben Materialeigenschaften wie das ursprüngliche Coatingmaterial der Lichtleitfasern aufweist. Dieses Wiederbeschichtungsmaterial ist vorzugsweise aushärtbar. Mit Erfolg wurden insbesondere die Beschichtungsmassen Desoto 235-200, Desolite 219 440 (eingetragene Warenzeichen) der Firma Desoto getestet.

Bei der Wiederbeschichtungseinrichtung RE1 von Figur 2 ist für das erste Formteil FK1 vorzugsweise Flintglas oder Quarzglas verwendet, d.h. allgemein ausgedrückt ein optisch transparentes Material. Dadurch kann das flüssig eingefüllte Beschichtungsmaterial RCN durch Bestrahlen z.B. mit einer Lichtbogenentladungslampe oder UV-Lampe LBL ausgehärtet werden, so daß es als starre Schicht ringsum das Glasmaterial der Lichtleitfasern AFI, CFI aufsitzt. Für das zweite, dem ersten Formteil FK1 gegenüberliegende Formteil FK2 ist vorzugsweise ein metallischer Werkstoff, insbesondere Stahl verwendet. Dieses zweite Formteil FK2 weist auf seiner Innenseite, die den blanken Lichtleitfasern AFI, CFI zugewandt ist, vorzugsweise eine verspiegelte Innenfläche auf. Dadurch wird das durch das erste transparente Formteil FK1 eindringende Licht weitgehend gleichmäßig ringsum den Füllkanal der Wiederbeschichtungseinrichtung RE1 herum verteilt, bzw. gestreut. Auf diese Weise ist eine zuverlässige und schnelle Aushärtung des Wiederbeschichtungsmaterials RCM ringsum die Lichtleitfasern CFI, AFI ermöglicht. Der Innendurchmesser des Füllkanals, der zwischen den beiden aufeinanderliegenden Formteilen FK1, FK2 gebildet wird, wird zweckmäßigerweise derart größer als der Außendurchmesser der Lichtleitfasern gewählt, daß eine gewünschte radiale Beschichtungsdicke des Wiederbeschichtungsmaterials RCM erreicht wird. Der Innendurchmesser des kreiszylinderförmigen Füllkanals zwischen den beiden bündig aneinandergedrückten Formteilen FK1, FK2 wird zweckmäßigerweise zwischen 248 und 900 µm, insbesondere zwischen 248 und 250 µm gewählt. Bei Verwendung von Monomode-Fasern liegt deren Außendurchmesser (ohne Fasercoating) jeweils vorzugsweise bei etwa 125 µm. Die Ummantelungsschicht mit dem Recoatingwerkstoff RCM weist dann vorzugsweise eine radiale Dicke zwischen 60 und 325 µm, insbesondere zwischen 61,5 und 62,5 µm auf.

Die beiden Formteile FK1, FK2 der Wiederbeschichtungseinrichtung RE1 sind zumindest den beiden entmantelten Längsabschnitten der aufeinander ausgerichteten Lichtwellenleiter ALW, CLW zugeordnet. In der Figur 2 weist die Wiederbeschichtungseinrichtung RE1 eine solche Längserstreckung auf, daß sie steckeranschlußseitig bis zum Crimpansatz CRA des Steckers ST1 reicht und dort mit der Abbruchkante des Crimpansatzes CRA bündig abschließt. Sie verläuft kabelanschlußseitig bis zur Abbruchkante des Kabelaußenmantels AM und schließt dort ebenfalls bündig mit dessen Abbruchkante ab. Steckeranschlußseitig weisen dazu die beiden Formteile FK1, FK2 jeweils eine etwa halbschalenfömige, insbesondere halbkreiszylinderförmige Aussparung bzw. Ausnehmung SAB auf. Deren Innenradius ist vorzugsweise derart gewählt, daß die beiden Formteile FK1, FK2 nach ihrem Zusammensetzen den Steckeransatz SAN form- und/oder kraftschlüssig umgreifen, d.h. fest auf diesem aufsitzen. Die beiden zusammengesetzten Formteile FK1, FK2 weisen also steckeranschlußseitig eine etwa kreiszylinderförmige Aussparung SAB auf, deren Innendurchmesser im wesentlichen dem Außendruchmesser des kreiszylinderförmigen Steckeransatzes SAN entspricht. Entsprechend dazu sind die beiden Formteile FK1, FK2 auch kabelanschlußseitig mit etwa halbkreiszylinderförmigen Aussparungen versehen. Deren Innendurchmesser wird zweckmäßigerweise derart gewählt, daß die Formteile FK1, FK2 nach ihrem Zusammensetzen die Aderhülle AH der aus dem Kabelmantel AM herausgelösten optischen Ader CBA festklemmen. Auf diese Weise ist sowohl stecker- als auch kabelanschlußseitig ein dichter Abschluß der Wiederbeschichtungseinrichtung RE1 erreicht, so daß dort ein Heraustreten des flüssig eingefüllten Wiederbeschichtungsmaterials bzw. Recoatingmaterials RCM weitgehend vermieden ist. Die Wiederbeschichtungseinrichtung RE1 schließt also formschlüssig mit dem Steckeransatz SAN und der Aderhülle AH ab, wodurch die Wiederbeschichtungseinrichtung RE1 gegen Heraustreten des Recoatingmaterials abgedichtet ist. Vorzugsweise bilden die beiden Formteile FK1, FK2 im zusammengesetzten Zustand eingangs- sowie ausgangsseitig jeweils ein kreiszylinderförmiges Rohrstück mit einem Innendurchmesser von etwa 900 µm, was etwa dem Außendurchmesser der optischen Ader CBA entspricht.

Auf diese Weise kann die Spleißstelle SS sowie die blanken Lichtleitfaserabschnitte AFI, CFI wiederbeschichtet werden. Insbesondere kann mit dem Wiederbeschichtungsmaterial RCM der Coatingrest ACO der Anschlußlichtleitfaser AFI mit dem Coatingrest CCO der Kabel- Lichtleitfaser CFI stoffschlüssig verbunden werden. Dabei werden die beiden Lichtleitfasern AFI, CFI ringsum mit Recoatingmaterial beschichtet. Ein Zutritt oder Eindiffundieren von Feuchte oder Wasserdampf in das Glasmaterial der beiden Lichtleitfasern AFI, CFI hinein ist somit weitgehend vermieden. Figur 4 zeigt in schematischer Längsschnittdarstellung den fertigen Steckeranschluß SA für das Lichtwellenleiterkabel CA. Das ausgehärtete Wiederbeschichtungsmaterial RCM sitzt auf den beiden miteinander verschweißten Lichtleitfasern AFI, CFI als annährungsweise kreiszylinderförmige Kunststoffhülle blockartig fest auf. Sie erstreckt sich zumindest über den Längsverlauf ZR der für den Schweißvorgang freigelegten Lichtleitfasern AFI, CFI hinweg. Wird der Innendurchmesser der eingangs- und/oder ausgangsseitigen Aussparung der zusammengesetzten Formteile FK1, FK2 von Figur 2 insbesondere etwas größer als der jeweilige Außendurchmesser des Steckeransatzes SAN und/oder der optischen Ader CBA gewählt, so können auch diese jeweils mit in das Beschichtungsmaterial hinein integriert werden. In der Figur 4 ist somit der Steckeransatz SAN steckeranschlußseitig vom ausgehärteten Wiederbeschichtungsmaterial RCM flanschartig mit eingegossen. Auch kabelanschlußseitig sitzt in der Figur 4 das Wiederbeschichtungsmaterial RCM fest um die schaftartig aus dem Kabel CA hervorstehende Aderaußenhülle AH auf. Dadurch, daß sowohl der Steckerschaft SAN als auch das aus dem Kabel CA hervorstehende, optische Aderstück mit in das Beschichtungsmaterial RCM eingegossen wurden, ist somit eine stoffschlüssige, durchgehende Längsverbindung zwischen dem Steckerschaft SAN und der optischen Ader CBA hergestellt.

Der Außendurchmesser des Steckeransatzes SAN ist vorzugsweise etwa gleich dem Außendurchmesser der Aderaußenhülle AH der optischen Ader CBA gewählt. Dadurch kann das Beschichtungsmaterial RCM in Faserlängsrichtung mit weitgehend konstantem Außendurchmesser in den Zwischenraum zwischen der Crimphülse CRA und dem Kabelaußenmantel AM vergossen werden. Das Gießstück des Beschichtungsmaterials weist also einen Außendurchmesser auf, der etwa dem Außendurchmesser der optischen Ader CBA entspricht.

Das erhärtete Wiederbeschichtungsmaterial RCM weist im Bereich der blanken Lichtleitfasern AFI, CFI eine radiale Schichtdicke (bezogen auf die strichpunktiert eingezeichnete Steckerzentralachse ZA) vorzugsweise zwischen 250 und 900 µm, insbesondere zwischen 250 und 500 µm auf.

Nach dem Wiederbeschichten der miteinander verschweißten Lichtleitfasern AFI, CFI und dem nachfolgenden Aushärten dieses Coatingmaterials RCM werden die Zugentlastungselemente KEV über die Spleißstelle SS hinweg zum Stecker ST1 derart geführt und an diesen angekoppelt, daß für die Spleißstelle SS und/oder den Stecker ST1 eine Zugabfangung in Kabellängsrichtung bereitgestellt ist. Die Zugentlastungselemente KEV werden insbesondere im wesentlichen parallel zur Zentralachse ZA von der Abbruchkante des Kabelaußenmantels AM bis zur Abbruchkante des Steckerkopfes SK1 entlang gelegt. Die Zugentlastungselemente KEV werden zweckmäßigerweise rings um den Außenumfang des Crimpansatzes CRA auf dessen Außenoberfläche aufgelegt. Die Zugentlastungselemente KEV werden dabei vorzugsweise gleichmäßig um den Außenumfang des ausgehärteten Gießstückes des Wiederbeschichtungsmaterials RCM herum verteilt. Sie werden dazu entweder bereits vorab bei der Kabelpräparation oder jetzt erst auf eine passende Endlänge geschnitten. Ihre Endlänge wird zweckmäßigerweise derart gewählt, daß sie von der Abbruchkante des Kabelaußenmantels AM bis auf den Crimpansatz CRA reichen, wenn sie geradlinig gespannt werden. Auf diese Weise bilden die Zugentlastungselemente KEV eine Außenhülle, wie sie auch im Inneren des Kabelmantels AM ursprünglich zur Verfügung steht.

Nachdem die Zugentlastungselemente durchgängig über die Spleißstelle SS vom Lichtwellenleiterkabel CA bis zum Crimpansatz CRA geführt und auf diesen aufgelegt worden sind, wird die bei der Vorpräparation des Kabels CA aufgeschobene Crimphülse CH bis zum Steckerkopf SK1 vorgeschoben und dort auf dem Crimpansatz CRA aufgepreßt. Dadurch werden die Zugentlastungselemente fest auf dem Krimpansatz CA festgehalten und somit für den Stecker ST1 eine Zugentlastung über die Spleißstelle SS hinweg bereitgestellt. Auf diese Weise wird eine zugfeste Ankopplung des Steckers ST1 an das Lichtwellenleiterkabel CA ermöglicht. Es ist dadurch weitgehend vermieden, daß auf die Spleißstelle SS unzulässig hohe Zugkräfte einwirken können. Die Spleißstelle SS verbleibt also weitgehend frei von unzulässig hohen Zugkräften, die beim Gebrauch des mit dem Stecker endseitig konfektionierten Lichtwellenleiterkabels CA etwaig auftreten könnten. Die Crimphülse CH erstreckt sich nach ihrem Überschieben über den Spleißbereich vorzugsweise von der kabelanschlußseitigen Stirnseite des Steckerkopfes SK1, d.h. vom Crimpansatz CRA über den Spleißbereich hinweg zumindest bis zur steckeranschlußseitigen Abbruchkante des Kabelmantels AM des Lichtwellenleiterkabels CA. Dadurch ist durch die Crimphülse eine zusätzliche mechanische Entlastung in Kabellängsrichtung bereitgestellt. Gleichzeitig macht die Crimphülse CH den Steckeranschluß mechanisch weitgehend stabil, so daß Einquetschungen oder Stauchungen der innenliegenden, empfindlichen Lichtleitfasern AFI, CFI, insbesondere deren Spleißstelle SS, weitgehend vermieden sind. Gegebenenfalls kann es auch zweckmäßig sein, die Crimphülse CH so lang zu wählen, daß sie auch eine Teillänge des Außenmantels AM abdeckt. Die Crimphülse CH wird dann zweckmäßigerweise zusätzlich auf dem Außenmantel AM des Lichtwellenleiterakbels CA fest aufgepreßt. Für die Crimphülse CH kann vorzugsweise ein metallischer Werkstoff, insbesondere Aluminium gewählt sein.

Insbesondere wird durch die Zugentlastungselemente KEV und die außen übergeschobene und endseitig jeweils fixierte Crimphülse CH weitgehend sichergestellt, daß die Lichtleitfasern weitgehend spannungsarm im Inneren verbleiben, selbst falls am Kabel CA und/oder am Stecker ST1 in Kabellängsrichtung gezogen wird. Indem die Zugentlastungselemente KEV vom Kabel CA selber verwendet werden und über die Spleißstelle SS hinweg zum Stecker gelegt werden, ist bereits allein durch diese sowieso vorhandenen Zugentlastungselemente eine ausreichende Zugabfangung für den Stecker sowie die Spleißstelle bereitgestellt, ohne daß erst noch zusätzliche Zugabfangungselemente erforderlich wären. Zugkräfte, die etwaig am Stecker wirksam werden, können somit über die Zugentlastungselemente KEV auf das Lichtwellenleiterkabel CA weitergeleitet werden.

Nach dem Aufbringen der Crimphülse CH wird schließlich außen noch die Knickschutzhülle bzw. -tülle KH aufgezogen, die ja beim Vorpräparieren des Lichtwellenleiterkabels CA über deren Außenmantel AM geschoben worden war. Für die Knickschutztülle KH ist vorzugsweise ein elastisches, flexibles Kunststoffmaterial, wie z.B. PVC (Polyvenylchlorid) gewählt. Sie kann vorzugsweise innenseitig mit einem Klebstoff oder Schmelzkleber beschichtet sein, so daß sie auf der Crimphülse CH haften bleibt. Die Knickschutztülle KH wird vorzugsweise bis zur Abbruchkante des Steckerkopfes SK1 vorgezogen, so daß sie dort bündig abschließt. Die Kickschutzhülle erstreckt sich vorzugsweise zumindest von der kabelanschlußseitigen Stirnseite des Steckerkopfes SK1 bis zur steckeranschlußseitigen Abbruchkante des Kabelaußenmantels AM. Insbesondere reicht sie über die Längsabschnitte der miteinander verspleißten Lichtleitfasern AFI, CFI hinweg. Bevorzugt ist sie mindestens so lang wie die Crimphülse.

Im Schaftbereich des am Lichtwellenleiterkabel CA festmontierten Steckers ST1 ist somit schließlich eine mehrlagige Spleißschutzhülle bzw. -abdeckung gebildet. Die Schichtdicke von Wiederbeschichtung RCM, Zugentlastungselementen-Hülle, Crimphülse sowie oben aufsitzender Knickschutzhülse (aufgezählt in der Reihenfolge von innen nach außen betrachtet) ist jeweils vorzugsweise derart gewählt, daß der Gesamt-Außendurchmesser der mehrlagigen Spleißstellenumhüllung annährungsweise dem ursprünglichen Außendurchmesser des Lichtwellenleiterkabels CA entspricht.

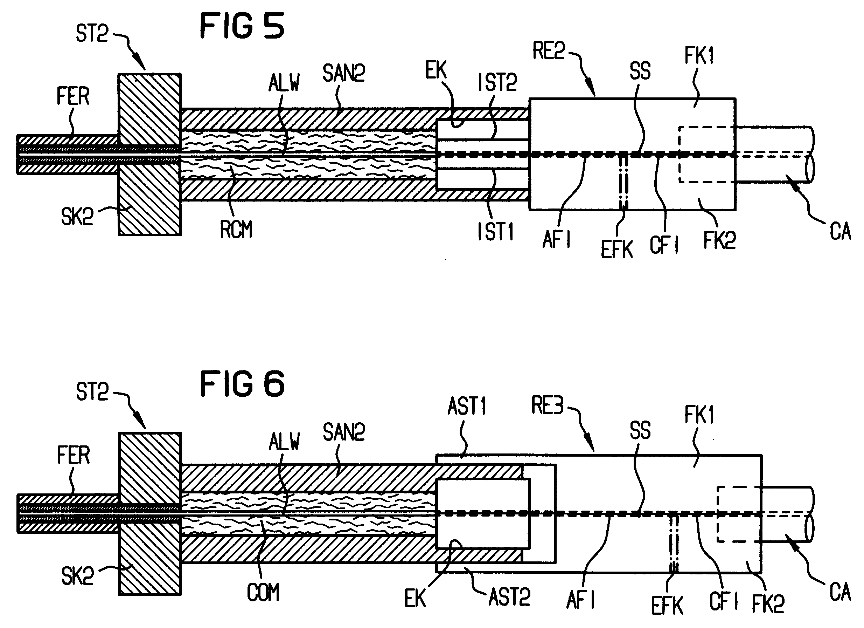

Figur 5 zeigt einen gegenüber den Figuren 1 mit 4 modifizierten optischen Stecker ST2 und eine abgewandelte Wiederbeschichtungseinrichtung RE2. Der Stecker ST2 ist ebenfalls mit einem Lichtwellenleiter wie z.B. ALW vorkonfektioniert, der aus seinem Steckerschaft SAN2 endseitig entlang einer vorgebbaren Endlänge heraushängt. In seinen Steckerkopf SK2 ist auf der dem anzuschließenden Kabel CA entgegengesetzten Seite eine Ferrule FER eingesetzt, in der anschlußfertig die Lichtleitfaser des Anschlußlichtwellenleiters ALW weitgehend zentrisch eingelagert, insbesondere eingeklebt ist. Im Unterschied zu den Figuren 1 mit 4 weist der Steckerschaft SAN2 eine Innenbohrung EK mit solch großem Innendurchmesser auf, daß die Wiederbeschichtungseinrichtung in den Steckerschaft eingeführt, insbesondere eingesteckt werden kann. Dazu weist die Wiederbeschichtungseinrichtung RE2 steckeranschlusseitig zwei Anschlußflansche IST1, IST2 auf, deren Außendurchmesser im zusammengebauten Zustand der beiden Formstücke FK1, FK2 kleiner als der Innendurchmesser der Durchgangsbohrung EK im Steckerschaft SAN2 ist. Auf diese Weise ist es ermöglicht, mit der Wiederbeschichtungseinrichtung RE2 auch den Steckerschaft SAN2 mit dem Wiederbeschichtungsmaterial RCM zu füllen.

Figur 6 zeigt in schematischer Längsbilddarstellung den optischen Stecker von Figur 5 zusammen mit einer weiteren, modifizierten Wiederbeschichtungseinrichtung RE3. Die beiden Formteile FK1, FK2 der Wiederbeschichtungseinrichtung RE3 weisen jetzt steckeranschlusseitig zwei Anschlußflansche AST1, AST2 auf, die sich außen auf den Steckerschaft SAN2 aufschieben lassen. Im zusammengebauten Zustand der Wiederbeschichtungseinrichtung RE3 schließen deren beiden schaftartigen Anschlußflansche AST1, AST2 eine kreiszylinderförmige Ausnehmung mit größerem Innendurchmesser als der Außendurchmesser des Steckerschaftes SAN2 zwischen sich ein. Dadurch läßt sich die Wiederbeschichtungseinrichtung RE3 über den Steckeransatz SAN2 schieben. Insbesondere läßt sie sich auf den Steckeransatz SAN2 aufstecken. Dadurch ist es möglich, die beiden Lichtleitfasern CFI, AFI (siehe Figur 1) wieder mit Beschichtungsmaterial zu umgeben, ohne daß der Stecker mit Beschichtungsmaterial gefüllt wird.

Weiterhin kann es gegebenenfalls zweckmäßig sein, den Anschlußlichtwellenleiter ALW in der Durchgangsbohrung EK des Steckeransatzes bzw. Steckerschaftes SAN2 in Füllmaterial bereits werksseitig einzubetten oder dort in Kunststoffmaterial fest einzugießen. In der Figur 6 ist der Anschlußlichtwellenleiter ALW im Steckeransatz SAN2 in Coatingmaterial COM fest eingegossen.

Selbstverständlich kann der Stecker nach dem erfindungsgemäßen Prinzip auch an einem Lichtwellenleiter eines Lichtwellenleiterkabels montiert werden, das nicht nur einen einzelnen Lichtwellenleiter (wie das Kabel CA in den Figuren 1 mit 6) in seinem Inneren aufweist, sondern mehrere Lichtwellenleiter, d.h. eine Vielzahl von Lichtwellenleitern. Auch kann der Stecker an eine bloße optische Festader montiert werden, d.h. beim Lichtwellenleiterkabel CA von Figur 1 würden dabei der Kunststoffaußenmantel AM und/oder die Hülle von Zugentlastungselementen KEV entfallen. Im Rahmen der Erfindung wird also unter dem Begriff Lichtwellenleiterkabel mindestens ein Lichtwellenleiter verstanden, entlang dem mindestens ein Zugentlastungselement entlanggeführt ist. Das Zugentlastungselement kann dabei auch bereits durch eine zugfeste Kunststoffhülle, die auf dem anzuschließenden Lichtwellenleiter aufsitzt, oder ein sonstiges zugfestes Bedeckungselement wie z.B. ein Reißfaden im Lichtwellenleiter- Kabelaufbau gebildet sein.

Weiterhin kann es gegebenenfalls auch zweckmäßig sein, die aus dem Kabel (wie z.B. CA) herausgelöste Lichtleitfaser (wie zum Beispiel CFI) mit der Anschlußlichtleitfaser (wie zum Beispiel AFI) des Steckers (wie zum Beispiel ST1) nicht fusionszuverschweißen, sondern mittels einer Hülse, Kleber oder auf sonstige Weise zu verbinden.

Einer Weiterbildung der Erfindung liegt insbesondere die Aufgabe zugrunde, einen weiteren Weg aufzuzeigen, wie durch einfache Montageschritte ein Lichtwellenleiterstecker an einem Lichtwellenleiterkabel zuverlässig angebracht werden kann. Diese Aufgabe wird in vorteilhafter Weise dadurch gelöst, daß der Anschlußlichtwellenleiter aus dem Stecker mit einer solchen Länge heraushängt, daß er mit seinem Stecker in mindestens eine Aufnahmevorrichtung eines Lichtwellenleiterspleißgerätes einlegbar ist.

Dadurch ist in vorteilhafter Weise die einfache sowie zuverlässige Konfektionierung eines Lichtwellenleiterkabels mit einem Stecker ermöglicht.

Eine Weiterbildung der Erfindung betrifft auch einen Steckeranschluß für einen Lichtwellenleiter eines Lichtwellenleiterkabels unter Verwendung eines Steckers, der einen Anschlußlichtwellenleiter aufweist, wobei der Anschlußlichtwellenleiter aus dem Stecker so weit heraushängt, daR er außerhalb des Steckers stirnseitig mit dem Lichtwellenleiter des Lichtwellenleiterkabels unter Bildung einer Spleißstelle verspleißbar ist, und wobei mindestens ein Zugentlastungselement des Lichtwellenleiterkabels über die Spleißstelle hinweg zum Stecker derart führbar und an diesen ankoppelbar ist, daR für die Spleißstelle eine Zugabfangung bereitgestellt ist, welcher insbesondere dadurch gekennzeichnet ist, daß der Anschlußlichtwellenleiter aus dem Stecker mit einer solchen Länge heraushängt, daß er mit seinem Stecker in mindestens eine Aufnahmevorrichtung eines Lichtwellenleiterspleißgerätes einlegbar ist.

Eine Weiterbildung der Erfindung betrifft auch ein Verfahren zur Herstellung eines Steckeranschlusses für einen Lichtwellenleiter eines Lichtwellenleiterkabels unter Verwendung eines Steckers, der einen Anschlußlichtwellenleiter aufweist, wobei der Lichtwellenleiter endseitig aus dem Lichtwellenleiterkabel mit einem vorgebbaren Längsabschnitt herausgelöst wird, wobei dieser Lichtwellenleiter sowie ein kabelanschlußseitig aus dem Stecker heraushängender Anschlußlichtwellenleiter jeweils entlang einem vorgebbaren Endabschnitt entcoatet werden, so daß dort ihre Lichtleitfasern freiliegen, wobei diese beiden Lichtleitfasern außerhalb des Steckers unter Bildung einer Spleißstelle stirnseitig miteinander verschweißt werden, und wobei mindestens ein Zugentlastungselement des Lichtwellenleiterkabels über die Spleißstelle hinweg zum Stecker derart geführt und an diesen angekoppelt wird, daß für den Stecker in Längsrichtung eine Zugabfangung unter Unterbrückung der Spleißstelle bereitgestellt wird, welches insbesondere dadurch gekennzeichnet ist, daß der Anschlußlichtwellenleiter des Steckers derart vorpräpariert wird, daß er aus dem Stecker mit einer so großen Endlänge heraushängt, daß er zusammen mit dem Stecker in mindestens eine Aufnahmevorrichtung eines Lichtwellenleiterspleißgerätes eingelegt werden kann.

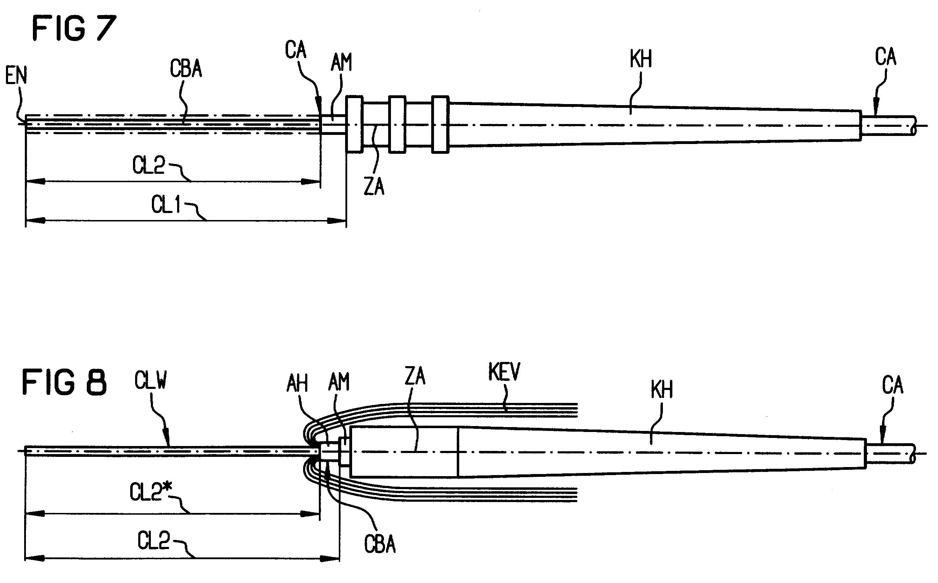

Die Figuren 7 mit 15 veranschaulichen jeweils in schematischer Darstellung eine zeitliche Reihenfolge von Montageschritten, mit denen an ein Lichtwellenleiterkabel ein Lichtwellenleiterstecker in vorteilhafter Weise angebracht werden kann:

Gemäß Figur 7 wird zunächst in einem ersten Montageschritt eine Knickschutztülle bzw. -hülle KH über das freie Ende EN eines Lichtwellenleiterkabels CA geschoben. Sie wird soweit von dessen freien Ende EN weg über dessen Außenmantel AM entlang dessen Zentralachse bzw. Längserstreckung ZA geschoben, das aus der Knickschutztülle KH ein vorgebbarer Endabschnitt CL1 des Lichtwellenleiterkabels CA hervorsteht. Vorzugsweise hängt das Lichtwellenleiterkabel CA auf einer Endlänge CL1 von mindestens 30 mm, insbesondere zwischen 50 und 100 mm, bevorzugt von etwa 70 mm endseitig aus der Knickschutztülle KH heraus.

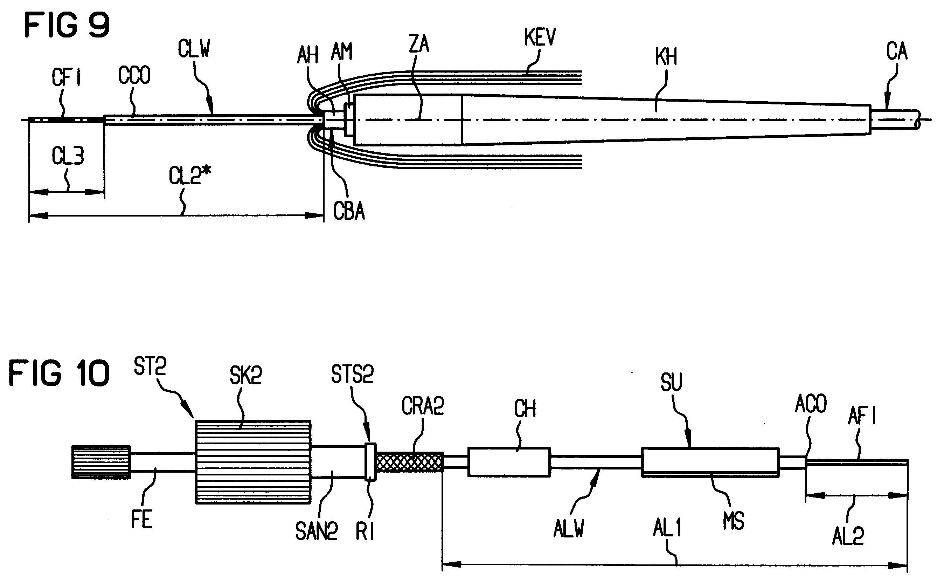

Die Knickschutztülle KH ist vorzugsweise durch eine Kunststoffhülse gebildet. Für diese ist zweckmäßigerweise ein weiches, flexibles Kunststoffmaterial gewählt, wie zum Beispiel Polyäthylen. Die Knickschutzhülle KH weist vorzugsweise eine solche Längserstreckung auf, daß mit ihrer Hilfe später nach Anschluß eines Lichtwellenleitersteckers die Gesamtlänge des aufgemachten, frei zugänglichen Anspleißbereiches zwischen dem Lichtwellenleiterkabel CA und einem endseitig anzuschließenden Lichtwellenleiterstecker (wie z.B. ST2 von Figur 10) von außen abgedeckt werden kann. Für die Knickschutzhülle KH ist vorzugsweise eine Längserstreckung von mindestens 100 mm, insbesondere zwischen 100 und 200 mm, bevorzugt von etwa 120 mm gewählt.

Entlang einer Teillänge CL2 dieses heraushängenden Endabschnitts CL1 des Lichtwellenleiterkabels CA wird in einem nächsten Montageschritt dessen Außenmantel AM abgesetzt, das heißt entfernt. Das Absetzen des Lichtwellenleiteraußenmantels AM ist in der Figur 7 dadurch angedeutet, daß der Außenmantel AM lediglich strichpunktiert entlang dem Längsabschnitt CL2 eingezeichnet ist. Der Kabelaußenmantel AM kann ein- oder mehrschichtig ausgebildet sein. Für ihn ist als Werkstoff vorzugsweise z.B. Polyäthylen verwendet.

Unter dem Kabelaußenmantel AM kommt eine optische Ader CBA zum Vorschein. Die optische Ader CBA wird entlang einer Endlänge von vorzugsweise mindestens 50 mm, insbesondere zwischen 50 und 100 mm, bevorzugt von etwa 65 mm aus dem Außenmantel AM herausgelöst.

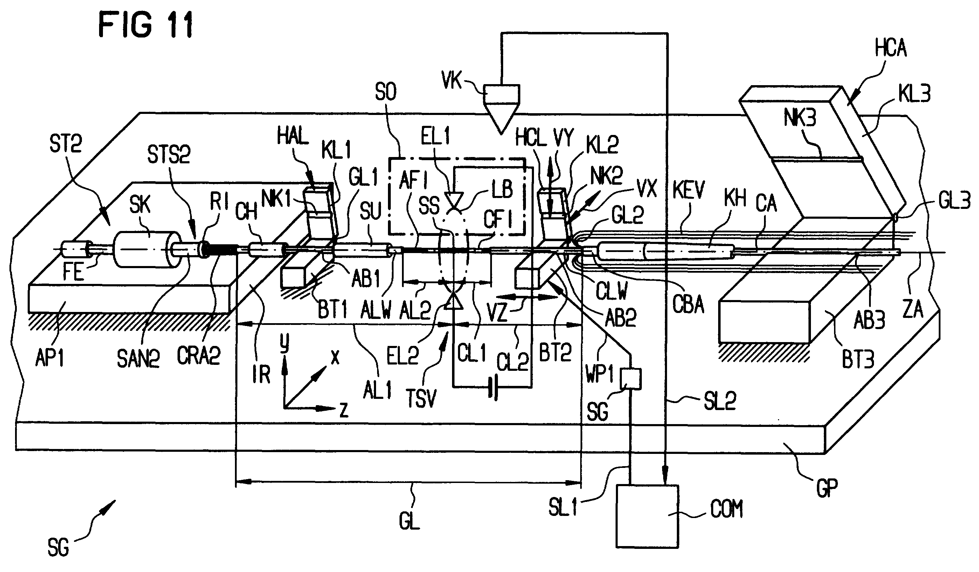

Durch das Absetzen des Kabelaußenmantels AM wird unmittelbar darunter eine Vielzahl von Zugentlastungselementen KEV freigelegt, die die Kunststoffaußenhülle der einzelnen optischen Ader CBA bedecken. Die Zugentlastungselemente KEV können ein- oder mehrschichtig in Form einer Hülle auf der etwa kreiszylinderförmigen optischen Ader CBA aufgebracht sein. Sie verlaufen vorzugsweise entlang der Längserstreckung der optischen Ader CBA, insbesondere parallel zu deren strichpunktiert eingezeichneten Zentralachse ZA. Als Zugentlastungselemente KEV sind beim optischen Kabel CA vorzugsweise Verstärkungsfasern, insbesondere getränkte Glasgarne oder Aramidgarne vorgesehen. Die entlang der vorgegebenen Abmantellänge freigelegten Zugentlastungselemente KEV werden zweckmäßigerweise vom Kabelende EN weg in entgegengesetzte Längsrichtung des Kabels CA auf dessen Außenmantel AM zurückgelegt. Sie werden insbesondere unmittelbar bei ihrem Austritt aus dem Kunststoffaußenmantel AM bei dessen Abbruchkante zur freigelegten optischen Ader CBA um etwa 180° aus ihrem Parallelverlauf (bezogen auf die strichpunktiert angedeutete Kabelzentralachse ZA) zurückgebogen. Die zurückgebogenen Zugentlastungselemente KEV werden zweckmäßigerweise zeitlich begrenzt während der endseitigen Präparation des Lichtwellenleiterkabels CA und während dessen Anspleißung an den Lichtwellenleiterstecker ST2 (siehe Figur 11) am Kabel-Außenmantel AM fixiert. Dazu können die Zugentlastungselemente KEV beispielsweise in die über den Kabelaußenmantel AM gestülpte Kickschutztülle KH hineingeschoben bzw. hineingesteckt und dadurch am Kabelaußenmantel AM festgeklemmt werden.

In einem nächsten Präparationsschritt wird vom stirnseitigen Ende EN der freigelegten optischen Ader CBA her deren Kunststoffaußenhülle AH entlang einer vorgebbaren Endlänge CL2* abgesetzt. Dies veranschaulicht Figur 8. Für die Kunststoffaußenhülle AH der optischen Ader CBA ist vorzugsweise ein Kunststoff verwendet. Insbesondere eignet sich als Werkstoff für die Kunststoffaußenhülle AH ein Harz.

Vorzugsweise wird die Kunststoffaußenhülle AH der optischen Ader CBA entlang einer Endlänge CL2* von mindestens 20 mm, insbesondere zwischen 20 und 50 mm entfernt, bevorzugt von etwa 35 mm entfernt.

Durch das Absetzen der Aderaußenhülle AH wird ein einzelner Lichtwellenleiter CLW freigelegt, der im wesentlichen entlang der Zentralachse ZA des Lichtwellenleiterkabels CA angeordnet ist. Auf der äußeren Kunststoffbeschichtung CCO dieses Lichtwellenleiters CLW sitzt die Aderaußenhülle AH ringsum fest auf. Vorzugsweise wird der Lichtwellenleiter CLW aus den Kabelumhüllungen AM, AH auf einer solch großen Länge herausgelöst, daß dieser freigelegte Lichtwellenleiterabschnitt CL2* in die Aufnahmen (Manipulatoren) eines Lichtwellenleiterschweißgeräts bekannter Bauart eingelegt werden kann (siehe Figur 11). Nach dem Absetzen der Kabelummantelungen AM, AH ist der Lichtwellenleiter CLW vorzugsweise auf einer Länge CL2* von mindestens zwischen 20 mm, insbesondere zwischen 20 und 50 mm, bevorzugt von etwa 35 mm (vom Kabelende EN aus gerechnet) freigelegt.

Als nächste Präparationsmaßnahme wird der Lichtwellenleiter CLW von seiner Stirnseite her entlang einer vorgebbaren Teillänge von seiner äußeren Kunststoffbeschichtung CCO, insbesondere seinem primären und sekundären Coating, befreit, d.h. entcoatet. Auf diese Weise liegt seine Lichtleitfaser CFI entlang einem vorgebbaren Endabschnitt CL3 blank, das heißt frei. Diesen Verfahrensschritt veranschaulicht Figur 9. Vorzugsweise weist die aus der Aderhülle AH herausstehende Lichtleitfaser CFI von der Abbruchkante der Aderhülle AH zur Faserstirnseite gesehen mindestens eine Länge CL3 von 5 mm, insbesondere zwischen 10 und 100 mm, bevorzugt von etwa 10 mm auf.

Gegebenenfalls kann es zweckmäßig sein, die Lichtleitfaser CFI an ihrer Stirnseite zusätzlich zu präparieren. Insbesondere durch Abtrennen oder Abschneiden eines Endstücks der blanken Lichtleitfaser kann in vorteilhafter Weise eine annäherungsweise 90° Abbruchfläche an der Stirnseite der Lichtleitfaser bezogen auf deren Längsachse bereitgestellt werden. Gegebenenfalls kann es auch zweckmäßig sein, die Faserstirnfläche zu polieren,um etwaige Grate oder sonstige Unebenheiten zu beseitigen. Auf diese Weise kann eine weitgehend glatte, 90° Stirnfläche für die Lichtleitfaser CFI bereitgestellt werden.

Zweckmäßigerweise wird das Kunststoffcoating des Lichtwellenleiters CLW lediglich entlang einem endseitigen Teilabschnitt CL3 seiner Gesamtlängserstreckung CL2* entfernt. Dadurch kann der Lichtwellenleiter CLW im Bereich seines Kunststoffcoatings von ein oder mehreren Aufnahme-, insbesondere Klemmeinrichtungen eines Lichtwellenleiterspleißgerätes gefaßt werden. Beschädigungen der empfindlichen Lichtleitfaser CFI sind somit durch deren Kunststoffcoating weitgehend vermieden.

Der Präparationsschritt zum Freilegen des Lichtwellenleiters CLW schließt gegebenenfalls auch mit ein, daß der freigelegte Lichtwellenleiter CLW auf die gewünschte Endlänge CL2* abgeschnitten, das heißt gekürzt wird. Entsprechend dazu wird nach dem Ablösen des Lichtwellenleitercoatings CCO die freigelegte Lichtleitfaser CFI zweckmäßigerweise auf die gewünschte Endlänge CL3 gekürzt.

Figur 10 zeigt in schematischer Darstellung den Lichtwellenleiterstecker ST2, der mit einem Anschlußlichtwellenleiter ALW vorbereitet, das heißt vorkonfektioniert ist. Der Lichtwellenleiterstecker ST2 weist an seiner buchsenanschlußseitigen Stirnseite, das heißt in der Figur 10 in der linken Bildhälfte eine Ferrule FE auf, die in einem vorzugsweise kreiszylinderförmigen Steckerkopf SK2 steckt. Die Ferrule FE dient der Aufnahme eines Lichtleitfaserabschnitts des Anschlußlichtwellenleiters ALW. Dazu weist die Ferrule FE entlang ihrer Zentralachse ZA eine Innenbohrung auf, in der die Lichtleitfaser des Anschlußlichtwellenleiters ALW sicher gelagert und vor äußeren mechanischen Beanspruchungen geschützt ist. Die Ferrule FE am ausgangsseitigen Ende des Lichtwellenleitersteckers ST2 erlaubt das Einstecken des Steckers ST2 in eine entsprechende Lichtwellenleiterbuchse bekannter Bauart, die als Gegenstück zum Stecker ausgebildet ist. In der Figur 10 ist eine solche Steckerbuchse der Übersichtlichkeit halber nicht miteingezeichnet.

Kabelanschlußseitig steht aus dem Steckerkopf SK2 ein Steckerschaft STS2 heraus. Der Steckerschaft STS2 erstreckt sich im wesentlichen geradlinig und ist im wesentlichen fluchtend auf die Zentralachse der Ferrule FE ausgerichtet. Er ist mit einem Ansatzstück SAN2 am Steckerkopf SK2 fest angebracht. Er ist im Bereich seines freien Endes als Crimpansatz CRA2 ausgebildet. Sowohl das Schaftansatzstück SAN2 als auch der Crimpansatz CRA2 sind jeweils weitgehend kreiszylinderförmig in Form einer Hülse ausgebildet. Der Crimpansatz CRA2 weist dabei einen geringeren Außendurchmesser als das Ansatzstück SAN2 auf. An der Absatzkante zwischen dem Ansatzstück SAN2 und dem Crimpansatz CRA2 ist ein um den Außenumfang herumlaufender Arretierring RI fest angebracht, der in axialer Richtung als Widerlager für eine später aufzubringende Crimphülse wie z.B. CH dient. Vorzugsweise erstreckt sich der Steckerschaft STS2 auf einer Länge von mindestens 5 mm, insbesondere zwischen 5 und 15 mm, bevorzugt von etwa 8 mm.

In diesem Steckerschaft STS2 ist der Anschlußlichtwellenleiter fixiert. Er hängt aus dem Steckerschaft STS2 entlang einer vorgebbaren Endlänge AL1 heraus. Vorzugsweise ragt der Anschlußlichtwellenleiter ALW aus dem Steckerschaft auf einer solch großen Länge heraus, daß er in die Aufnahmen (Manipulatoren) eines Lichtwellenleiterschweißgeräts bekannter Bauart eingelegt werden kann. Vorzugsweise hängt der Anschlußlichtwellenleiter ALW aus dem Steckerschaftende STS2 auf einer Teillänge von mindestens 50 mm, insbesondere zwischen 50 und 100 mm, bevorzugt von etwa 65 mm heraus.

Bevor der Anschlußlichtwellenleiter ALW endseitig zum Anschluß an den Lichtwellenleiter CLW des Lichtwellenleiterkabels CA vorpräpariert wird, wird über sein freies Ende zweckmäßigerweise zuerst eine Crimphülse CH und dann danach eine Spleißschutzhülle SU locker übergeschoben. Die Crimphülse CH sitzt dabei auf dem Coating des Anschlußlichtwellenleiters ALW (in dessen Längsrichtung betrachtet) zweckmäßigerweise näher am Steckerschaft STS2 als die Spleißschutzhülle SU. Für die Crimphülse CH ist vorzugsweise ein metallischer Werkstoff, insbesondere vernickeltes Messing verwendet. Sie ist vorzugsweise etwa kreiszylinderförmig ausgebildet. Als Spleißschutzhülle SU ist vorzugsweise ein Schrumpfschlauch vorgesehen. Dieser Schrumpfschlauch ist vorzugsweise etwa kreiszylinderförmig ausgebildet. In sein Kunststoffmaterial hinein ist insbesondere zusätzlich ein Metallstäbchen MS hineinintegriert, das entlang der Längserstreckung des Anschlußlichtwellenleiters ALW verläuft. Dieses Metallstäbchen MS übernimmt die Funktion einer zugfesten Verstärkung im Kunststoffmaterial der Spleißschutzhülse SU. Gegebenenfalls kann es auch zweckmäßig sein, ein oder mehrere Verstärkungsfasern oder ein sonstiges zugfestes Element, wie zum Beispiel getränkte Glasgarne oder Aramidgarne, in Längsrichtung des Anschlußlichtwellenleiters ALW in das Kunststoffmaterial der Spleißschutzhülse SU einzubetten.

Besonders zweckmäßig kann es sein, den Stecker ST2 bereits werksseitig mit dem Anschlußlichtwellenleiter ALW vorzukonfektionieren. Das Bestücken des Steckers ST2 mit dem Anschlußlichtwellenleiter ALW kann somit unter Fabrikbedingungen erfolgen, was eine hohe Fertigungsgualität sicherstellt. Insbesondere ist weitgehend sichergestellt, daß die Lichtleitfaser des Anschlußlichtwellenleiters ALW im Steckerkopf SK2 und in dessen buchsenanschlußseitigen Ferrule FE im wesentlichen zentrisch sowie ohne Beschädigungen untergebracht werden kann. Bei werksseitiger Vorkonfektionierung des Steckers ST2 mit dem Anschlußlichtwellenleiter ALW ist es somit im Feldeinsatz nicht erforderlich, die Lichtleitfaser des Anschlußlichtwellenleiters ALW in den Stecker ST2, insbesondere in dessen Steckergehäuse vom Schaftende STS2 her einzufädeln. Dies erleichtert im Feldeinsatz ganz erheblich die Montage, insbesondere sind dadurch Beschadigungen der empfindlichen Lichtleitfaser des Anschlußlichtwellenleiters weitgehend vermieden. Vorzugsweise lassen sich Standardstecker aus der Normenreihe der IEC-874-xxx verwenden, die jeweils mit einem Lichtwellenleiter vorkonfektionierbar sind. Selbstverständlich kann es ggf. auch zweckmäßig sein, den Stecker ST2 erst bei Bedarf und nicht bereits werkseitig aus seinen einzelnen Komponenten zusammenzusetzen. Insbesondere wird dann erst im Feldeinsatz der Anschlußlichtwellenleiter in den Steckerschaft STS2, dem Steckerkopf SK2 und die Ferrule FE eingefädelt und dort fixiert.

Der aus dem Stecker ST2 heraushängende Anschlußlichtwellenleiter ALW wird zweckmäßigerweise entsprechend dem Lichtwellenleiter CLW des anzuschließenden Lichtwellenleiterkabels CA vorpräpariert. Im einzelnen heißt das, daß der Anschlußlichtwellenleiter ALW von seinem stirnseitigen, freien Ende her entlang einem Teilstück AL2 von seiner äußeren Kunststoffbeschichtung ACO, insbesondere von seinem primären und sekundären Coating, befreit wird. Der Anschlußlichtwellenleiter ALW wird also lediglich auf einer Teillänge AL2 seiner Gesamtlänge AL1 entcoatet. Vom Ende des Steckerschafts STS2 bis zur Abbruchkante des Lichtwellenleitercoatings ACO ist die Lichtleitfaser AFI also weiterhin mit einer Kunststoffbeschichtung ACO bedeckt. Vorzugsweise wird die Lichtleitfaser AFI des Anschlußlichtwellenleiters ALW auf einer Endlänge von mindestens 5 mm, insbesondere zwischen 10 und 100 mm, bevorzugt von etwa 10 mm freigelegt. Die Lichtleitfaser AFI des Anschlußlichtwellenleiters ALW liegt also entlang einer vorgebbaren Endlänge blank. Diese Lichtleitfaser AFI wird zweckmäßigerweise durch Abtrennen eines entsprechenden Endstückes auf eine vorgebbare Endlänge gebracht. Zweckmäßigerweise wird für sie entsprechend der Lichtleitfaser CFI des Lichtwellenleiterkabels CA eine etwa 90° Stirnfläche bezogen auf die Faserlängserstreckung vorpräpariert. Besonders zweckmäßig kann es sein, die Lichtleitfaser AFI bereits werksseitig aus dem Coatingmaterial des Anschlußlichtwellenleiters ALW herauszulösen. Damit steht dem Monteur im Feldeinsatz ein optischer Stecker mit einer anschlußfertig, insbesondere spleißfertig gemachten Lichtleitfaser zur Verfügung. Ein solcher bereits spleißfertig vorpräparierter Stecker wird vorzugsweise dem jeweiligen Monteur in einer Verpackung zur Verfügung gestellt, die seine freigelegte Anschlußlichtleitfaser AFI vor mechanischen Beanspruchungen entsprechend schützt.

Selbstverständlich kann es auch zweckmäßig sein, die zeitliche Reihenfolge der Kabelvorbereitung und Steckervorbereitung zu vertauschen, das heißt zuerst den Anschlußlichtwellenleiter des Lichtwellenleitersteckers vorzupräparieren und dann erst den Lichtwellenleiter des anzuschließenden Lichtwellenleiterkabels aus diesem herauszulösen und entsprechend vorzupräparieren.

In einem nächsten Montageschritt wird jetzt die freigelegte Lichtleitfaser CFI des Lichtwellenleiterkabels CA stirnseitig mit der freigelegten Lichtleitfaser AFI des Anschlußlichtwellenleiters ALW verspleißt, insbesondere thermisch verschweißt.

Figur 11 zeigt dazu schematisch sowie teilweise in perspektivischer Darstellung den Grundaufbau eines geeigneten Lichtwellenleiter-Spleißgeräts SG. Das Spleißgerät ist insbesondere als thermisches Lichtwellenleiter-Schweißgeräts ausgebildet. Der Lichtwellenleiterstecker ST2 wird in der linken Bildhälfte von Figur 11 auf eine tisch- bzw. plattenartige Steckerablage AP1 abgelegt, die gegenüber dem Arbeitstisch bzw. der Grundplatte GP des Spleißgerätes SG erhöht ist. Diese Steckerablage AP1 ist rechteckförmig ausgebildet. Sie ist auf dem vorzugsweise planen Arbeitstisch GP der Schweißvorrichtung SV feststehend angeordnet. Der aus dem Stecker ST2 heraushängende Anschlußlichtwellenleiter ALW steht über die rechte Abbruchkante der Steckerablage AP1 in Richtung auf die Schweißvorrichtung TSV des Spleißgerätes SG zu frei vor. Er wird vorzugsweise weitgehend geradlinig entlang seiner Längserstreckung ausgerichtet. Er wird in einer zugeordneten Aufnahme- bzw. Haltevorrichtung HAL bekannter Bauart der Schweißvorrichtung SV eingelegt, die ebenfalls gegenüber dem Arbeitstisch GP erhöht ist. Mit dieser Haltevorrichtung HAL wird der Anschlußlichtwellenleiter ALW festgehalten und lagefixiert. Zur besseren Veranschaulichung der Fixierwirkung der ersten Haltevorrichtung HAL ist diese in der linken Bildhälfte von Figur 11 beispielhaft in geöffnetem Zustand gezeichnet. Sie weist ein Basisteil BT1 auf, auf dessen Oberseite eine Längsnut AB1 eingelassen ist. In diese Längsnut AB1 ist der Anschlußlichtwellenleiter ALW an einer Längsstelle seines noch gecoateten, das heißt kunststoffbeschichteten Längsabschnitts eingelegt. Am Basisteil BT1 ist über ein Gelenk GL1, Scharnier oder dergleichen eine Klappe KL1 angebracht, die in Richtung auf das Basisteil BT1 zu schwenkbar ist. Auf der Innenseite der Klappe bzw. des Deckels KL1 ist eine Längsnut NK1 korrespondierend zur Längsnut AB1 im Basisteil BT1 vorgesehen. Die Längsnuten NK1, AB1 sind jeweils halbkreiszylindrisch ausgebildet. Im geschlossenen Zustand der Haltevorrichtung HAL bilden die beiden Längsnuten NK1, HB1 einen ringsum geschlossenen Längskanal kreiszylindrischer Form für den Anschlußlichtwellenleiter ALW. Der Innendurchmesser dieses Längskanals ist dabei vorzugsweise etwa gleich dem Außendurchmesser des Anschlußlichtwellenleiters ALW gewählt. Nach Schließen der Haltevorrichtung HAL wird somit der Anschlußlichtwellenleiter ALW zwischen dem Basisteil BT1 und dem Deckel bzw. Oberteil KL1 eingeklemmt und dort festgehalten.

In der Figur 11 fixiert die Haltevorrichtung HAL den Anschlußlichtwellenleiter ALW beispielhaft entlang einem Teilstück in der Lücke zwischen der Ortsposition der aufgeschobenen Crimphülse CH und der Spleißschutzhülse SU. Aus der Haltevorrichtung HAL steht der Anschlußlichtwellenleiter ALW mit seiner endseitig freigelegten Lichtleitfaser AFI frei heraus.

Gegebenenfalls kann es auch zweckmäßig sein, den Stecker ST2 selbst mit einer entsprechenden Haltevorrichtung bekannter Bauart lagezufixieren, d.h. ortsfest festzuhalten.

Das vorpräparierte Lichtwellenleiterkabel CA von Figur 9 wird auf der der Steckerablage gegenüberliegenden Seite der Schweißvorrichtung SV in ein oder mehrere zugeordnete Aufnahmen bekannter Bauart (wie zum Beispiel Manipulatoren) der Schweißvorrichtung SV abgelegt, die jeweils ebenfalls auf dem Arbeitstisch GP erhöht angeordnet sind. In der Figur 11 wird das Lichtwellenleiterkabel CA entlang einem Teilstück seines Außenmantels mit Hilfe einer feststehenden Haltevorrichtung HCA lagefixiert bzw. festgehalten, die vorzugsweise analog zur Haltevorrichtung HAL ausgebildet ist. Figur 11 zeigt dabei die Haltevorrichtung HCA ebenfalls in geöffnetem Zustand. Sie weist ein Basisteil BT3 auf, deren Längsnut NK3 der Aufnahme des Lichtwellenleiterkabels CA dient. Über ein Gelenk GL3 ist ein Deckel KL3 auf das Basisteil BT3 klappbar. Auf der Innenseite des Deckels KL3 ist eine Längsnut NK3 eingelassen, die zur Ortslage der Längsnut AB3 im Basisteil BT3 korrespondiert. Dadurch läßt sich das Kabel CA bei geschlossener Haltevorrichtung HCA zwischen dem Deckel Kl3 und dem Basisteil BT3 festklemmen. Die Haltevorrichtung HCA umfaßt also das Lichtwellenleiterkabel CA an einem solchen Teilabschnitt, der vom freien Ende des Lichtwellenleiterkabels abgewandt ist und entlang dem das Lichtwellenleiterkabel CA noch seinen Kabelaußenmantel aufweist. In die Haltevorrichtung HCA werden zweckmäßigerweise gleichzeitig mit dem Kabel CA vorzugsweise dessen zurückgelegten Zugentlastungselemente KEV eingelegt und dort festgeklemmt.

Der endseitig aus dem Kabel CA herausgelöste Lichtwellenleiter CLW wird in entsprechender Weise wie der Anschlußlichtwellenleiter ALW in eine Haltevorrichtung HCL eingelegt und dort festgeklemmt. Die Haltevorrichtung HCL ist ebenfalls vorzugsweise entsprechend der Haltevorrichtung HAL ausgebildet, d.h. sie weist ein Basisteil BT2 sowie einen daran über ein Gelenk GL2 angebrachten Deckel KL2 auf. In die Kontaktierungsflächen von Basisteil BT2 und Deckel KL2 ist jeweils eine Längsnut AB2, NK2 eingelassen. Im geschlossenen Zustand der Haltevorrichtung HCL korrespondieren beide Längsnuten zueinander und umgreifenden halbschalenartig den Kabellichtwellenleiter CLW. Aus dieser Haltevorrichtung HCL steht der Lichtwellenleiter CLW mit seiner freigelegten Lichtleitfaser CFI frei heraus. Das Kabel CA sowie sein herausgelöster Lichtwellenleiter CLW werden vorzugsweise weitgehend geradlinig in den zugehörigen Haltevorrichtungen HCA, HCL lagepositioniert.

Die Steckerablage AP1, die Haltevorrichtungen HAL, HCL sowie HCA sind vorzugsweise auf dem gemeinsamen, vorzugsweise planen Arbeitstisch GP erhöht angeordnet. Entlang der Längserstreckung des Anschlußlichtwellenleiters ALW und/oder des Kabellichtwellenleiters CLW von links nach rechts betrachtet ergibt sich dabei - insbesondere folgende Anordnungsreihenfolge: Auf der Steckerablage AP1 liegt der Stecker ST2 mit einer Teillänge seines heraushängenden Anschluß-Lichtwellenleiters ALW auf. Ein Teilabschnitt des Anschlußlichtwellenleiters ALW, der über die Innenfrontseite IR der erhöhten Steckerablage AP1 (in Richtung Spleißstelle SS) übersteht, wird von der Haltevorrichtung HAL lagefixiert. In der Lücke bzw. dem Spalt zwischen der Innenfrontseite IR der Steckerablage AP1 und der Haltevorrichtung HAL sitzt dabei die Crimphülse CH auf dem Anschlußlichtwellenleiter ALW, der die Steckerablage AP1 zur Haltevorrichtung HAL überbrückt. Dabei ist für die Crimphülse CH insbesondere in lateraler Richtung, insbesondere in Y-Richtung sowie in Längsrichtung genügend Platz gelassen, so daß sie dort im Spalt aufnehmbar ist. Auf diese Weise kann der Anschlußlichtwellenleiter ALW weitgehend geradlinig ausgelegt werden. Auf der Spleißstellen zugewandten Seite der Haltevorrichtung HAL ist über dem frei aus der Haltevorrichtung HAL abstehenden Endabschnitt des Anschlußlichtwellenleiters ALW die Spleißschutzhülle SU übergeschoben. Aus ihr steht der Anschlußlichtwellenleiter ALW mit seiner freigelegten, blanken Lichtleitfaser AFI hervor. Auf der anderen, gegenüberliegenden Seite der Spleißstelle SS steht der Kabellichtwellenleiter CLW in Richtung der Spleißstelle SS aus der Haltevorrichtung HCL frei ab. Die Haltevorrichtung HCA für das Lichtwellenleiterkabel CA ist mit einem Längsabstand zur Haltevorrichtung HCL in die von der Spleißstelle SS abgewandten Richtung des Kabelendes positioniert. In diese Lücke, d.h. im Spalt zwischen der spleißstellennahen Haltevorrichtung HCL und der außenliegenden Haltevorrichtung HCA kann dann die Knickschutztülle KH - ohne den geradlinigen Verlauf des Kabellichtwellenleiters CLW zu stören - auf dem Kabellichtwellenleiter CLW angeordnet werden, da sie ja in der Lücke insbesondere in Y-Richtung, d.h. nach oben und unten Platz findet.

Um die beiden Lichtleitfasern CFI, AFI möglichst fluchtend aufeinander ausrichten zu können, ist mindestens eine der Haltevorrichtungen wie zum Beispiel HAL, HCL in mindestens eine Raumrichtung quer bzw. lateral, insbesondere senkrecht zur jeweiligen Faserlängsachse verschiebbar ausgebildet. Im vorliegenden Ausführungsbeispiel ist die Haltevorrichtung HAL in alle drei Raumrichtungen x, y, z feststehend auf dem Arbeitstisch GP angebracht, während die Haltevorrichtung HCL für den Kabellichtwellenleiter CLW in mindestens eine laterale Richtung bezogen auf dessen Zentralachse ZA verschiebbar ausgebildet ist. Insbesondere ermöglicht die Haltevorrichtung HCL Bewegungen in alle drei Raumrichtungen, nämlich x, y, z eines kartesischen Koordinatensystems. Die Raumrichtung z gibt dabei eine Längsrichtung vor, entlang der die beiden miteinander zu verspleißenden Lichtleitfasern AFI, CFI möglichst fluchtend aufeinander ausgerichtet werden sollen. Mit Hilfe der Haltevorrichtung HCL läßt sich die Lichtleitfaser CFI relativ zur feststehend angeordneten Lichtleitfaser AFI in z-Richtung verfahren. Die Haltevorrichtung HCL sorgt also dafür, daß die beiden Lichtleitfasern AFI, CFI aufeinander zu oder voneinander weg verfahren werden können. Insbesondere entspricht die z-Richtung einer gewünschten Ausrichtlinie, entlang der die beiden Lichtleitfasern AFI, CFI möglichst fluchtend aufeinander ausgerichtet werden sollen. Die Raumrichtung x verläuft in Querrichtung zur Längserstreckung der beiden Lichtwellenleiter ALW, CLW, insbesondere senkrecht, das heißt orthogonal zur Raumrichtung z. Der plane Arbeitstisch GP liegt dabei insbesondere parallel zu der von der x- sowie z-Raumrichtung aufgespannten Ebene. Die Raumrichtung y steht senkrecht zu dieser x-, z-Ebene, das heißt sie verläuft nach oben oder unten. Die Verschiebung der Haltevorrichtung HCL in die entsprechende Raumrichtung x, y, z ist durch Bewegungspfeile VX, VY oder VZ angedeutet.

Die Verschiebung der Haltevorrichtung HCL in die jeweilige Raumrichtung x, y oder z wird in der Figur 11 mit Hilfe eines Stellgliedes SG vorgenommen, das seine Steuersignale von einer Auswerte-/Steuereinrichtung COM über eine Steuerleitung SL1 erhält. Die Verschiebewirkung des Stellgliedes SG1 auf dessen zugeordnete Haltevorrichtung HCL ist in der Figur 11 mit Hilfe eines Wirkpfeils WP1 schematisch angedeutet.

Um den jeweiligen, aktuellen Lageversatz der beiden miteinander zu verschweißenden Lichtleitfasern AFI, CFI quer, insbesondere orthogonal, das heißt deren momentanen lateralen Ausrichtzustand bezüglich ihrer Längserstreckung erfassen zu können, ist dem Schweißbereich der sich gegenüberstehenden Lichtleitfaserenden CFI, AFI von Figur 11 vorzugsweise ein optisches Abbildungssystem bzw. Bildverarbeitungssystem VK, insbesondere eine Videokamera, zugeordnet. Insbesondere eignet sich dafür ein Bildverarbeitungssystem, wie es in der US-PS 5,011,259 nach Funktion und Wirkungsweise detailliert angegeben ist. In der Figur 11 ist das optische Abbildungs- bzw. Aufnahmesystem VK der zeichnerischen Einfachheit halber oberhalb der Grundplatte GP lediglich schematisch angedeutet. Es ist über eine Meßleitung SL2 mit der Auswerte-/Steuereinrichtung COM verbunden, um die von ihm aufgenommenen Bildinformationen auswerten zu können. Mit Hilfe des optischen Abbildungssystems VK ist es ermöglicht, für die beiden Lichtleitfasern CFI, AFI jeweils ein optisches Abbild bzw. Projektionsbild in mindestens einer Betrachtungsebene zu erfassen und dessen Bildinformation zur Auswertung bereitzustellen. Dadurch läßt sich ein etwaiger lateraler Versatz zwischen den beiden Lichtleitfasern AFI, CFI gegeneinander in der jeweiligen Betrachtungsebene wie zum Beispiel in der x, z-Bildebene erfassen. Die Steuereinrichtung SL1 weist dann über die Steuerleitung CSL1 das Stellglied SG für einen entsprechenden Ausgleich des lateralen Versatzes zwischen den beiden Lichtleitfasern AFI, CFI an. Auf diese Weise kann ein etwaiger Versatz der Lichtleitfasern AFI, CFI gegeneinander mehrdimensional, das heißt in mehreren verschiedenen Betrachtungsebenen erfaßt und weitgehend ausgeglichen werden.

Die beiden Lichtleitfasern AFI, CFI werden zunächst in einem vorgebbaren Längsabstsand, das heißt auf Lücke voneinander positioniert. Dann werden die beiden Lichtleitfasern im nächsten Schritt derart aufeinander ausgerichtet, daß sie weitgehend aufeinander fluchten. Die derart fluchtend aufeinander ausgerichteten Lichtleitfasern AFI, CFI werden schließlich vorgeschweißt und ihre erweichten Stirnseiten entlang ihrer gemeinsamen Fluchtlinie ZA soweit ineinander gefahren, daß sie stirnseitig miteinandner verschmelzen. Das Erwärmen und Verschmelzen der Fasern AFI, CFI wird dabei zweckmäßigerweise mit Hilfe einer thermischen Wärmequelle TSV durchgeführt. Dazu sind in der Figur 11 dem Zwischenraum zwischen den beiden Haltevorrichtungen HAL, HCL zum Beispiel zwei Schweißelektroden EL1, EL2 derart zugeordnet, daß sich zwischen ihnen ein sogenannter Lichtbogen durch Glimmentladungen queraxial, insbesondere senkrecht zur axialen Längserstreckung der beiden Lichtleitfasern AFI, CFI ausbilden kann. Der Verlauf des Bereichs, indem sich ein Lichtbogen zwischen den beiden Elektroden EL1, EL2 ausbreiten kann (= Erwärmungs- bzw. Schweißbereich), ist in der Figur 11 der zeichnerischen Einfachheit halber lediglich in Form einer langgestreckten, strichpunktierten Ellipse angedeutet und mit LB bezeichnet. Während die Elektrode EL1 der einen Längsseite der beiden Lichtleitfasern AFI, CFI zugeordnet ist, befindet sich die Elektrode EL2 auf der der Schweißelektrode EL1 gegenüberliegenden Längsseite der Lichtleitfasern AFI, CFI. Figur 11 zeigt die beiden Faserenden AFI, CFI nach dieser thermischen Verschweißung. Ihre fertige Spleißstelle ist mit SS bezeichnet.

Um den herausgelösten Lichtwellenleiter CLW in z-Richtung auf die Lichtleitfaser AFI zu verfahren zu können, wird das Lichtwellenleiterkabel CA zwischen der Haltevorrichtung HCA und der Haltevorrichtung HCL zweckmäßigerweise mit Überlänge eingeklemmt, so daß sich beim Vorwärtsbewegen der Haltevorrichtung HCL auf die feststehend angeordnete Lichtleitfaser AFI zu genügend Länge des herausgelösten Lichtwellenleiters CLW nachschieben läßt.

Zusätzlich oder unabhängig hiervon kann es auch zweckmäßig sein, sowohl die Haltevorrichtung HCL für den Kabellichtwellenleiter CLW als auch die Haltevorrichtung HCA für das Kabel CA selbst in Faserlängsrichtung, d.h. hier in z-Richtung, verschiebbar auszubilden. Dann braucht keine Vorratslänge zwischen den beiden Haltevorrichtungen HCA, HCL bereitgehalten werden.

Zweckmäßigerweise weist der aus dem Stecker ST2 heraushängende Lichtwellenleiterabschnitt ALW und/oder der aus dem anzuschließenden Lichtwellenleiterkabel CA herausgelöste Lichtwellenleiter CLW jeweils eine solche Länge auf, daß sie sich in die Baulängen bzw. Dimensionierungs-Vorgaben eines Lichtwellenleiterspleißgerätes bekannter Bauart einlegen lassen. Die an der Spleißstelle SS miteinander verschweißten Lichtwellenleiter ALW, CLW weisen vom Ende des Steckerschaftes STS2 bis zur Abbruchkante der Außenhülle AH der optischen Ader CBA, das heißt dem Austrittsort des Lichtwellenleiters CLW aus dem Lichtwellenleiterkabel CA, eine Gesamtlänge GL vorzugsweise von mindestens 10 mm, insbesondere zwischen 20 und 200 mm, bevorzugt von etwa 100 mm auf.

Dadurch, daß sowohl aus dem Stecker als auch aus dem anzuschließenden Lichtwellenleiterkabel jeweils ein Lichtwellenleiter heraushängt, liegt auch die Spleißstelle SS zwischen dem Anschlußlichtwellenleiter und dem Kabellichtwellenleiter außerhalb des Steckers sowie sonstiger störender Bauteile, das heißt die Spleißstelle SS zwischen dem Anschlußlichtwellenleiter ALW und dem herausgelösten Lichtwellenleiter CLW des Kabels CA ist frei zugänglich, was die Montagearbeiten zum Anspleißen des Steckers ST2 vereinfacht. Insbesondere ist der Schweißvorgang erleichtert, da mit der vorhandenen Elektrodenanordnung üblicher Standard-Lichtwellenleiterschweißgeräte gespleißt werden kann.

Nachdem die Anschlußlichtleitfaser AFI mit der Kabellichtleitfaser CFI thermisch verschweißt worden ist, wird die (insbesondere vorrätig auf dem Anschlußlichtwellenleiter ALW) gehaltene Spleißschutzhülse SU über die entcoateten Lichtleitfasern AFI, CFI geschoben, so daß sie zumindest deren Spleißbereich SS von außen abdecken. Vorzugsweise erstreckt sich die Spleißschutzhülse SU zumindest soweit in Faserlängsrichtung, daß sie die entcoateten Längsabschnitte der beiden Lichtleitfasern AFI, CFI von außen umhüllt. Bei Verwendung eines Schrumpfschlauches als Spleißschutzhülse SU wird diese zweckmäßigerweise auf die Längsabschnitte der beiden blanken Lichtleitfasern AFI, CFI aufgeschrumpft. Dies kann vorzugsweise mit Hilfe eines Schrumpfofens so erfolgen, der in der Figur 11 zusätzlich strichpunktiert mit eingezeichnet ist und an der Grundplatte GP im Spleißbereich abnehmbar montiert ist.

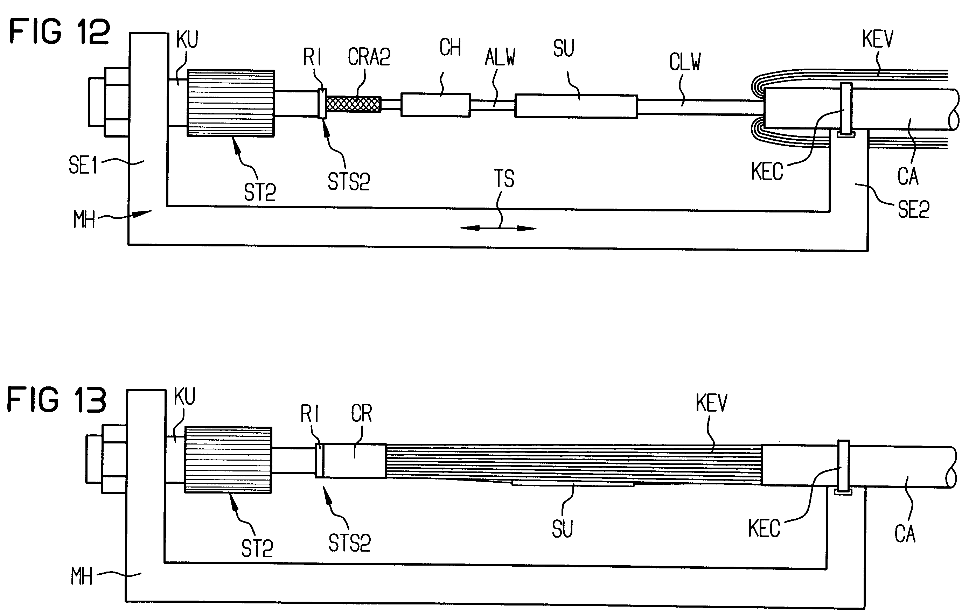

Um die beiden miteinander verschweißten Lichtleitfasern AFI, CFI von außen in einfacher Weise umhüllen zu können, kann es zweckmäßig sein, das Lichtwellenleiterkabel CA sowie den daran endseitig angebrachten Stecker ST2 in eine Montagevorrichtung MH hilfsweise einzulegen. Figur 12 zeigt diese Montagevorrichtung MH in schematischer Darstellung. Sie kann vorzugsweise Bestandteil des Lichtwellenleiterspleißgeräts SG sein. Sie ist vorzugsweise aus dem Spleißgerät herausnehmbar und wieder einsetzbar. In Seitenansicht weist die Montagevorrichtung MH in erster Näherung ein U-förmiges Profil auf. An einem dessen seitlicher Schenkel SE1, SE2 ist eine Kupplung KU zum Einstecken des Steckers ST2 vorgesehen. Am gegenüberliegenden Schenkel SE2 der U-profilartigen Montagevorrichtung MH ist eine Klemmvorrichtung KEC für das Lichtwellenleiterkabel CA vorgesehen, mit dessen Hilfe das Kabel CA an seinem Außenmantel AM fixiert werden kann. Die Kupplung KU für den Stecker ST2 ist vorzugsweise entsprechend einer Lichtwellenleiterbuchse ausgebildet, in der der Stecker ST2 eingesteckt werden kann. Die Montagevorrichtung MH ist vorzugsweise derart ausgebildet, daß der Stecker ST2 sowie das Lichtwellenleiterkabel CA an seinem Außenmantel festgehalten werden kann und sich ihre Lichtwellenleiter ALW, CLW zwischen den Schenkeln SE1, SE2 im wesentlichen geradlinig gespannt erstrecken. Zweckmäßigerweise ist die Breite der U-profilartigen Halterung MH für unterschiedliche Längen der miteinander verschweißten Lichtwellenleiter des Steckers und des Lichtwellenleiterkabels einstellbar. Diese Längenveränderung der Montagevorrichtung MH ist durch einen Doppelpfeil TS angedeutet.

Nach dem Anschweißen des Kabellichtwellenleiters CLW an den Anschlußlichtwellenleiter ALW wird also sowohl der Stecker ST2 als auch das Lichtwellenleiterkabel CA so aus dem etwaig vorgesehenen Schrumpfofen SO sowie der Schweißvorrichtung TSV von Figur 11 herausgenommen und in der Montagevorrichtung MH befestigt. Die Montagevorrichtung MH erleichtert es, die herausgelösten und zurückgelegten Zugentlastungselemente KLV des Lichtwellenleiterkabels CA über die Spleißstelle der Lichtwellenleiter ALW, CLW hinweg zu führen und am Stecker zu befestigen.

In einem nächsten Montageschritt werden die Zugentlastungselemente KEV im wesentlichen geradlinig entlang der Längserstreckung der beiden miteinander verschweißten Lichtwellenleiter AlW, CLW zum Steckerschaft STS2 geführt. Die Zugentlastungselemente KEV erstrecken sich also von ihrem Austrittsort aus dem Kabelmantel des Lichtwellenleiterkabels CA bis zum Steckerschaft STS2. Die Zugentlastungselemente KEV werden vorzugsweise auf eine solche Länge geschnitten, daß sie geradlinig gespannt bis zum Ansatzring RI reichen. Sie werden dabei durch die Crimphülse CH hindurch gefädelt bzw. hindurchgeschoben und auf den Crimpansatz CRA2 des Steckerschaftes STS2 aufgelegt. Anschließend wird die Crimphülse CH über den Crimpansatz CRA2 geschoben und auf diesem fest aufgecrimpt. Auf diese Weise werden die Zugentlastungselemente KEV auf dem Crimpansatz CRA2 des Steckers ST2 fest aufgepreßt und dort festgehalten. Der Anschlagring RI bildet dabei einen festen Längs-Anschlag für die Crimphülse CR, so daß diese bezüglich ihrer Außenkonturen mit dem Ansatz- bzw. Feststellring RI in axialer Richtung weitgehend bündig abschließt. Die Crimphülse CR kann sich am Ansatzring RI in Kabellängsrichtung abstützen. Zum Befestigen der Zugentlastungselemente KEV am Stecker ST2 werden die Zugentlastungselemente KEV zweckmäßigerweise möglichst gleichmäßig rings um den Außenumfang der Lichtwellenleiter ALW, CLW angeordnet, so daß sich eine Art Zugentlastungshülle rings um die miteinander verschweißten Lichtwellenleiter ALW, CLW bereitstellen läßt. Diese Montagearbeiten veranschaulicht Figur 13 in schematischer Darstellung. Zweckmäßigerweise wird für die miteinander verschweißten Lichtwellenleiter ALW, CLW eine größere Gesamtlänge im Bereich zwischen dem Stecker ST2 und der Abbruchkante des Außenmantels AM des Lichtwellenleiterkabels CA als für die Zugentlastungselemente KEV gewählt. Mit anderen Worten heißt das, daß die beiden miteinander verschweißten Lichtwellenleiter ALW, CLW gegenüber den Zugentlastungselementen KEV eine Überlänge aufweisen.

Dadurch, daß die Zugentlastungselemente KEV des Lichtwellenleiterkabels CA über die Spleißstelle SS hinweg zum Stecker ST2 geführt und an diesen befestigt werden, wird für die Spleißstelle sowie den Stecker eine Zugabfangung bereitgestellt. Greift etwa eine Zugkraft am Stecker ST2 an, so wird diese über die gespannten Zugentlastungselemente KEV in Kabellängsrichtung abgeleitet. Unzulässig hohe Zugbeanspruchungen der Spleißstelle SS sind dadurch in zuverlässiger Weise vermieden. Der derart mit einer Zugabfangung versehene Steckeranschluß wird schließlich aus der Montagevorrichtung MH von Figur 13 herausgenommen.

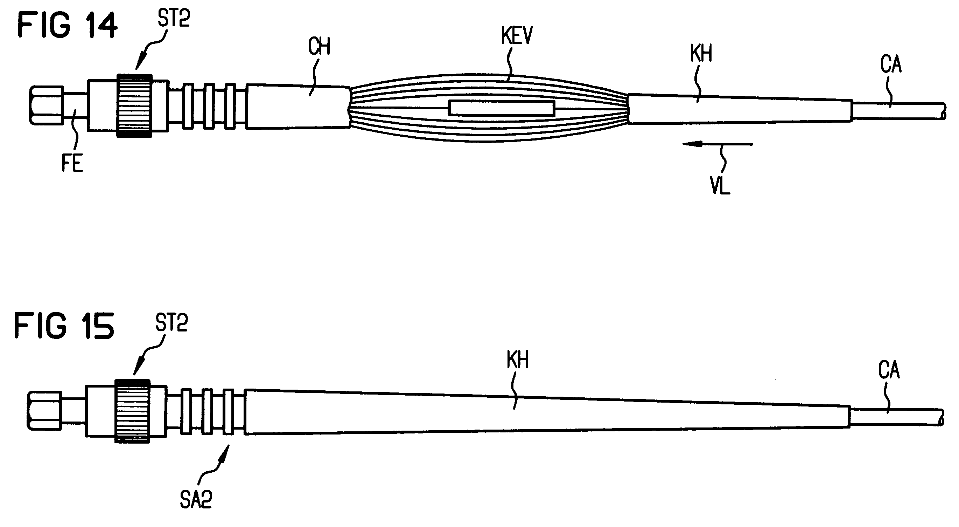

Nach dem Befestigen der Zugentlastungselemente KEV mit Hilfe der Crimphülse CR am Steckerschaft STS2 wird schließlich außen noch die Knickschutztülle KH aufgezogen, die ja beim Vorpräparieren des Lichtwellenleiterkabels CA über dessen Außenmantel AM vorrätig übergeschoben worden war. Das Vorziehen der Knickschutzhülle KH bis zum Steckerkopf SK2 ist in der Figur 14 durch einen Bewegungspfeil VL angedeutet. Die Knickschutztülle KH ist vorzugsweise kreiszylinderförmig ausgebildet. Sie kann vorzugsweise innenseitig mit einem Klebstoff oder Schmelzkleber beschichtet sein, so daß sie auf dem Steckerschaft STS2 sowie dem Kabelaußenmantel AM haften bleibt. Die Knickschutztülle KH wird vorzugsweise bis zur Abbruchkante des Steckerkopfes SK vorgezogen, so daß sie dort bündig abschließt. Die Knickschutzhülse KH erstreckt sich vorzugsweise vom Steckerkopf SK2 zumindest bis zum Beginn des Außenmantels AM des angeschlossenen Lichtwellenleiterkabels CA. Die Knickschutzhülse weist vorzugsweise eine Längserstreckung von mindestens 80 mm, insbesondere zwischen 80 und 200 mm, bevorzugt von etwa 120 mm auf. Zweckmäßigerweise ist für die Knickschutzhülse ein flexibler, weiches Kunststoffmaterial gewählt, um im Übergangsbereich zwischen dem starren Steckergehäuse und dem Lichtwellenleiterkabel CA eine ausreichende Biegsamkeit sicherstellen zu können. Für die Knickschutzhülse KH ist vorzugsweise ein Kunststoffmaterial, wie zum Beispiel Polyäthylen gewählt.

Die Knickschutzhülle KH deckt also die beiden miteinander verschweißten Lichtwellenleiter ALW, CLW, deren Spleißschutzhülse SU und die über sie hinweggeführten zugentlastungselemente KEV von außen insgesamt ab. Figur 15 zeigt den sich dann ergebenden, fertigen Steckeranschluß SA2 für das Lichtwellenleiterkabel CA.

Die Länge des aus dem Stecker heraushängenden Anschlußlichtwellenleiters wird zweckmäßigerweise derart gewählt, daß dessen Spleißstelle mit dem anzuschweißenden Kabellichtwellenleiter nicht unmittelbar im Bereich des Steckerschaftendes liegt, sondern außerhalb der Knickgefährdungszone des Steckeranschlusses. Je näher nämlich die Spleißstelle an das starre Steckerschaftende heranrücken würde, desto größer würde die Gefahr einer Überbeanspruchung durch Abknicken. Um unzulässig hohe Knickkräfte auf die Spleißstelle möglichst zu vermeiden, wird die Länge des Anschlußlichtwellenleiters ALW zweckmäßigerweise mindestens 50 mm, insbesondere zwischen 50 und 100 mm, bevorzugt um etwa 65 mm gewählt. Mit anderen Worten heißt das, daß die Spleißstelle mindestens 50 mm, insbesondere zwischen 50 und 100 mm vom Steckerschaftende entfernt gewählt wird.

Im Unterschied zum ersten vorteilhaften Steckeranschlußprinzip gemäß den Figuren 1 mit 6 kann zur Herstellung des Steckeranschlusses nach den Figuren 7 mit 15 die Beschichtungsvorrichtung zur Wiederbeschichtung der Lichtleitfasern in vorteilhafter Weise entfallen. Anstelle dessen wird hier in vorteilhafter Weise eine Spleißschutzhülse unmittelbar über die Spleißstelle sowie die freigelegten Lichtleitfasern nach Fertigstellung der Spleißstelle übergezogen. Dies erleichtert die Montagearbeiten. Denn der Steckeranschluß kann insbesondere mit den gewöhnlichen, bereits vorhandenen Komponenten eines konventionellen Lichtwellenleiterspleißgeräts bekannter Bauart gefertigt werden.

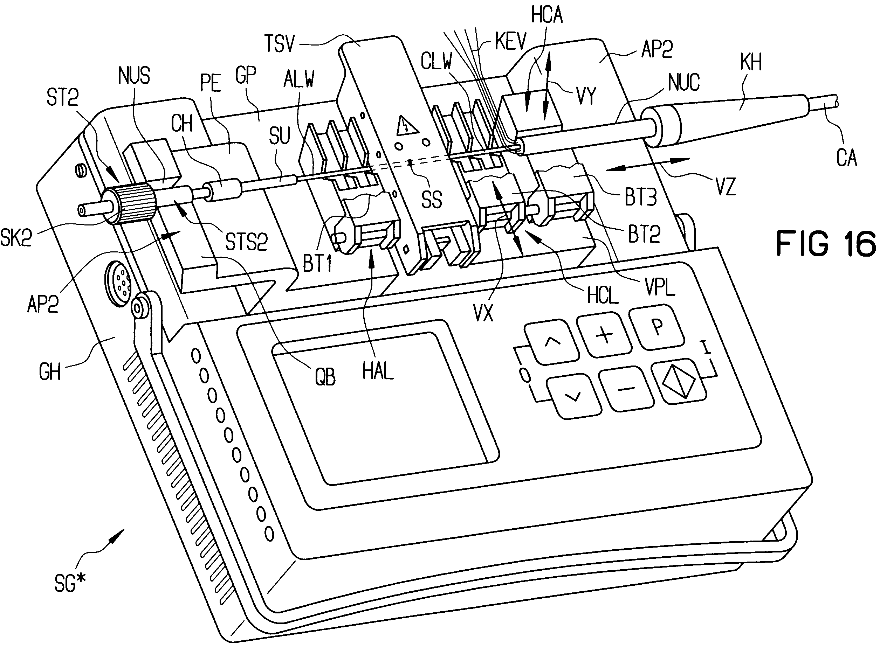

Figur 16 zeigt schematisch in perspektivischer Darstellung ein Lichtwellenleiter-Spleißgerät SG*, das gegenüber dem Spleißgerät SG von Figur 11 modifizierte Aufnahme- bzw. Haltevorrichtungen für den Stecker ST2, dessen Anschlußlichtwellenleiter ALW, dem anzuschließenden Lichtwellenleiterkabel CA sowie dessen herausgelösten Lichtwellenleiter CLW aufweist.

Zur besseren Veranschaulichung, wie der Stecker ST2 mit seinem heraushängenden Anschlußlichtwellenleiter ALW, der anzuschließende, herausgelöste Lichtwellenleiter CLW des Kabels CA, sowie das vollummantelte Kabelende CA selbst von den Haltevorrichtungen des Spleißgeräts aufgenommen werden, sind die Haltevorrichtungen bzw. Aufnahmevorrichtungen AP2, HAL, HCL, HCA jeweils ohne Deckel gezeichnet. Die Schweißvorrichtung TSV ist in der Figur 16 als Klappe ausgebildet, die sich über die Spleißstelle SS der beiden miteinander zu verschweißenden Lichtwellenleiter ALW, CLW schwenken läßt. Sie ist in ihrer Schweißposition abgebildet. Sie ist vorzugsweise etwa in der Mitte des Arbeitstisches GP positioniert.

Alle Haltevorrichtungen sind gegenüber dem planen Arbeitstisch GP des Spleißgeräts SG* in Y-Richtung erhöht. Im linken Teil des Arbeitstisches AT des Spleißgerätes SG* ist die Steckerablage AP2 vorgesehen. Sie ist dort vorzugsweise austauschbar montiert, um für verschiedene Steckertypen sowie Steckergrößen jeweils eine entsprechend angepaßte Steckerablage anbringen zu können. Sie weist außenseitig, d.h. spleißstellenabgewandt einen lateral verlaufenden Querbacken GB mit einer Längsnut NUS auf, in der der Steckerschaft STS2 vorzugsweise weitgehend formschlüssig gehalten ist. Der Querbacken QB bildet dabei eine Erhöhung gegenüber der ansonsten weitgehend planen Ablagebene PE der Steckerablage AP2, auf der der Anschlußlichtwellenleiter ALW frei beweglich abgelegt ist. Der Steckerkopf SK2 steht spleißstellenabgewandt frei aus dem Querbacken QB ab. Da er einen größeren Außendurchmesser als der Steckerschaft STS2 aufweist, ist für den Stecker ST2 in Richtung auf die Spleißstelle SS zu durch die Außenseite des Querbackens QB eine axiale Arretierung gegen Verschieben in z-Richtung auf die Spleißstelle SS zu bewirkt. Die Steckerablage AP2 ist vorzugsweise ortsfest, d.h in x,y,z-Richtung unbeweglich angebracht. Sie schließt vorzugsweise bündig mit dem Außenrand des Spleißgerät-Gehäuses GH ab.

In Richtung auf die Schweißvorrichtung TSV zu ist die Haltevorrichtung HAL für den Anschlußlichtwellenleiter ALW mit Längsabstand zur Steckerablage AP2 auf dem Arbeitstisch GP angebracht. Sie ist unmittelbar, d.h. bündig neben der Schweißvorrichtung TSV positioniert. Auf diese Weise ist im Zwischenraum zwischen dem Querbacken QB der Steckerablage AP2 und der Haltevorrichtung HAL genügend Platz vorhanden, um dort auf dem Anschlußlichtwellenleiter ALW die Crimphülse CH sowie die Spleißschutzhülle SU vorrätig zu halten. Die Crimphülse CH sowie die Spleißschutzhülle SU sind dabei in Längsrichtung des Anschlußlichtwellenleiters ALW nebeneinander angeordnet. Die Crimphülse CH sitzt bezogen auf die Spleißstelle SS auf dem Anschlußlichtwellenleiter ALW weiter außen als die Spleißschutzhülle SU, d.h. die Crimphülse hat eine Position näher am Stecker ST2. Auf der anderen, hier rechten Seite der Schweißvorrichtung TSV ist die Haltevorrichtung HCL annäherungsweise achssymmetrisch zur Haltevorrichtung HAL die Haltevorrichtung HCL angeordnet. Bezogen auf die Ortsposition der Schweißvorrichtung TSV ist die Haltevorrichtung HCA für das Lichtwellenleiterkabel CA in Kabellängsrichtung betrachtet weiter außen als die Haltevorrichtung HCL plaziert.

Sie dient der Lage-Fixierung bzw. dem Festklemmen des vollummantelten Kabels CH sowie dessen Zugentlastungselemente EV. Zur besseren Führung des Kabels CA ist im Bereich des rechten Außenrands des Spleißgeräte-Gehäuses GH eine zusätzliche tischartige Kabelablage AP2 vorgesehen, in deren Längsnut NUC das Kabel CA formschlüssig eingelegt werden kann. Dazu ist die Innenkontur der halbkreiszylindrischen Längsnut NUC zweckmäßigerweise etwa gleich der umfaßten Außenkontur des Kabelaußenmantels AM gewählt. Die Knickschutzhülle KH ist schließlich außerhalb des Spleißgeräts SG* auf dem Kabel CA vorrätig gehalten. Bei diesem modifizierten Spleißgerät SG* sind insbesondere lediglich die Steckerablage AP2, die Haltevorrichtung HCH für das Kabel CA sowie die Kabelablage AP2 gegenüber den üblichen Komponenten eines Spleißgeräts herkömmlicher Bauart zusätzlich vorgesehen. Sie sind vorzugsweise austauschbar auf dem Arbeitstisch GP des Spleißgerätes montiert, um für unterschiedliche Steckertypen, insbesondere Steckergrößen, sowie für unterschiedliche Kabeltypen, insbesondere Kabelaußendurchmesser, Module mit entsprechend großen, angepaßten Aufnahme-Längsnuten bereitstellen zu können.

Die beidseitig der Schweißvorrichtung TSV - vorzugsweise weitgehend achssymmetrisch - angeordneten Haltevorrichtungen HAL, HCL sowie die Schweißvorrichtung selbst können hingegen in vorteilhafterweise als Standard-Komponenten eines bisherigen Spleißgerätes wie gehabt, d.h. ohne baulichen Modifikationen, beibehalten werden. Auf diese Weise kann ein herkömmliches Spleißgerät in einfacher Weise so baulich ergänzt werden, daß die Anfertigung des erfindungsgemäßen Steckeranschlusses möglich wird.

In der Figur 16 ist im Unterschied zu Figur 11 sowohl die Haltevorrichtung HCL als auch die Haltevorrichtung HCA auf einem gemeinsamen Schlitten VPL angebracht, der in z-Richtung verschiebbar ist. Auch kann es ggf. zweckmäßig sein, die Haltevorrichtung HAL in z-Richtung verschiebbar auszubilden.

Insbesondere kann es zweckmäßig sein, im Gegensatz zu Figur 11 z.B. der Haltevorrichtung HCL in x-Richtung, der Haltevorrichtung HCA hingegen auch lediglich in y-Richtung eine laterale Verschiebebewegung zuzulassen, was jeweils durch zugehörige Doppelpfeile VX, VV, angedeutet ist.

Der erfindungsgemäße Steckeranschluß erlaubt insbesondere die einfache sowie zuverlässige Konfektion verschiedener Lichtwellenleiterkabeltypen mit unterschiedlichen Steckertypen nach dem selben Grundprinzip. Unter dem Begriff Lichtwellenleiterkabel wird dabei mindestens ein Lichtwellenleiter verstanden, entlang dem mindestens ein Zugentlastungselement verläuft. Das jeweilige Zugentlastungselement kann so z.B. bereits durch eine zugfeste Kunststoffhülle gebildet sein, die den jeweils anzuschließenden Lichtwellenleiter umgibt. Als Zugentlastungselement kommt beispielsweise auch ein Reißfaden oder ein sonstiges zugfestes Umhüllungselement in Frage, das dem jeweils anzuschließenden Lichtwellenleiter entlangläuft.

Einer Weiterbildung der Erfindung liegt insbesondere die weitere Aufgabe zugrunde, einen Weg aufzuzeigen, wie in einfacher und zuverlässiger Weise ein Stecker an einem Lichtwellenleiterkabel angebracht werden kann. Diese Aufgabe wird insbesondere dadurch gelöst, daß auf das Lichtwellenleiterkabel eine Steckerhülse soweit aufgeschoben wird, daß ein vorgebbarer Endabschnitt des Lichtwellenleiterkabels stirnseitig aus der Steckerhülse heraussteht, daß aus diesem hervorstehenden Endabschnitt des Lichtwellenleiterkabels mindestens eine Lichtleitfaser auf einer vorgebbaren Länge freigelegt wird, daß mindestens eine Anschlußlichtleitfaser in einem separaten Steckerstift vorbereitet gehalten wird und aus diesem mit einem vorgebbaren Längsabschnitt heraushängt, daß die aus der Steckerhülse herausstehende Lichtleitfaser des Lichtwellenleiterkabels und die aus dem Steckerstift heraushängende, zugeordnete Anschlußlichtleitfaser stirnseitig aufeinander ausgerichtet und an einer frei zugänglichen Spleißstelle außerhalb der Steckerhülse und des Steckerstiftes miteinander verspleißt werden, daß nach Herstellung der Spleißstelle die Steckerhülse über die miteinander verspleißten Lichtleitfasern geschoben wird, und daß dann erst der Steckerstift in die Steckerhülse unter Bildung eines Steckers eingesteckt wird.

Dadurch kann in vorteilhafter Weise ein Stecker an ein Lichtwellenleiterkabel unter einer Vielzahl praktischer Gegebenheiten in einfacher und zuverlässiger Weise montiert werden. Da die Spleißstelle zwischen der anzuschließenden Lichtleitfaser des Lichtwellenleiterkabels und der Anschlußlichtleitfaser des Steckerstifts frei zugänglich gehalten werden kann, wird der Spleißvorgang zwischen diesen beiden Lichtleitfasern vereinfacht. Da der Stecker erst nach Fertigstellung der Spleißstelle zusammenmontiert wird, wird das Anschließen des Steckers an das Lichtwellenleiterkabel aufgrund der verbesserten Handhabung vereinfacht.

Eine weitere Weiterbildung der Erfindung betrifft auch einen Steckeranschluß für mindestens einen Lichtwellenleiter eines Lichtwellenleiterkabels unter Verwendung eines Steckers, welcher insbesondere dadurch gekennzeichnet ist, daß eine Steckerhülse vorgesehen ist, die sich soweit auf das Lichtwellenleiterkabel aufschieben läßt, daß ein vorgebbarer Endabschnitt des Lichtwellenleiterkabels stirnseitig aus der steckerhülse heraussteht, daß ein separater Steckerstift vorgesehen ist, in dem mindestens eine Anschlußlichtleitfaser vorbereitet gehalten ist und aus diesem mit einem vorgebbaren Längsabschnitt heraushängt, und daß der Steckerstift in die Steckerhülse unter Bildung eines optischen Steckers derart einsteckbar ist, daß die Steckerhülse die Anschlußlichtleitfaser und mindestens eine aus dem Lichtwellenleiterkabel herausgelöste Lichtleitfaser nach deren Verspleißung von außen umgibt.

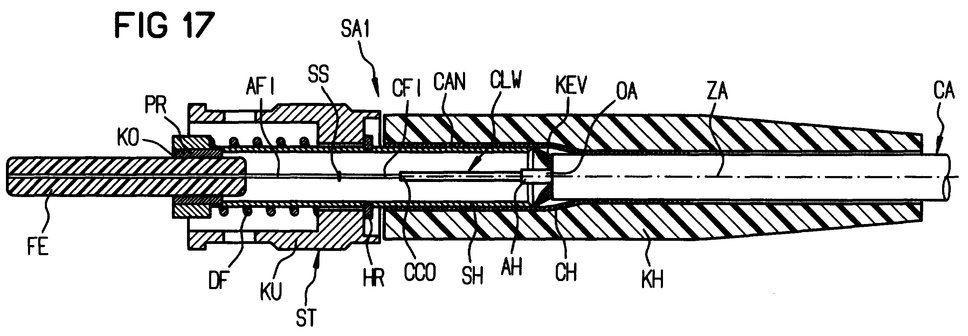

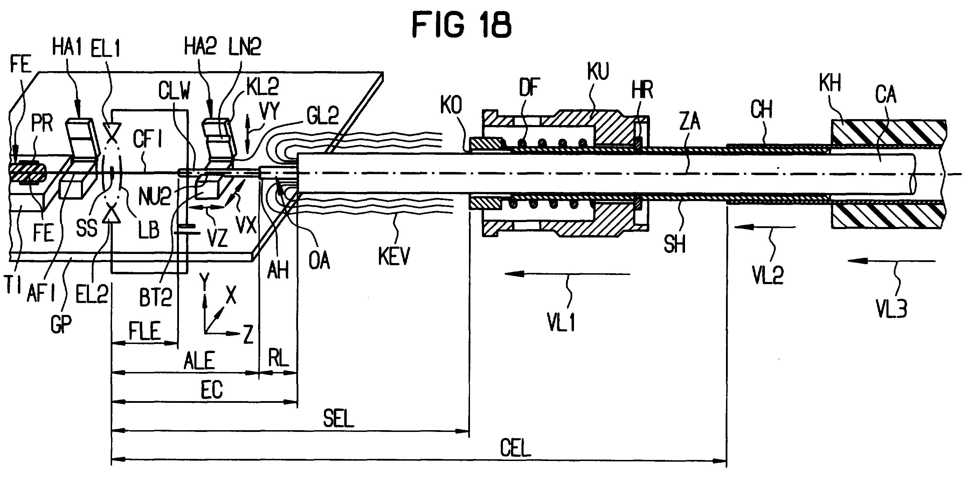

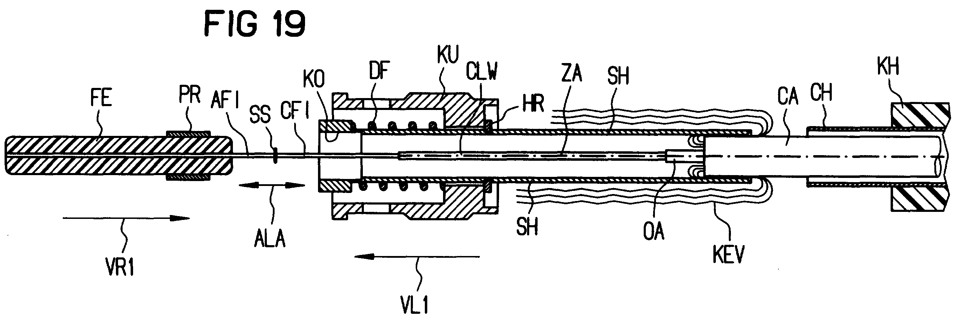

Figur 17 zeigt in schematischer sowie vergrößerter Längsschnittdarstellung einen ersten, bereits fertigen Steckeranschluß SA1 für ein Lichtwellenleiterkabel CA unter Verwendung eines Lichtwellenleitersteckers ST. Mit Hilfe welcher Montageschritte das Lichtwellenleiterkabel CA mit dem Lichtwellenleiterstecker ST konfektioniert, d.h. endseitig bestückt bzw. abgeschlossen werden kann, veranschaulichen dabei die Figuren 18 sowie 19 jeweils in schematischer sowie vergrößerter Darstellung.

Das Lichtwellenleiterkabel CA ist vorzugsweise als eine Art optischer Festader ausgebildet. Es weist etwa in seinem Zentrum eine einzelne optische Ader OA auf. Diese optische Ader OA ist durch einen Lichtwellenleiter CLW gebildet, der mit einer Kunststoffhülle AH zusätzlich überzogen ist. gewählt. Der Lichtwellenleiter CLW selbst weist in seinem Inneren eine einzelne Lichtleitfaser CFI auf, die sich entlang seiner gedachten, in der Figur 17 strichpunktiert eingezeichneten Zentralachse ZA erstreckt. Für diese Lichtleitfaser CFI ist insbesondere eine sogenannte Monomodefaser verwendet. Auf dem Mantelglas dieser Lichtleitfaser CFI ist mindestens eine sie rundum umgebende Kunststoffschicht CCO, insbesondere ein sogenanntes primäres und sekundäres Coating aufgebracht. Auf der optischen Ader OA sitzt ein ein- oder mehrschichtiger Kabelaußenmantel AM fest auf. Der Kabelaußenmantel AM ist vorzugsweise durch eine extrudierte Kunststoffummantelung gebildet, in der eine Vielzahl von Zugentlastungselementen KEV eingelagert ist. Die Zugentlastungselemente KEV sind dabei vorzugsweise in Form von mindestens einer Hülle um die optische Ader OA im Kabelaußenmantel AM angeordnet. Insbesondere sind die Zugentlastungselemente KEV auf der Außenoberfläche der optischen Ader OA ein- oder mehrschichtig aufgelegt. Sie verlaufen vorzugsweise in Kabellängsrichtung. Die Zugentlastungselemente KEV sind vorzugsweise durch Verstärkungsfasern, insbesondere Kevlarfäden oder Aramidgarne gebildet. Die Lichtleitfaser CFI ist vorzugsweise etwa kreiszylinderförmig ausgebildet. Radial von innen nach außen betrachtet ist sie von ihren Coating-Schichten CCO, der Ader-Kunststoffhülle AH, den ein oder mehreren Lagen von Zugentlastungselementen sowie dem Kabelaußenmantel AM jeweils im wesentlichen konzentrisch umgeben. Diese Umhüllungen CCO, AH, KEV sowie AM sind dabei vorzugsweise im wesentlichen rohrförmig, insbesondere kreiszylinderförmig ausgebildet. Solche Lichtwellenleiterkabelaufbauten weisen in der Praxis einen Außendurchmesser vorzugsweise zwischen 2 und 10 mm, insbesondere um etwa 3 mm auf.

Zur Konfektionierung dieses Lichtwellenleiterkabels CA mit dem Stecker ST wird zunächst in einem ersten Schritt vorab mindestens eine Abdeckhülle bzw. Abdeckhülse über das freie Ende des noch unpräparierten Lichtwellenleiterkabels CA auf dessen Außenmantel AM zusätzlich übergeschoben. In der Figur 18 ist beispielhaft sowohl eine Crimphülse CH als auch eine Knickschutzhülle KH auf dem Außenmantel AM des Lichtwellenleiterkabels CA vorrätig aufgebracht. Der zeichnerischen Einfachheit halber sind dabei jeweils die Crimphülse CH sowie die Knickschutzhülle KH lediglich entlang einer Teillänge ihrer Gesamtlängserstreckung gezeichnet. Die Crimphülse CH sowie die Knickschutzhülle KH sind jeweils im wesentlichen kreiszylinderförmig ausgebildet, wobei sie annäherungsweise konzentrisch das Lichtwellenleiterkabel CA umgeben. Die Knickschutzhülle KH weist zweckmäßigerweise einen größeren Innendurchmesser als die Crimphülse CH auf, so daß sie sich über die Crimphülse CH schieben läßt. Die Crimphülse CH sowie die Knickschutzhülle KH werden zweckmäßigerweise so weit auf das Lichtwellenleiterkabel CA aufgeschoben, daß eine vorgebbare Endlänge CEL des Kabels CA für einen Monteur oder eine Bedienperson frei zugänglich ist.

Nach dem Aufziehen der Crimphülse CH sowie der Knickschutzhülle KH über das Lichtwellenleiterkabel CA wird schließlich eine Steckerhülse SH vom freien Ende des Lichtwellenleiterkabels CA her auf dessen Außenmantel AM aufgeschoben. Diese Steckerhülse SH ist rohrförmig, insbesondere in erster Näherung kreiszylinderförmig ausgebildet. Sie erstreckt sich in erster Näherung geradlinig. Ihr Außendurchmesser ist kleiner als der Innendurchmesser der rohrförmigen Crimphülse CH gewählt, so daß sie sich in die Crimphülse CH hineinschieben läßt. Die Steckerhülse SH weist an ihrem, dem freien Ende des Lichtwellenleiterkabels CA zugewandten Ende außen ein Kupplungsteil KU zum späteren Ankoppeln an eine korrespondierende Steckerbuchse bekannter Bauart auf. Das Kupplungsteil KU ist mit einer Druckfeder DF in axialer Richtung, d.h.entlang der Längserstreckung der Steckerhülse SH federbelastet. Es stützt sich an einem Haltering HR, der am Außenumfang der Steckerhülse SH fest angebracht ist, in axialer Richtung ab. Die Steckerhülse SH, die Crimphülse CH sowie die Knickschutzhülse KH werden zweckmäßigerweise soweit auf das Lichtwellenleiterkabel CA aufgeschoben, daß eine vorgebbare Endlänge SEL (vgl. Figur 18) des Lichtwellenleiterkabels CA aus der Steckerhülse SH frei nach außen heraushängt.

In einem nächsten Verfahrensschritt wird der aus der Steckerhülse SH hervorstehende Endabschnitt SEL des Lichtwellenleiterkabels CA schichtenweise von außen nach innen entmantelt. Im einzelnen wird dabei der Außenmantel AM, insbesondere die Kunststoffummantelung des Kabels CA endseitig entlang einem vorgebbaren Längsabschnitt EC abgesetzt. Vorzugsweise wird der Kabelaußenmantel AM entlang einer Endlänge EC zwischen 40 und 60 mm vom freien Kabelende her entfernt. Durch das Absetzen des Kabelmantels AM wird unmittelbar darunter die Vielzahl von Zugentlastungselementen KEV freigelegt, die die Kunststoffaußenhülle AH der einzelnen optischen Ader OA bedecken. Diese entlang der vorgegebenen Abmantellänge freigelegten Zugentlastungselemente KEV werden zweckmäßigerweise vom Kabelende weg in entgegengesetzter Längsrichtung des Kabels CA in Richtung auf dessen Außenmantel AM zurückgelegt. Sie werden insbesondere unmittelbar bei ihrem Austritt aus dem Kunststoffaußenmantel AM, das heißt bei dessen Abbruchkante zur freigelegten optischen Ader OA um etwa 180° aus ihrem Parallelverlauf zur strichpunktiert angedeuteten Kabelzentralachse ZA vom Kabelende weg zurückgebogen. Anschließend wird vom stirnseitigen Ende der optischen Ader OA her deren Kunststoffaußenhülle AH entlang einer vorgebbaren Endlänge ALE abgesetzt. Dabei bleibt eine Restlänge RL der aus dem Kabelaußenmantel AM herausgelösten optischen Ader OA von der Kunststoffaußenhülle AH weiterhin ummantelt. Auf diese Weise bildet die aus dem Außenmantel AM des Kabels CA herausstehende Restlänge RL der Aderaußenhülle AH eine Art Ansatzstück, das die spätere, mechanische Längsankopplung und Befestigung der langgestreckten Steckerhülse SH am Lichtwellenleiterkabel CA vereinfacht. Durch Absetzen der Aderaußenhülle AH wird der einzelne Lichtwellenleiter CLW freigelegt, der im wesentlichen entlang der Zentralachse ZA des Lichtwellenleiterkabels CA verläuft.

Mit folgenden Bemaßungen wird das Kabelende zweckmäßigerweise anspleißfertig gemacht:

Für die Kunststoff-Außenhülle AH der optischen Ader OA wird vorzugsweise eine Restlänge RL zwischen 2 und 5 mm auf der herausgelösten Ader OA belassen. Für den Lichtwellenleiter CLW wird vorzugsweise von der Abbruchkante der Aderaußenhülle AH bis zur Stirnseite seiner Lichtleitfaser CFI eine Endlänge ALE zwischen 10 und 30 mm, insbesondere zwischen 10 und 20 mm, bevorzugt von etwa 15 mm gewählt.

Vorzugsweise wird der Lichtwellenleiter CLW aus den Kabelumhüllungen AM, AH auf einer solch großen Länge herausgelöst, daß dieser freigelegte Lichtwellenleiterabschnitt in die Aufnahmen (Manipulatoren) eines Lichtwellenleiterschweißgeräts bekannter Bauart eingelegt werden kann. Figur 18 veranschaulicht diesen Montagezustand des Lichtwellenleiterkabels CA. Dort ist der Lichtwellenleiter CLW in eine Haltevorrichtung HA2 bekannter Bauart (wie zum Beispiel Manipulatoren) einer Schweißvorrichtung SV gehalten und lagefixiert. Die Schweißvorrichtung SV ist dabei vorzugsweise Bestandteil eines Lichtwellenleiterschweißgeräts. Zur besseren Veranschaulichung der Fixierwirkung der Haltevorrichtung HA2 ist diese in geöffnetem Zustand gezeichnet. Sie weist ein Basisteil BT2 auf, auf dessen Oberseite eine Längsnut NU2 eingelassen ist. In die Längsnut NU2 ist der gecoatete (= kunststoffbeschichtete) Lichtwellenleiter CLW eingelegt. Am Basisteil BT2 ist über ein Gelenk GL2, Scharnier oder dergleichen eine Klappe KL2 angebracht, die in Richtung auf das Basisteil BT2 zu schwenkbar ist. Auf der Innenseite der Klappe KL2 bzw. des Deckels ist eine Längsnut LN2 örtlich korrespondierend zur Längsnut NU2 im Basisteil BT2 vorgesehen. Nach Schließen der Haltevorrichtung HA2 wird somit der Lichtwellenleiter CL2 zwischen dem Basisteil BT2 und dem Deckel bzw. Oberteil KL2 eingeklemmt und dort festgehalten.

Zweckmäßigerweise wird der Lichtwellenleiter CLW vor dem Einlegen in die Halteeinrichtung HA2 von seiner Stirnseite her entlang einer vorgebbaren Teillänge FLE von seiner äußeren Kunststoffbeschichtung CCO, insbesondere seinem primären und sekundären Coating befreit, so daß dort entlang einem vorgebbaren Endabschnitt FLE seine Lichtleitfaser CFI blank frei liegt. Dieser Verfahrensschritt schließt vorzugsweise eine stirnseitige Präparation der Lichtleitfaser CFI zu einer annäherungsweise 90° Abbruchfläche in Bezug auf ihre Faserlängsachse mit ein. Dabei wird die freigelegte Lichtleitfaser CFI durch end- bzw. stirnseitiges Abtrennen auf eine vorgebbare Endlänge gebracht. Das Absetzen des Fasercoatings erfolgt zweckmäßigerweise derart, daß der Lichtwellenleiter CLW im Bereich der Abbruchkante der Aderaußenhülle AH entlang einer Restlänge mit dem Fasercoating beschichtet bleibt. Im spleißfertigen Zustand des Kabelendes liegt die Lichtleitfaser CFI vorzugsweise auf einer Länge zwischen 5 und 10 mm blank. Vorzugsweise weist die aus der Aderhülle AH herausstehende Lichtleitfaser CFI von der Abbruchkante der Aderhülle AH zur Faserstirnseite gesehen einen restlichen, gecoateten Längsabschnitt zwischen 10 und 20 mm, insbesondere zwischen 7 und 12 mm auf.

Vor oder nach dem Einlegen des Lichtwellenleiterkabels CA in das Lichtwellenleiterschweißgerät SV wird dorthinein auch ein Steckerstift FE eingelegt, aus dem eine Lichtleitfaser AFI frei heraushängt. Dazu wird der Steckerstift FE auf einen Tisch TI abgelegt, der in der linken Bildhälfte von Figur 18 dargestellt ist. Dieser Steckerstift FE kann gegebenenfalls auch in einer Haltevorrichtung fixiert werden, die entsprechend der Haltevorrichtung HA2 ausgebildet ist. Der Steckerstift FE wird in der Schweißvorrichtung SV dem Kabelende gegenüberliegend positioniert. Als Steckerstift ist vorzugsweise eine sogenannte Ferrule verwendet. Für eine solche Ferrule eignet sich als Werkstoff insbesondere Keramik, Kunststoff, wie z.B. Komposite ®, Zᵣ0 (= Zirkoniumoxyd)-Keramik,usw..

Der Steckerstift FE weist entlang seiner Zentralachse eine durchgehende, das heißt sich von der einen zur anderen Stirnseite erstreckende Zentralbohrung auf, in die die Lichtleitfaser CFI eingelegt und dort fixiert ist. Vorzugsweise ist die Lichtleitfaser CFI in die Zentralbohrung des Steckerstifts FE eingeklebt. Insbesondere ist der Steckerstift FE mit der Anschlußlichtleitfaser AFI bereits werksseitig vorkonfektioniert. Das Bestücken des Steckerstifts FE mit der Anschlußlichtleitfaser AFI kann somit unter Fabrikbedingungen erfolgen, was eine hohe Fertigungsqualität sicherstellt. Insbesondere ist es weitgehend sichergestellt, daß die Lichtleitfaser AFI im Steckerstift FE im wesentlichen zentrisch sowie ohne Beschädigungen untergebracht werden kann. Buchsenanschlußseitig kann die Anschlußlichtleitfaser CFI im Steckerstift FE an ihrer Stirnseite bereits werksseitig vorgeschliffen und vorpoliert worden werden, so daß weitere Präparationsmaßnahmen im Feldeinsatz vermieden sind.

Die Anschlußlichtleitfaser AFI wird also im separaten Steckerstift FE vorbereitet gehalten. Sie hängt aus diesem Steckerstift FE kabelanschlußseitig mit einer vorgebbaren Endlänge ALA heraus. Sie steht vorzugsweise auf einer solch großen Länge heraus, daß sie in die Aufnahmen bzw. Haltevorrichtungen (wie zum Beispiel Manipulatoren) eines Lichtwellenleiterschweißgeräts bekannter Bauart wie z.B. SV von Figur 18 eingelegt werden kann. Vorzugsweise hängt die Anschlußlichtleitfaser AFI aus dem kabelanschlußseitigen Ende des Steckerstifts FE auf einer Länge zwischen 10 und 60 mm heraus. In der Figur 18 wird diese Anschlußlichtleitfaser in einer Haltevorrichtung HA1 bekannter Bauart (wie zum Beispiel einem Manipulator) in der Lage positioniert und festgehalten. Die Haltevorrichtung HA1 ist dabei zweckmäßigerweise entsprechend der Haltevorrichtung HA2 für den Lichtwellenleiter CLW des endseitig zu konfektionierenden Lichtwellenleiterkabels CA ausgebildet. Sowohl die Anschlußlichtleitfaser AFI als auch die an sie anzuspleißende, insbesondere anzuschweißende Lichtleitfaser CFI stehen aus ihren zugehörigen Haltevorrichtungen HA1, HA2 jeweils mit einer vorgebbaren Endlänge frei heraus. Sie werden mit Hilfe dieser Haltevorrichtungen HA1, HA2 derart positioniert, daß sie sich entlang einer gedachten Geradenlinie wie zum Beispiel entlang ihren Längsachsen ZA möglichst aufeinander fluchtend gegenüber stehen. Um die beiden Lichtleitfasern AFI, CFI stirnseitig miteinander kontaktieren zu können, ist zumindest eine der beiden Haltevorrichtungen HA1, HA2 entlang dieser gedachten Fluchtlinie ZA längsverschiebbar. Zweckmäßigerweise ist mindestens eine der beiden Haltevorrichtungen HA1, HA2 auch in mindestens eine Raumrichtung quer, insbesondere senkrecht zur jeweiligen Faserlängsachse verschiebbar ausgebildet.

Im vorliegenden Beispiel ist angenommen, daß die Haltevorrichtung HA2 für den Lichtwellenleiter CLW des Lichtwellenleiterkabels CA Bewegungen in alle drei Raumrichtungen, nämlich X, Y, Z eines kartesischen Koordinatensystems zuläßt. Die Raumrichtung Z gibt dabei eine Längsrichtung parallel zur gewünschten Fluchtlinie ZA vor, entlang der sich die Anschlußlichtleitfaser AFI sowie die Lichtleitfaser CFI ausrichten lassen. Entlang der Z-Richtung lassen sich die beiden Lichtleitfasern AFI, CFI aufeinander zu oder voneinander wegfahren. Insbesondere entspricht die Z-Richtung der gewünschten Ausrichtlinie der beiden Lichtleitfasern. Die Raumrichtung X verläuft in Querrichtung zur Längserstreckung der beiden Lichtleitfasern, insbesondere senkrecht, das heißt orthogonal zur Raumrichtung Z. Die beiden Haltevorrichtungen HA1, HA2 sind auf einer gemeinsamen Grundplatte GP angeordnet. Die Halteeinrichtung HA1 ist dabei auf der Grundplatte GP fest, das heißt unbeweglich angebracht, während die Haltevorrichtung HA2 Verschiebebewegungen in alle drei Raumrichtungen X, Y, Z zuläßt. Die plane Grundplatte GP liegt insbesondere parallel zu der von der X- sowie Z-Raumrichtung aufgespannten Ebene. Die Raumrichtung Y steht senkrecht zu dieser X-, Z-Ebene, das heißt sie verläuft nach oben oder unten. Die verschiedenen Bewegungsmöglichkeiten der Haltevorrichtung HA2 in die drei Raumrichtungen X, Y oder Z sind jeweils durch Bewegungspfeile VX, VY sowie VZ schematisch angedeutet. Die anzuschweißende Lichtleitfaser CLW wird mit Hilfe der Halteeinrichtung HA2 auf die Anschlußlichtleitfaser AFI, die in der Haltevorrichtung HA2 ortsfest angeordnet ist, möglichst fluchtend, das heißt möglichst versatzarm in lateraler Richtung bezogen auf die Fluchtlinie ZA ausgerichtet. Nach dieser fluchtenden Ausrichtung wird die Lichtleitfaser CFI auf die feststehende Anschlußlichtleitfaser AFI in Z-Richtung zu verfahren, bis sich beide Lichtleitfasern stirnseitig kontaktieren. Dann werden diese beiden von außen frei zugänglichen Lichtleitfasern im Bereich ihrer sich kontaktierenden Stirnflächen mit Hilfe einer thermischen Wärmequelle miteinander verschweißt. Dazu sind in der Figur 18 dem Zwischenraum zwischen den beiden Haltevorrichtungen HA1, HA2 zum Beispiel zwei Schweißelektroden EL1, EL2 zugeordnet. Zwischen den beiden Schweißelektroden EL1, EL2 kann sich ein Lichtbogen LB durch Glimmentladungen queraxial, insbesondere senkrecht, zur geradlinigen, axialen Längserstreckung der beiden Lichtleitfasern AFI, CFI ausbilden. Der Verlauf des Bereichs, indem sich jeweils ein Lichtbogen zwischen den beiden Elektroden EL1, EL2 ausbreiten kann, (= Erwärmungs- bzw. Schweißbereich) ist in der Figur 18 der zeichnerischen Einfachheit halber lediglich in Form einer langgestreckten, strichpunktierten Ellipse angedeutet. Während die Elektrode EL1 der einen Längsseite der beiden einander kontaktierenden Lichtleitfasern AFI, CFI zugeordnet ist, befindet sich die Elektrode EL2 auf der der Schweißelektrode EL1 gegenüberliegenden Längsseite der Lichtleitfasern. Die fertige Spleißstelle zwischen der Anschlußlichtleitfaser AFI und der Lichtleitfaser CFI ist in der Figur 18 mit SS bezeichnet und durch einen Querstrich symbolisch angedeutet.

Nach Durchführung des Fusionsschweißvorganges werden die Haltevorrichtungen wie zum Beispiel HA1, HA2 geöffnet, so daß die beiden miteinander verschweißten Lichtleitfasern AFI, CFI aus der Schweißvorrichtung SV entnommen werden können.

In einem nächsten Montageschritt wird die Steckerhülse SH über den Längsabschnitt der freiliegenden, miteinander verschweißten Lichtleitfasern AFI, CFI, insbesondere zumindest über deren Spleißstelle SS geschoben. Diese Verschiebebewegung der Steckerhülse SH in Richtung auf den Steckerstift FE zu ist in der Figur 18 durch einen Richtungspfeil VL1 angedeutet. Die langgestreckte Steckerhülse SH wird soweit über die Spleißstelle SS in Richtung des Steckerstiftes FE geschoben, daß sie die freiliegenden Lichtleitfasern AFI, CFI entlang deren Längserstreckung abdeckt und kabelanschlußseitig etwa in demjenigen Bereich endet, wo die Zugentlastungselemente KEV aus dem Mantelaufbau AM des endseitig abgesetzten Lichtwellenleiterkabels CA austreten. Die Steckerhülse SH weist dabei eine Längserstreckung auf, die zumindest der Gesamtlänge des heraushängenden Teilstücks der Anschlußlichtleitfaser AFI und des herausgelösten Teilstücks der optischen Ader OA entspricht. Figur 19 zeigt in schematischer sowie vergrößerter Längsschnittdarstellung diesen Montagezustand des Lichtwellenleiterkabels CA. Gegebenenfalls kann die Steckerhülse SH auch solang gewählt sein,daß von ihr noch ein Teilabschnitt des Außenumfangs des Lichtwellenleiterkabels CA von außen mit umhüllt, insbesondere mitumfaßt wird.

Nach dem Überschieben der Steckerhülse SH über die fertige Spleißstelle SS wird der Steckerstift FE in die Steckerhülse SH frontseitig eingesteckt.

Figur 19 veranschaulicht in schematischer Längsschnittdarstellung das Einstecken des Steckerstifts FE in die konisch geformte Eingangsöffnung KO der Steckerhülse SH. Die Einsteckbewegung des Steckerstifts FE ist dort durch einen Richtungspfeil VR1 nach rechts auf die Steckerhülse SH zu angedeutet.

Zur Fixierung des Steckerstifts FE in der Steckerhülse SH weist der Steckerstift FE an seinem kabelanschlußseitigen Ende außen ringsum seinen Außenumfang einen dort fest angebrachten, radial abstehenden Positionsring PR auf. Mit diesem Positionsring PR wird der Steckerstift FE in die konische Eingangsöffnung KO der Steckerhülse SH hineingedrückt. Der Steckerstift FE sitzt dabei mit Preßsitz bzw. Paßsitz in der Eingangsöffnung KO der Steckerhülse SH fest.

Allgemein betrachtet werden also erst dann die verschiedenen Komponenten des Lichtwellenleitersteckers ST zusammengebaut, nachdem an einer Spleißstelle SS außerhalb der Steckerhülse SH und des Steckerstiftes FE die aus dem Steckerstift heraushängende Anschlußlichtleitfaser AFI stirnseitig mit der aus dem Lichtwellenleiterkabel CA herausgelösten Lichtleitfaser CFI verspleißt worden ist. Dadurch, daß die aus dem Lichtwellenleiterkabel herausstehende Lichtleitfaser CFI mit einer Anschlußlichtleitfaser verschweißt wird, die aus einem separaten Steckerstift heraushängt, ist die Spleißstelle zwischen diesen beiden Lichtleitfasern frei zugänglich. Dies erleichtert ganz erheblich die Durchführung des Spleiß-, insbesondere Füsionsschweißvorgangs für den Monteur. Denn Gehäuseteile des Steckers, die im Wege wären, sind dadurch vermieden.

Anschließend werden die in Richtung auf den Kabelaußenmantel AM zurückgelegten Zugentlastungselemente KEV in Richtung auf den Steckerstift FE zu vorgebogen. Die Zugentlastungselemente KEV werden auf die Außenoberfläche des kreiszylinderförmigen, kabelanschlußseitigen Endabschnitts bzw. Crimpansatzes CAN der Steckerhülse SH aufgelegt (vgl. Figur 17). Dabei werden die Zugentlastungselemente KEV vorzugsweise in Kabellängsrichtung gestreckt bzw. gespannt. Sie werden zweckmäßigerweise auf eine Länge zurückgeschnitten, die etwa dem Längsabschnitt der Steckerhülse SH zwischen deren kabelanschlußseitigen Stirnseite und der kabelanschlußseitigen Abbruchkante des Steckerkupplungsteils KU entspricht. Zweckmäßigerweise werden die Zugentlastungselemente KEV möglichst gleichmäßig um den Außenumfang der Steckerhülse SH verteilt. Auf diese Weise bilden die Zugentlastungselemente KEV eine Außenhülle, wie sie auch im Inneren des Lichtwellenleiterkabels CA ursprünglich zur Verfügung steht.

Nach dem Auflegen der Zugentlastungselemente KEV außen auf die Steckerhülse SH wird die bei der Vorpräparation des Lichtwellenleiterkabels CA aufgeschobene Crimphülse CH bis zum Kupplungsteil KU vorgeschoben, wo sie an dessen radial verlaufender Abbruchkante anschlägt. Das Aufschieben der Crimphülse CH über die Steckerhülse SH ist in der Figur 18 mit einem Richtungspfeil VL2 angedeutet. Die Crimphülse CH erstreckt sich nach ihrem Überschieben über die Steckerhülse SH von der Steckerkupplung KU über das kabelanschlußseitige Ende der Steckerhülse SH zumindest bis zum Anfang des Kabelmantels AM des Lichtwellenleiterkabels hinweg. Die Crimphülse CH umgibt vorzugsweise auch noch einen Anfangsabschnitt des voll ummantelten Lichtwellenleiterkabels CA. Die Crimphülse CH wird auf die Steckerhülse SH fest aufgepreßt. Dadurch werden die Zugentlastungselemente KEV auf der Steckerhülse SH festgehalten und somit für den Stecker ST eine Zugentlastung in Kabellängsrichtung bereitgestellt. Es wird also eine feste mechanische Ankopplung des Steckers ST dadurch erreicht, daß die Steckerhülse SH nach ihrem Überschieben über die fertige Spleißstelle SS an mindestens eine Bedeckungshülle wie zum Beispiel KEV des anzuschließenden Lichtwellenleiterkabels CA fixiert wird. Gegebenenfalls kann die Crimphülse CH auch noch auf den Außenmantel AM des Lichtwellenleiterkabels CA aufgepreßt werden. Dadurch ist durch die Crimphülse CH selbst eine weitere mechanische Anbindung der Steckerhülse SH in Kabellängsrichtung an den Außenmantel AM des Lichtwellenleiterkabels CA bereitstellbar. Bei etwaig angreifenden Zugkräften am Stecker ST, werden diese somit durch die Zugentlastungselemente KEV und/oder die Crimphülse CH in Kabellängsrichtung an diejenigen, äußeren Bedeckungshüllen des Lichtwellenleiterkabels CA weitergeleitet, die zugfest ausgebildet sind. Dadurch sind unzulässig hohe Beanspruchungen der Spleißstelle SS sowie der Anschlußlichtleitfaser und der daran angespleißten Kabellichtleitfaser CFI weitgehend vermieden. Allgemein ausgedrückt wird also durch die Crimphülse CH und/oder die Zugentlastungselemente KEV eine zugfeste Ankopplung des Steckers ST an das Lichtwellenleiterkabel CA ermöglicht. Die Spleißstelle SS sowie die miteinander verschweißten Lichtleitfasern AFI, CFI verbleiben dadurch weitgehend frei von unzulässig hohen Zugkräften, die beim Gebrauch des mit dem Stecker konfektionierten Lichtwellenleiterkabel CA etwaig auftreten können. Für die Crimphülse CH ist vorzugsweise ein metallischer Werkstoff, insbesondere Aluminium gewählt. Insbesondere dadurch, daß die Crimphplse CH sowohl einen Teilabschnitt der Steckerhülse SH als auch einen Teilabschnitt des Außenmantels AM des Lichtwellenleiterkabels CH faßt, das heißt festhält, werden bereits allein von ihr angreifende Zugkräfte an das Lichtwellenleiterkabel CA weitergeleitet. Zusätzlich oder unabhängig hiervon wird eine feste Ankopplung des Steckers ST an das Lichtwellenleiterkabel CA durch die Zugentlastungselemente KEV erreicht, die mit der Crimphülse CH auf den kabelanschlußseitigen Endabschnitt CAN der Steckerhülse SH fest aufgepreßt und dadurch dort festgehalten sind.

Zusammenfassend betrachtet wird durch die Zugentlastungselemente KEV und/oder die Crimphülse CH weitgehend sichergestellt, daß die Lichtleitfasern weitgehend spannungsarm im Inneren des Steckeranschlusses SA1 verbleiben, selbst falls am Kabel CA oder Stecker ST1 in Kabellängsrichtung gezogen wird.

Zusätzlich macht die Crimphülse CH den Steckeranschluß SA1 auch in radialer Richtung (bezogen auf die Kabelzentralachse ZA) weitgehend mechanisch querdruckstabil, so daß Einquetschungen oder Stauchungen radial nach innen weitgehend vermieden sind.

Nach dem Aufcrimpen der Crimphülse CH auf die Steckerhülse SH und gegebenenfalls den Kabelaußenmantel AM wird schließlich die Knickschutzhülle KH außen über die Crimphülse CH bis vor zum Kupplungsteil KU vorgezogen. Das Aufziehen der Knickschutzhülle bzw. - tülle KH über die Crimphülse CH ist dabei in der Figur 18 durch einen Pfeil VL3 angedeutet. Die Knickschutzhülle KH dichtet nach außen hin den Steckeranschluß SA1 ab. Sie ist vorzugsweise flexibel und biegsam, so daß Beschädigungen des Steckeranschlusses SA1, insbesondere der innen liegenden, miteinander verschweißten Lichtleitfasern durch etwaig auftretende Biege- oder Knickbeanspruchungen weitgehend vermieden sind. Für die Knickschutzhülle KH ist vorzugsweise ein Kunststoffmaterial, insbesondere ein elastischer, flexibler Kunststoff wie zum Beispiel PVC oder PU in FRNC (= flame resistant non corrosive")-Ausstattung gewählt. Die Knickschutzhülle KH ist vorzugsweise rohrförmig ausgebildet. Sie ist annäherungsweise kreiszylinderförmig geformt. Sie kann vorzugsweise innenseitig mit einem Klebstoff oder Schmelzkleber beschichtet sein, so daß sie auf der Crimphülse CH sowie dem Kabelaußenmantel AM haften bleibt. Sie erstreckt sich vorzugsweise von der kabelanschlußseitigen Abbruchkante des Kupplungsteils KU zumindest soweit, wie die Crimphülse CH in Richtung des vollummantelten Kabels CA reicht. In der Figur 17 erstreckt sich die Knickschutzhülle KH über eine größere Länge wie die Crimphülse CH. Vorzugsweise wird für die Crimphülse CH eine Längserstreckung zwischen 15 und 25 mm gewählt. Für die Knickschutzhülle KH wird zweckmäßigerweise eine Längserstreckung zwischen 28 und 50 mm gewählt.

Nach Aufbringen der Knickschutzhülle KH ist somit ein Steckeranschluß SA1 gebildet, der annäherungsweise dieselben mechanischen Eigenschaften wie das ursprüngliche Lichtwellenleiterkabel CA aufweist.

Der Innenraum der Steckerhülse SH mit den darin untergebrachten Lichtleitfasern AFI, CFI wird auf der Anschlußseite durch den Steckerstift FE sowie auf der Kabelanschlußseite durch das in die Crimphülse CH eingeführte, vollummantelte Kabel CA abgeschlossen. Dadurch ist eine vollständige Umschließung der Füsionsspleißstelle SS durch das Gehäuse der Steckerhülse SH gegeben. Eine Eindiffusion, das heißt ein Eindringen von Wasserstoff in diesen Innenraum ist dadurch weitgehend vermieden, d.h. es ist wirkungsvoll einer unerwünschten Kontamination der blanken Lichtleitfasern durch OH-Gruppendiffusion entgegengewirkt. Der Innenraum der Steckerhülse SH läßt sich durch den paßsitzartig eingesteckten Steckerstift FE auf der einen sowie insbesondere durch Festcrimpung des Kabels CH in der Crimphülse CH auf der anderen Seite weitgehend luftdicht abschließen. Werden als Zugentlastungselemente des Kabels Kevlarfäden verwendet, so wirken diese im Übergangsbereich zwischen der Abbruchkante des Kabelaußenmantels AM und dem kabelanschlußseitigen Ende der Steckerhülse SH in vorteilhafter Weise hygroskopisch. Wird die Crimphülse CH sowohl auf einen Endabschnitt der Steckerhülse SH als auch auf einen Anfangsabschnitt des Außenmantels AM des Lichtwellenleiterkabels CA fest aufgecrimpt, so wird in vorteilhafter Weise ein besonderes dichter kabelseitiger Abschluß des Steckeranschlusses SA1 erreicht. Der Innenraum in der Steckerhülse SH kann dadurch weitgehend wasserstoffarm gehalten werden. Auf diese Weise ist es nicht erforderlich, zusätzliche feuchteverhindernde Mittel wie zum Beispiel Thixotropierungsmittel in die Steckerhülse einzubringen.

Der erfindungsgemäße Steckeranschluß zeichnet sich vor allem durch eine einfache Montage aus, die nur wenige Handgriffe umfaßt, um jeweils ein Kabel dauerhaft funktionsfähig mit einem Lichtwellenleiter- Stecker zu konfektionieren.

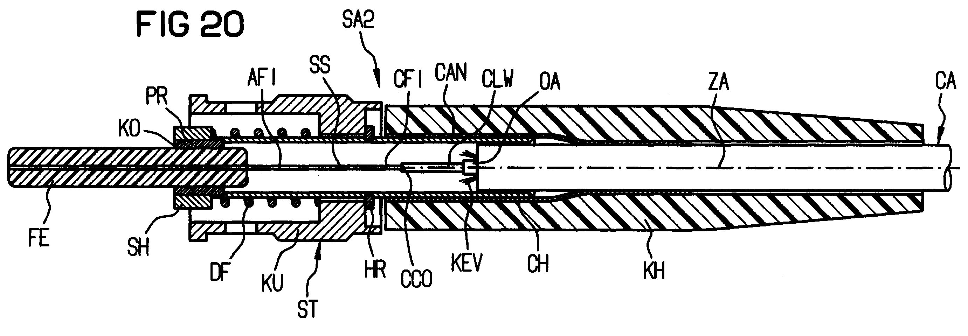

Figur 20 zeigt in schematischer sowie vergrößerter Längsschnittdarstellung einen modifizierten Steckeranschluß SA2 nach Zusammenbau dessen Komponenten. Im Unterschied zu Figur 17 ist jetzt auch das voll ummantelte Kabel CA mit seinem Kabelmantel AM in die Steckerhülse SH hineingeschoben. Dadurch umfaßt die Crimphülse CH radial von außen nach innen betrachtet gleichzeitig den Kabelaußenmantel AM sowie die Steckerhülse SH. Die Zugentlastungselemente KEV sind beim Steckeranschluß SA2 von Figur 20 unmittelbar an ihrem Austrittsort aus dem Kabelaußenmantel AM abgeschnitten. Beim Steckeranschluß SA2 von Figur 20 wird also die Längsankopplung des Steckers ST an das Kabel CA allein durch die Crimphülse CH bewirkt. Diese sitzt (radial von außen nach innen betrachtet) sowohl auf einem Endabschnitt der Steckerhülse SH als auch auf einem endseitigen Teilabschnitt des Kabelaußenmantels AM fest aufgecrimpt auf.

Ein erfindungsgemäßer Steckeranschluß läßt sich insbesondere durch folgende zeitliche Abfolge von Montageschritten herstellen:
(a) Der mit einem vorderen und hinteren Schutz (in den Figuren 17 mit 20 der Übersichtlichkeit halber nicht dargestellt) versehene Steckerstift wird von seinen Schutzelementen befreit und in ein Lichtwellenleiterschweißgerät eingelegt.
(b) Die Knickschutzhülle, die Crimphülse sowie die Steckerhülse werden über das anzuschließende Lichtwellenleiterkabelende übergeschoben.
(c) Das freie Kabelende wird entlang einer vorgebbaren Endlänge schichtenweise entmantelt.
(d) Die aus dem Lichtwellenleiterkabel freigelegte Lichtleitfaser wird ebenfalls in das Schweißgerät eingelegt.
(e) Mit Hilfe des Schweißgeräts werden die aus dem Steckerstift heraushängende Lichtleitfaser sowie die freigelegte Kabellichtleitfaser miteinander verschweißt.
(f) Nach dem Schweißvorgang werden die beiden miteinander verschweißten Lichtleitfasern aus dem Schweißgerät entnommen.
(g) Der Steckerstift wird in die freie Eingangsöffnung der Steckerhülse eingepreßt.
(h) Die Zugentlastungselemente, insbesondere die Kevlarfäden im Mantelaufbau des Lichtwellenleiterkabels werden auf die Steckerhülse gelegt, die auf dem Kabel vorrätig gehaltene Crimphülse über das Kevlar geschoben und auf die Steckerhülse aufgepreßt. (i) Schließlich wird die Knickschutzhülle über die verpreßte
Crimphülse aufgeschoben und dort fixiert.

Selbstverständlich kann der Stecker nach dem erfindungsgemäßen Prinzip auch an einen Lichtwellenleiter eines Lichtwellenleiterkabels montiert werden, das nicht nur einen einzelnen Lichtwellenleiter (wie das Kabel CA in den Figuren 17 mit 20) in seinem Inneren aufweist, sondern mehrere Lichtwellenleiter, d.h. eine Vielzahl von Lichtwellenleitern. Auch kann der Stecker an eine bloße optische Festader montiert werden, d.h. beim Lichtwellenleiterkabel CA von Figur 17 würden dabei der Kunststoffaußenmantel AM und/oder die Hülle von Zugentlastungselementen KEV entfallen. Im Rahmen der Erfindung wird also unter dem Begriff Lichtwellenleiterkabel vorzugsweise mindestens ein Lichtwellenleiter verstanden, entlang dem mindestens ein Zugentlastungselement entlanggeführt ist. Das Zugentlastungselement kann dabei auch bereits durch eine zugfeste Kunststoffhülle, die auf dem anzuschließenden Lichtwellenleiter aufsitzt, oder ein sonstiges zugfestes Bedeckungselement wie z.B. einen Reißfaden im Lichtwellenleiter- Kabelaufbau gebildet sein.

Weiterhin kann es gegebenenfalls zweckmäßig sein, die aus dem Kabel wie zum Beispiel CA herausgelöste Lichtleitfasern wie z.B. CFI mit der Anschlußlichtleitfaser wie z.B. AFI des Steckerstifts wie z.B. FE nicht fusionszuverschweißen, sondern mittels einer Hülse, Kleber oder in sonstiger Weise zu verbinden.

Gegebenenfalls kann es auch zweckmäßig sein, aus dem Steckerstift einen Anschlußlichtwellenleiter anstelle einer bereits blanken Anschlußlichtleitfaser heraushängen zu lassen. Dadurch bleibt die Lichtleitfaser des Anschlußwellenleiters durch dessen Kunststoffcoating beim Transport weitgehend geschützt. Erst zum Anspleißen wird dann ein solcher Anschlußlichtwellenleiter zweckmäßigerweise entlang einer Endlänge erst noch von seinem Kunststoffcoating befreit.

## Patentansprüche

1. Stecker (ST1) mit einem Anschlußlichtwellenleiter (ALW),
**dadurch gekennzeichnet**,
daß der Anschlußlichtwellenleiter (ALW) aus dem Stecker (ST1) soweit heraushängt, daß er außerhalb des Steckers (ST1) stirnseitig mit einem Lichtwellenleiter (CLW) eines Lichtwellenleiterkabels (CA) unter Bildung einer Spleißstelle (SS) verspleißbar ist, und daß mindestens ein Zugentlastungselement (KEV) des Kabels (CA) über die Spleißstelle (SS) hinweg zum Stecker (ST1) derart führbar und an diesen ankoppelbar ist, daß für die Spleißstelle (SS) eine Zugabfangung bereitgestellt ist.

2. Stecker (ST2) nach Anspruch 1,
**dadurch gekennzeichnet**,
daß der Anschlußlichtwellenleiter (ALW) aus dem Stecker (ST2) mit einer solchen Länge heraushängt, daß er mit seinem Stecker (ST2) in mindestens eine Aufnahmevorrichtung (HAL) eines Lichtwellenleiterspleißgerätes (SV) einlegbar ist.

3. Steckeranschluß (SA) für einen Lichtwellenleiter (CLW) eines Lichtwellenleiterkabels (CA) unter Verwendung eines Steckers (ST1), der einen Anschlußlichtwellenleiter (ALW) aufweist, insbesondere nach einem der vorhergehenden Ansprüche,
**dadurch gekennzeichnet**,
daß der Anschlußlichtwellenleiter (ALW) aus dem Stecker (ST1) soweit heraushängt, daß er außerhalb des Steckers (ST1) stirnseitig mit dem Lichtwellenleiter (CLW) des Lichtwellenleiterkabels (CA) unter Bildung einer Spleißstelle (SS) verspleißbar ist, und daß mindestens ein Zugentlastungselement (KEV) des Lichtwellenleiterkabels (CA) über die Spleißstelle (SS) hinweg zum Stecker (ST1) derart führbar und an diesen ankoppelbar ist, daß für die Spleißstelle (SS) eine Zugabfangung bereitgestellt ist.

4. Steckeranschluß nach Anspruch 3,
**dadurch gekennzeichnet**,
daß der Stecker (ST1) mit dem Anschlußlichtwellenleiter (ALW) werkseitig vorkonfektioniert ist.

5. Steckeranschluß nach einem der Ansprüche 3 oder 4,
**dadurch gekennzeichnet**,
daß der Anschlußlichtwellenleiter (ALW) aus dem Stecker (ST1) mit einem vorgebbaren Längsabschnitt heraushängt sowie der anzuschließende Lichtwellenleiter (CLW) endseitig aus dem Lichtwellenleiterkabel (CA) jeweils mit einem vorgebbaren Längsabschnitt herausgelöst ist, daß der heraushängende Anschlußlichtwellenleiter (ALW) des Steckers (ST1) und der anzuspleißende Lichtwellenleiter (ALW) des Lichtwellenleiterkabels (CA) jeweils entlang einem vorgebbaren Endabschnitt von ihrem jeweiligen Beschichtungsmaterial befreit sind, so daß dort ihre Lichtleitfasern (AFI, CFI) frei liegen, daß diese beiden Lichtleitfasern (AFI, CFI) außerhalb des Steckers (ST1) unter Bildung einer Spleißstelle (SS) stirnseitig miteinander verbunden sind und daß mindestens ein Zugentlastungselement (KEV) des Lichtwellenleiterkabels (CA) über die Spleißstelle (SS) hinweg zum Stecker (ST1) derart geführt und an diesen angekoppelt ist, daß für den Stecker (ST1) in Längsrichtung eine Zugabfangung unter Unterbrückung der Spleißstelle (SS) bereitgestellt ist.

6. Steckeranschluß nach einem der Ansprüche 3 mit 5,
**dadurch gekennzeichnet**,
daß das Lichtwellenleiterkabel (CA) durch einen einzelnen Lichtwellenleiter (CLW) mit mindestens einer ihn umgebenden Außenhülle (AH) gebildet ist, auf der mindestens eine Hülle von Zugentlastungselementen (KEV) sowie darüber mindestens ein Kunststoff-Außenmantel (AM) aufgebracht ist.

7. Steckeranschluß nach einem der Ansprüche 3 mit 6,
**dadurch gekennzeichnet**,
daß im Bereich der Spleißstelle (SS) außen rings um die Lichtleitfasern (AFI, CFI) eine Beschichtung (RCM) nachträglich aufgebracht ist, die weitgehend dem ursprünglichen Coatingmaterial der Lichtwellenleiter (ALW, CLW) entspricht.

8. Steckeranschluß nach einem der Anspruch 7,
**dadurch gekennzeichnet**,
daß die Zugentlastungselemente (KEV) des Lichtwellenleiterkabels (CA) außen über die mit Wiederbeschichtungsmaterial (RCM) versehenen Lichtleitfasern (AFI, CFI) in mindestens einer Lage aufgebracht sind.

9. Steckeranschluß nach Anspruch 8,
**dadurch gekennzeichnet**,
daß außen über die Lage mit Zugentlastungselementen (KEV) mindestens eine Crimphülse (CH) und/oder Knickschutzhülle (KH) aufgebracht ist.

10. Steckeranschluß nach einem der Ansprüche 3 mit 9,
**dadurch gekennzeichnet**,
daß die Spleißstelle (SS) vom Schaftende (SA) des Steckers (ST1) mindestens 5 mm, höchstes 15 mm, insbesondere zwischen 5 und 12 mm, entfernt ist.

11. Steckeranschluß nach einem der Ansprüche 3 mit 10,
**dadurch gekennzeichnet**,
daß die Zugentlastungselemente (KEV) des Lichtwellenleiterkabels (CA) durch Verstärkungsfasern, insbesondere Kevlarfäden oder Aramidgarne, gebildet sind.

12. Steckeranschluß nach einem der Ansprüche 3 mit 11,
**dadurch gekennzeichnet**,
daß die Lichtleitfasern (CFI, AFI) an der Spleißstelle (SS) miteinander thermisch verschweißt sind.

13. Steckeranschluß (SA2) für einen Lichtwellenleiter (CLW) eines Lichtwellenleiterkabels (CA) unter Verwendung eines Steckers (ST2), der einen Anschlußlichtwellenleiter (ALW) aufweist, wobei der Anschlußlichtwellenleiter (ALW) aus dem Stecker (ST2) so weit heraushängt, daß er außerhalb des Steckers (ST2) stirnseitig mit dem Lichtwellenleiter (CLW) des Lichtwellenleiterkabels (CA) unter Bildung einer Spleißstelle (SS) verspleißbar ist, und wobei mindestens ein Zugentlastungselement (KEV) des Lichtwellenleiterkabels (CA) über die Spleißstelle (SS) hinweg zum Stecker (ST2) derart führbar und an diesen ankoppelbar ist, daß für die Spleißstelle (SS) eine Zugabfangung bereitgestellt ist, insbesondere nach einem der vorhergehenden Ansprüche, wobei der Anschlußlichtwellenleiter (ALW) aus dem Stecker (ST2) mit einer solchen Länge heraushängt, daß er mit seinem Stecker (ST2) in mindestens eine Aufnahmevorrichtung (HAL) eines Lichtwellenleiterspleißgerätes (SV) einlegbar ist.

14. Steckeranschluß nach Anspruch 13,
**dadurch gekennzeichnet**,
daß im Bereich der Spleißstelle (SS) als erste Bedeckungslage eine Spleißschutzhülle (SU) aufgebracht ist.

15. Steckeranschluß nach einem der Ansprüche 13 oder 14,
**dadurch gekennzeichnet**,
daß die Zugentlastungselemente (KEV) des Lichtwellenleiterkabels (CA) am Steckerschaft (SAN2) des Steckers (ST2) mit einer Crimphülse (CH) aufgepreßt sind.

16. Steckeranschluß nach einem der Ansprüche 13 mit 15,
**dadurch gekennzeichnet**,
daß außen über die Lage von Zugentlastungselementen (KEV) mindestens eine Knickschutzhülle (KH) aufgebracht ist.

17. Steckeranschluß nach Anspruch 16,
**dadurch gekennzeichnet**,
daß sich die Knickschutzhülle (KH) zumindest vom Steckerkopf (SK2) bis zur Abbruchkante des Außenmantels (AM) des Lichtwellenleiterkabels (CA) erstreckt.

18. Steckeranschluß nach einem der Ansprüche 13 mit 17
**dadurch gekennzeichnet**,
daß die heraushängende Länge des Anschlußlichtwellenleiter (ALW) und/oder des auszuschließenden Lichtwellenleiters (CLW) des Lichtwellenleiterkabels (CA) so groß gewählt wird, daß deren Spleißstelle (SS) außerhalb der Knickgefährdungszone des Steckers (ST2)liegt.

19. Steckeranschluß (SA1) für mindestenes einen Lichtwellenleiter (CLW) eines Lichtwellenleiterkabels (CA) unter Verwendung eines Steckers (ST), insbesondere nach einem der vorhergehenden Ansprüche,
**dadurch gekennzeichnet**,
daß eine Steckerhülse (SH) vorgesehen ist, die sich soweit auf das Lichtwellenleiterkabel (CA) aufschieben läßt,
daß ein vorgebbarer Endabschnitt des Lichtwellenleiterkabels (CA) stirnseitig aus der Steckerhülse (SH) heraussteht,
daß ein separater Steckerstift (FE) vorgesehen ist, in dem mindestens eine Anschlußlichtleitfaser (AFI) vorbereitet gehalten ist und aus diesem mit einem vorgebbaren Längsabschnitt heraushängt,
und daß der Steckerstift (FE) in die Steckerhülse (SH) unter Bildung eines optischen Steckers (ST) derart einsteckbar ist,
daß die Steckerhülse (SH) die Anschlußlichtleitfaser (AFI) und mindestens eine aus dem Lichtwellenleiterkabel (CA) herausgelöste Lichtleitfaser (CFI) nach deren Verspleißung von außen umgibt.

20. Steckeranschluß nach Anspruch 19,
**dadurch gekennzeichnet**,
daß sich die Steckerhülse (SH) bei eingestecktem Steckerstift (FE) etwa bis zur Abbruchkante des Außenmantels (AM) des Lichtwellenleiterkabels (CA) erstreckt.

21. Steckeranschluß nach einem der Ansprüche 19 oder 20,
**dadurch gekennzeichnet**,
daß die Steckerhülse (SH) bei eingestecktem Steckerstift (FE) etwa dort endet, wo Zugentlastungselemente (KEV) aus dem Lichtwellenleiterkabel (CA) austreten.

22. Steckeranschluß nach einem der Ansprüche 19 mit 21,
**dadurch gekennzeichnet**,
daß auf der Steckerhülse (SH) stiftanschlußseitig eine Kupplung (KU) zum Anschluß des Steckers (ST) an eine Steckerbuchse angebracht ist.

23. Steckeranschluß nach einem der Ansprüche 19 mit 22,
**dadurch gekennzeichnet**,
daß die Steckerhülse (SH) bei eingestecktem Steckerstift (FE) eine solche Längserstreckung aufweist, daß zumindest die freiliegende Anschlußlichtleitfaser (AFI) und die mit ihr verspleißte Lichtleitfaser (CFI) des Lichtwellenleiterkabels (CA) von außen umhüllbar sind.

24. Steckeranschluß nach einem der Ansprüche 19 mit 23,
**dadurch gekennzeichnet**,
daß mindestens eine Bedeckungshülle des Lichtwellenleiterkabels (CA) an die Steckerhülse (SH) angekoppelt ist.

25. Steckeranschluß nach einem der Ansprüche 19 mit 24,
**dadurch gekennzeichnet**,
daß kabelanschlußseitig eine Crimphülse (CH) auf der Steckerhülse (SH) aufsitzt und dort Zugentlastungselemente (KEV) des Lichtwellenleiterkabels (CA) festhält.

26. Steckeranschluß nach einem der Ansprüche 19 mit 25,
**dadurch gekennzeichnet**,
daß eine Crimphülse (CH) sowohl auf der Steckerhülse (SH) als auch auf dem Außenmantel (AM) des Lichtwellenleiterkabels (CA) fest aufsitzt.

27. Steckeranschluß nach einem der Ansprüche 19 mit 26,
**dadurch gekennzeichnet**,
daß Zugentlastungselemente (KEV) des Lichtwellenleiterkabels (CA) auf der Steckerhülse (SH) angeordnet sind, und daß eine Crimphülse (CH) über der mit Zugentlastungselementen (KEV) versehenen Steckerhülse (SH) aufgepreßt ist, wodurch die Zugentlastungselemente (KEV) an der Steckerhülse (SH) fixiert sind.

28. Steckeranschluß nach einem der Ansprüche 19 mit 27,
**dadurch gekennzeichnet**,
daß der Steckerstift (FE) auf derjenigen Stirnseite der Steckerhülse (SH) einsteckbar ist, die dem anzuschließenden Lichtwellenleiterkabel (CA) gegenüberliegt.

29. Verfahren zur Herstellung eines Steckeranschlusses für einen Lichtwellenleiter (CLW) eines Lichtwellenleiterkabels (CA) unter Verwendung eines Steckers (ST1), der einen Anschlußlichtwellenleiter (ALW) aufweist, insbesondere nach einem der vorhergehenden Ansprüche,
**dadurch gekennzeichnet**,
daß der Lichtwellenleiter (CLW) endseitig aus dem Lichtwellenleiterkabel (CA) mit einem vorgebbaren Längsabschnitt herausgelöst wird, daß dieser Lichtwellenleiter (CLW) sowie der kabelanschlußseitig aus dem Stecker (ST1) heraushängende Anschlußlichtwellenleiter (ALW) jeweils entlang einem vorgebbaren Endabschnitt entcoatet werden, so daß dort ihre Lichtleitfasern (AFI, CFI) frei liegen, daß diese beiden Lichtleitfasern (AFI, CFI) außerhalb des Steckers (ST1) unter Bildung einer Spleißstelle (SS) stirnseitig miteinander verspleißt werden, und daß mindestens ein Zugentlastungselement (KEV) des Lichtwellenleiterkabels (CA) über die Spleißstelle (SS) hinweg zum Stecker (ST1) derart geführt und an diesen angekoppelt wird, daß für den Stecker (ST1) in Längsrichtung eine Zugabfangung unter Unterbrückung der Spleißstelle (SS) bereitgestellt wird.

30. Verfahren nach Anspruch 29,
**dadurch gekennzeichnet**,
daß nach Fertigstellung der Spleißstelle (SS) außen rings um die entcoateten Lichtleitfasern (AFI, CFI) ein Wiederbeschichtungsmaterial (RCM) aufgebracht wird, das weitgehend dem ursprünglichen Coatingmaterial der Lichtwellenleiter (ALW, CLW) entspricht.

31. Verfahren nach Anspruch 30,
**dadurch gekennzeichnet**,
daß das Wiederbeschichtungsmaterial (RCM) in Kabellängsrichtung betrachtet im wesentlichen vom Schaftende des Steckers (ST1) bis zum Außenmantel (AM) des Lichtwellenleiterkabels (CA) aufgebracht wird.

32. Verfahren nach einem der Ansprüche 30 oder 31,
**dadurch gekennzeichnet**,
daß mit dem Wiederbeschichtungsmaterial (RCM) die Lücke zwischen dem Schaftende des Steckers (ST1) und dem Außenmantel (AM) des Lichtwellenleiterkabels (CA) derart ausgefüllt wird, daß sich für die miteinander verspleißten Lichtleitfasern (AFI, CFI) eine Ersatzhülle ergibt, deren Außendurchmesser annäherungsweise dem Außendurchmesser des anzuschließenden Lichtwellenleiterkabels (CA) entspricht.

33. Verfahren nach einem der Ansprüche 30 mit 32,
**dadurch gekennzeichnet**,
daß nach der Wiederbeschichtung der Lichtleitfasern das Wiederbeschichtungsmaterial vorzugsweise ausgehärtet wird.

34. Verfahren nach einem der Ansprüche 29 mit 33,
**dadurch gekennzeichnet,**
daß nach dem Wiederbeschichten der Lichtleitfasern (AFI, CFI) die Zugentlastungselemente (KEV) des Lichtwellenleiterkabels (CA) über die Spleißstelle (SS) hinweg zum Stecker (ST1) geführt und auf dessen Schaftende (SAN) aufgelegt werden.

35. Verfahren nach einem der Ansprüche 29 mit 34,
**dadurch gekennzeichnet**,
daß die Zugentlastungselemente (KEV) insbesondere mit Hilfe einer Crimphülse (CH) auf dem Schaftende (SAN) des Steckers (ST1) fixiert werden.

36. Verfahren nach Anspruch 35,
**dadurch gekennzeichnet**,
daß die Crimphülse (CH) vorzugsweise vor dem Anschließen des Lichtwellenleiterkabels (CA) auf dessen Außenmantel (AM) vorab aufgeschoben wird.

37. Verfahren nach einem der Ansprüche 29 mit 36,
**dadurch gekennzeichnet**,
daß vor dem Anschließen des Lichtwellenleiterkabels (CA) auf dessen Außenmantel (AM) eine Knickschutzhülle (KH) vorab aufgeschoben wird.

38. Verfahren nach einem der Ansprüche 36 und 37,
**dadurch gekennzeichnet**,
daß die Knickschutzhülle (KH) nach dem Aufbringen der Crimphülse (CH) über die Crimphülse bis zum Stecker (ST1) übergeschoben wird.

39. Verfahren nach einem der Ansprüche 29 mit 38,
**dadurch gekennzeichnet**,
daß die Zugentlastungselemente (KEV) aus dem Lichtwellenleiterkabel (CA) mit einer Länge herausgelöst werden, die zumindest dem Längsabstand (ZR) zwischen dem Außenmantel (AM) des Lichtwellenleiterkabels (CA) und dem Schaft (SAN) des Steckers (ST1) nach Verspleißen deren beider Lichtwellenleiter (ALW, CLW) entspricht.

40. Verfahren nach einem der Ansprüche 29 mit 39,
**dadurch gekennzeichnet**,
daß der Stecker (ST1) bereits werksseitig mit dem Anschlußlichtwellenleiter (ALW) vorkonfektioniert wird.

41. Verfahren nach einem der Ansprüche 29 mit 40,
**dadurch gekennzeichnet**,
daß der Anschlußlichtwellenleiter (ALW) des Steckers (ST2) derart vorpräpariert wird, daß er aus dem Stecker mit einer so großen Endlänge heraushängt, daß er zusammen mit dem Stecker in mindestens eine Aufnahmevorrichtung (HAL) eines Lichtwellenleiterspleißgerätes (SV) eingelegt werden kann.

42. Verfahren nach einem der Ansprüche 29 mit 41,
**dadurch gekennzeichnet**,
daß der Lichtwellenleiter (CLW) aus dem Lichtwellenleiterkabel (CA) auf einer solch großen Länge (CL1) herausgelöst wird, daß dieser freigelegte Lichtwellenleiterabschnitt (CL1) in mindestens eine Aufnahmevorrichtung (HCL) eines Lichtwellenleiterspleißgerätes (SV) eingelegt werden kann.

43. Verfahren nach einem der Ansprüche 29 mit 42,
**dadurch gekennzeichnet**,
daß über die freigelegten Lichtleitfasern (AFI, CFI) nach ihrer stirnseitigen Verschweißung als erste innere Bedeckungshülle eine Spleißschutzhülle (SU) übergeschoben wird.

44. Verfahren nach Anspruch 43,
**dadurch gekennzeichnet**,
daß als Spleischutzhülle ein Schrumpfschlauch (SU) verwendet wird, der über die Spleißstelle (SS) und die freiliegenden Längsabschnitte der miteinander verschweißten Lichtleitfasern (AFI, CFI) aufgeschrumpft wird.

45. Verfahren nach einem der Ansprüche 43 oder 44 ,
**dadurch gekennzeichnet**,
daß die Spleißschutzhülle (SU) auf den aus dem Stecker (ST2) heraushängenden Endabschnitt (CL1) des Anschlußlichtwellenleiters (ALW) vor dessen endseitiger Präparation vorab aufgeschoben und dort vorrätig gehalten wird.

46. Verfahren nach einem der Ansprüche 29 mit 45,
**dadurch gekennzeichnet**,
daß eine Crimphülse (CH) über den aus dem Stecker (ST2) heraushängenden Anschlußlichtwellenleiter (ALW) vor dessen endseitiger Präparation vorab übergeschoben und dort vorrätig gehalten wird.

47. Verfahren nach Anspruch 46,
**dadurch gekennzeichnet**,
daß mit der Crimphülse (CH) mindestens ein Zugentlastungselement (KEV) des Lichtwellenleiterkabels (CA) auf dem Schaftende (SAN2) des Steckers (ST2) festgehalten wird.

48. Verfahren nach einem der Ansprüche 29 mit 47,
**dadurch gekennzeichnet**,
daß das Lichtwellenleiterkabel (CA) sowie der daran endseitig angebrachte Stecker (ST2) zum Umhüllen der miteinander verschweißten Lichtleitfasern (AFI, CFI) in eine Montagehilfsvorrichtung (MH) eingelegt werden, in der der Stecker (ST2) sowie das Lichtwellenleiterkabel (CA) derart festgehalten werden, daß sich der herausgelöste Lichtwellenleiter (CLW) des Lichtwellenleiterkabels (CA) sowie der angespleißte Anschlußlichtwellenleiter (ALW) des Steckers (ST2) im wesentlichen geradlinig erstrecken.

49. Verfahren nach einem der Ansprüche 29 mit 48,
**dadurch gekennzeichnet**,
daß die miteinander verschweißten Lichtleitfasern (AFI, CFI) eine größere Gesamtlänge im Bereich zwischen dem Stecker (ST2) und der Abbruchkante des Außenmantels (AM) des Lichtwellenleiterkabels (CA) als für die dort hinüberverlegten Zugentlastungselemente (KEV) gewählt wird.

50. Verfahren zum Anbringen eines Steckers (ST) an ein Lichtwellenleiterkabel (CA), insbesondere nach einem der vorhergehenden Ansporüche,
**dadurch gekennzeichnet**,
daß auf das Lichtwellenleiterkabel (CA) eine Steckerhülse (SH) soweit aufgeschoben wird, daß ein vorgebbarer Endabschnitt des Lichtwellenleiterkabels (CA) stirnseitig aus der Steckerhülse (SH) heraussteht,
daß aus diesem hervorstehenden Endabschnitt des Lichtwellenleiterkabels (CA) mindestens eine Lichtleitfaser (CFI) auf einer vorgebbaren Länge freigelegt wird,
daß mindestens eine Anschlußlichtleitfaser (AFI) in einem separaten Steckerstift (FE) vorbereitet gehalten wird und aus diesem mit einem vorgebbaren Längsabschnitt (ALA) heraushängt, daß die aus der Steckerhülse (FE) herausstehende Lichtleitfaser (CFI) des Lichtwellenleiterkabels (CA) und die aus dem Steckerstift (FE) heraushängende, zugeordnete Anschlußlichtleitfaser (AFI) stirnseitig aufeinander ausgerichtet und an einer frei zugänglichen Spleißstelle (SS) außerhalb der Steckerhülse (SH) und des Steckerstiftes (FE) miteinander verspleißt werden,
daß nach Herstellung der Spleißstelle (SS) die Steckerhülse (SH) über die miteinander verspleißten Lichtleitfasern (AFI, CFI) geschoben wird,
und daß dann erst der Steckerstift (FE) in die Steckerhülse (SH) unter Bildung eines Steckers (ST) eingesteckt wird.

51. Verfahren nach Anspruch 50,
**dadurch gekennzeichnet**,
daß als Steckerstift (FE) eine Ferrule verwendet wird.

52. Verfahren nach einem der Ansprüche 50 oder 51,
**dadurch gekennzeichnet**,
daß die Steckerhülse (SH) nach ihrem Überschieben über die fertige Spleißstelle (SS) an mindestens einer Bedeckungshülle (KEV, AM) des anzuschließenden Lichtwellenleiterkabels (CA) fixiert wird.

53. Verfahren nach einem der Ansprüche 50 mit 52,
**dadurch gekennzeichnet**,
daß die Steckerhülse (SH) soweit in Richtung des Steckerstiftes (FE) über die Spleißstelle (SS) geschoben wird, daß von der Steckerhülse (SH) kabelanschlußseitig ein Teilabschnitt des Außenmantels (AM) des Lichtwellenleiterkabels umhüllt wird.

54. Verfahren nach einem der Ansprüche 50 mit 53,
**dadurch gekennzeichnet**,
daß die Steckerhülse (SH) soweit über die Spleißstelle (SS) in Richtung des Steckerstiftes (FE) geschoben wird, daß die Steckerhülse (SH) kabelanschlußseitig in demjenigen Bereich endet, wo Zugentlastungselemente (KEV) aus dem Mantelaufbau (AM) des entlang einem Endabschnitt abgesetzten Lichtwellenleiterkabels (CA) austreten.

55. Verfahren nach einem der Ansprüche 50 mit 54,
**dadurch gekennzeichnet**,
daß außen über und/oder auf der Steckerhülse (SH) Zugentlastungselemente (KEV) des Lichtwellenleiterkabels (CA) angeordnet werden.

56. Verfahren nach Anspruch 55,
**dadurch gekennzeichnet**,
daß außen über der mit den Zugentlastungselementen (KEV) versehenen Steckerhülse (SH) eine Crimphülse (CH) aufgeschoben, und diese Crimphülse (CH) auf die Steckerhülse (SH) gepreßt wird, wodurch die Zugentlastungselemente auf ihr fixiert werden.

57. Verfahren nach Anspruch 56,
**dadurch gekennzeichnet**,
daß die Crimphülse (CH) vor dem Anschließen des Lichtwellenleiterkabels (CA) an den Stecker (ST) auf den Außenmantel (AM) des Lichtwellenleiterkabels vorab aufgeschoben wird.

58. Verfahren nach einem der Ansprüche 50 mit 57,
**dadurch gekennzeichnet**,
daß vor dem Anschließen des Lichtwellenleiterkabels (CA) an den Stecker (ST) auf den Außenmantel (AM) des Lichtwellenleiterkabels (CA) eine Knickschutzhülle (KH) vorab aufgeschoben wird.

59. Verfahren nach Anspruch 59,
**dadurch gekennzeichnet**,
daß die Knickschutzhülle (KH) bis zum Steckerkopf (KU) des Steckers (ST) übergeschoben wird.

60. Verfahren nach einem der Ansprüche 50 mit 59,
**dadurch gekennzeichnet,**
daß die Lichtleitfaser (CFI) des Lichtwellenleiterkabels (CA) mit der Anschlußlichtleitfaser (AFI) des Steckerstiftes (FE) fusionsverschweißt wird.

61. Verfahren nach einem der Ansprüche 50 mit 60,
**dadurch gekennzeichnet**,
daß der Steckerstift (FE) auf derjenigen Stirnseite der Steckerhülse (SH) eingesteckt wird, die dem anzuschließenden Lichtwellenleiterkabel (CA) gegenüberliegt.
